(19) **Europäisches Patentamt / European Patent Office / Office européen des brevets**

(11) **EP 1 484 585 B1**

(12) **EUROPEAN PATENT SPECIFICATION**

(45) Date of publication and mention
of the grant of the patent:
**15.09.2010 Bulletin 2010/37**

(51) Int Cl.:
*G01F 1/84* *(2006.01)*    *G01F 1/74* *(2006.01)*

(21) Application number: **04021672.3**

(22) Date of filing: **26.11.1998**

(54) **Coriolis flowmeter with digital control system**

Coriolisdurchflussmesser mit digitalem Regelsystem

Débitmètre à effet Coriolis avec système de contrôle numérique

(84) Designated Contracting States:
**DE FR GB**

(30) Priority: **26.11.1997 US 66554 P**
**08.07.1998 US 111739**

(43) Date of publication of application:
**08.12.2004 Bulletin 2004/50**

(62) Document number(s) of the earlier application(s) in
accordance with Art. 76 EPC:
**98309694.2 / 0 919 793**

(73) Proprietor: **Invensys Systems, Inc.**
**Foxboro, MA 02035 (US)**

(72) Inventors:
• **Henry, Manus P**
**Oxford**
**OX3 0JL (GB)**

• **Vignos, James H**
**Massachusetts 02194 (US)**
• **Clarke, David W**
**Oxford**
**OX3 8SX (GB)**

(74) Representative: **Butler, Michael John et al**
**Dehns**
**St Bride's House**
**10 Salisbury Square**
**London**
**EC4Y 8JD (GB)**

(56) References cited:
**EP-A- 0 696 726    WO-A-98/20306**
**US-A- 4 823 614    US-A- 4 852 409**
**US-A- 4 934 196    US-A- 5 469 748**

Note: Within nine months of the publication of the mention of the grant of the European patent in the European Patent Bulletin, any person may give notice to the European Patent Office of opposition to that patent, in accordance with the Implementing Regulations. Notice of opposition shall not be deemed to have been filed until the opposition fee has been paid. (Art. 99(1) European Patent Convention).

EP 1 484 585 B1

**Description**

Flowmeters provide information about materials being transferred through a conduit. For example, mass flowmeters provide a direct indication of the mass of material being transferred through a conduit. Similarly, density flowmeters, or densitometers, provide an indication of the density of material flowing through a conduit. Mass flowmeters also may provide an indication of the density of the material.

Coriolis-type mass flowmeters are based on the well-known Coriolis effect, in which material flowing through a rotating conduit becomes a radially travelling mass that is affected by a Coriolis force and therefore experiences an acceleration. Many Coriolis-type mass flowmeters induce a Coriolis force by sinusoidally oscillating a conduit about a pivot axis orthogonal to the length of the conduit. In such mass flowmeters, the Coriolis reaction force experienced by the travelling fluid mass is transferred to the conduit itself and is manifested as a deflection or offset of the conduit in the direction of the Coriolis force vector in the plane of rotation.

Energy is supplied to the conduit by a driving mechanism that applies a periodic force to oscillate the conduit. One type of driving mechanism is an electromechanical driver that imparts a force proportional to an applied voltage. In an oscillating flowmeter, the applied voltage is periodic, and is generally sinusoidal. The period of the input voltage is chosen so that the motion of the conduit matches a resonant mode of vibration of the conduit. This reduces the energy needed to sustain oscillation. An oscillating flowmeter may use a feedback loop in which a sensor signal that carries instantaneous frequency and phase information related to oscillation of the conduit is amplified and fed back to the conduit using the electromechanical driver.

US-A-4934196 discloses a digital flowmeter comprising: a vibratable conduit; a driver connected to the conduit and operable to impart motion to the conduit; a sensor connected to the conduit and operable to sense the motion of the conduit; and a control and measurement system connected between the driver and the sensor, wherein the control and measurement system is operable to: receive a sensor signal from the sensor, generate a drive signal based on the sensor signal, supply the drive signal to the driver, and generate a measurement of a property of material flowing through the conduit based on the signal from the sensor.

The present invention is **characterised in that** the control and measurement system generates the drive signal using digital signal processing, and wherein the control and measurement system uses digital processing to adjust a phase of the drive signal to compensate for a time delay associated with the sensor and components connected between the sensor and the driver.

Thus, in one embodiment, the invention provides a digital flowmeter, such as a digital mass flowmeter, that uses a control and measurement system to control oscillation of the conduit and to generate mass flow and density measurements. A sensor connected to the conduit supplies signals to the control and measurement system. In one embodiment the control and measurement system processes the signals to produce a measurement of mass flow and uses digital signal processing to generate a signal for driving the conduit. The drive signal then is converted to a force that induces oscillation of the conduit.

A digital mass flowmeter provides a number of advantages over traditional, analog approaches. From a control perspective, use of digital processing techniques permits the application of precise, sophisticated control algorithms that, relative to traditional analog approaches, provide greater responsiveness, accuracy and adaptability.

A digital control system also permits the use of negative gain in controlling oscillation of the conduit. Thus, drive signals that are 180° out of phase with conduit oscillation may be used to reduce the amplitude of oscillation. The practical implications of this are important, particularly in high and variable damping situations where a sudden drop in damping can cause an undesirable increase in the amplitude of oscillation. One example of a variable damping situation is when aeration occurs in the material flowing through the conduit.

The ability to provide negative feedback also is important when the amplitude of oscillation is controlled to a fixed setpoint that can be changed under user control. With negative feedback, reductions in the oscillation setpoint can be implemented as quickly as increases in the setpoint. By contrast, an analog meter that relies solely on positive feedback must set the gain to zero and wait for system damping to reduce the amplitude to the reduced setpoint.

From a measurement perspective, the digital mass flowmeter can provide high information bandwidth. For example, a digital measurement system may use analog-to-digital converters operating at eighteen bits of precision and sampling rates of 55 kHz. The digital measurement system also may use sophisticated algorithms to filter and process the data, and may do so starting with the raw data from the sensors and continuing to the final measurement data. This permits extremely high precision, such as, for example, phase precision to five nanoseconds per cycle. Digital processing starting with the raw sensor data also allows for extensions to existing measurement techniques to improve performance in non-ideal situations, such as by detecting and compensating for time-varying amplitude, frequency, and zero offset.

The control and measurement improvements interact to provide further improvements. For example, control of oscillation amplitude is dependent upon the quality of amplitude measurement. Under normal conditions, the digital mass flowmeter may maintain oscillation to within twenty parts per million of the desired setpoint. Similarly, improved control has a positive benefit on measurement. Increasing the stability of oscillation will improve measurement quality even for meters that do not require a fixed amplitude of oscillation (i.e., a fixed setpoint). For example, with improved stability, assumptions used for the measurement calculations are likely to be valid over a wider range of conditions.

The digital mass flowmeter also permits the integration of entirely new functionality (e.g., diagnostics) with the measurement and control processes. For example, algorithms for detecting the presence of process aeration can be implemented with compensatory action occurring for both measurement and control if aeration is detected.

Other advantages of the digital mass flowmeter result from the limited amount of hardware employed, which makes the meter simple to construct, debug, and repair in production and in the field. Quick repairs in the field for improved performance and to compensate for wear of the mechanical components (e.g, loops, flanges, sensors and drivers) are possible because the meter uses standardized hardware components that may be replaced with little difficulty, and because software modifications may be made with relative ease. In addition, integration of diagnostics, measurement, and control is simplified by the simplicity of the hardware and the level of functionality implemented in software. New functionality, such as low power components or components with improved performance, can be integrated without a major redesign of the overall control system.

Embodiments of the invention may include one or more of the following features. The meter may include a second sensor connected to the conduit and operable to sense the motion of the conduit. In this case, the control and measurement system is connected to the second sensor and receives a second sensor signal from the second sensor, generates the drive signal based on the first and second sensor signals, and generates the measurement of the property of material flowing through the conduit based on the first and second sensor signals. The control and measurement system may digitally combine the first and second sensor signals and generate the drive signal based on the combination of the sensor signals.

The control and measurement system may generate different drive signals for the two drivers. The drive signals may have, for example, different frequencies or amplitudes.

The digital flowmeter also may include circuitry for measuring current supplied to the driver. The circuitry may include a resistor in series with the driver and an analog-to-digital converter in parallel with the resistor and configured to measure a voltage across the resistor, to convert the measured voltage to a digital value, and to supply the digital value to the control and measurement system.

The digital flowmeter also may include a first pressure sensor connected to measure a first pressure at an inlet to the conduit and a second pressure sensor connected to measure a second pressure at an outlet of the conduit. Analog-to-digital converters may be connected and configured to convert signals produced by the first pressure sensor and the second pressure sensor to digital values and to supply the digital values to the control and measurement system. Temperature sensors may be connected to measure temperatures at the inlet and outlet of the conduit.

The control and measurement system may generate the measurement of the property by estimating a frequency of the first sensor signal, calculating a phase difference using the first sensor signal, and generating the measurement using the calculated phase difference. The control and measurement system may compensate for amplitude differences in the sensor signals by adjusting the amplitude of one of the sensor signals. For example, the control and measurement system may multiply the amplitude of one of the sensor signals by a ratio of the amplitudes of the sensor signals.

When the sensor signal is generally periodic, the control and measurement system may process the sensor signal in sets. Each set may include data for a complete cycle of the periodic sensor signal, and consecutive sets may include data for overlapping cycles of the periodic sensor signal. The control and measurement system may estimate an end point of a cycle using a frequency of a previous cycle.

The control and measurement system may analyze data for a cycle to determine whether the cycle merits further processing. For example, the system may determine that a cycle does not merit further processing when data for the cycle does not conform to expected behavior for the data, where the expected behavior may be based on one or more parameters of a previous cycle. In one implementation, the system determines that a cycle does not merit further processing when a frequency for the cycle differs from a frequency for the previous cycle by more than a threshold amount. The system may determine whether the frequencies differ by comparing values at certain points in the cycle to values that would occur if the frequency for the cycle equalled the frequency for the previous cycle.

The control and measurement system may determine a frequency of the sensor signal by detecting zero-crossings of the sensor signal and counting samples between zero crossings. The system also may determine a frequency of the sensor signal using an iterative curve fitting technique.

The control and measurement system may determine an amplitude of the sensor signal using Fourier analysis, and may use the determined amplitude in generating the drive signal.

The control and measurement system may determine a phase offset for each sensor signal and may determine the phase difference by comparing the phase offsets. The system also may determine the phase difference using Fourier analysis. The control and measurement system may determine a frequency, amplitude and phase offset for each sensor signal, and may scale the phase offsets to an average of the frequencies of the sensor signals. The control and measurement system may calculate the phase difference using multiple approaches and may select a result of one of the approaches as the calculated phase difference.

The control and measurement system may combine the sensor signals to produce a combined signal and may generate the drive signal based on the combined signal. For example, the control and measurement system may sum the sensor signals to produce the combined signal and may generate the drive signal by applying a gain to the combined signal.

In general, the control and measurement system may initiate motion of the conduit by using a first mode of signal generation to generate the drive signal, and may sustain motion of the conduit using a second mode of signal generation to generate the drive signal. The first mode of signal generation may be synthesis of a periodic signal having a desired property, such as a desired initial frequency of conduit vibration, and the second mode of signal generation may use a feedback loop including the sensor signal.

In other instances, the first mode of signal generation may include use of a feedback loop including the sensor signal and the second mode of signal generation may include synthesis of a periodic signal having a desired property. For example, the control and measurement system may generate the drive signal by applying a large gain to the combined signal to initiate motion of the conduit and generating a periodic signal having a phase and frequency based on a phase and frequency of a sensor signal as the drive signal after motion has been initiated. The desired property of the synthesized signal may be a frequency and a phase corresponding to a frequency and a phase of the sensor signal.

The control and measurement system generates an adaptable, periodic drive signal. For example, the meter may include positive and negative direct current sources connected between the control and measurement system and the driver, and the control and measurement system may generate the drive signal by switching the current sources on and off at intervals having a phase and frequency based on the sensor signal. The control and measurement system may generate the drive signal by synthesizing a sine wave having a property corresponding to a property of the sensor signal, such as a phase and a frequency corresponding to a phase and a frequency of the sensor signal.

The control and measurement system may digitally generate a gain for use in generating the drive signal based on one or more properties of the sensor signal. For example, the control and measurement system may digitally generate the gain based on an amplitude of the sensor signal.

The driver may be operable to impart an oscillating motion to the conduit. The control and measurement system also may digitally implement a PI control algorithm to regulate the amplitude of conduit oscillation. The control and measurement system also may digitally generate the drive signal based on the sensor signal so as to maintain an amplitude of oscillation of the conduit at a user-controlled value. In support of this, the control and measurement system may generate a negative drive signal that causes the driver to resist motion of the conduit when the amplitude of oscillation exceeds the user-controlled value and a positive drive signal that causes the driver to impart motion to the conduit when the amplitude of oscillation is less than the user-controlled value.

The control and measurement system may include a controller that generates a gain signal based on the sensor signal and a multiplying digital-to-analog converter connected to the controller to receive the gain signal and generate the drive signal based on the gain signal.

When the digital flowmeter includes a second sensor connected to the conduit and operable to sense the motion of the conduit, the control and measurement system may include a controller that generates the measurement, a first analog-to-digital converter connected between the first sensor and the controller to provide a first digital sensor signal to the controller, and a second analog-to-digital converter connected between the second sensor and the controller to provide a second digital sensor signal to the controller. The controller may combine the digital sensor signals to produce a combined signal and to generate a gain signal based on the first and second digital sensor signals. The control and measurement system also may include a multiplying digital-to-analog converter connected to receive the combined signal and the gain signal from the controller to generate the drive signal as a product of the combined signal and the gain signal.

The control and measurement system may selectively apply a negative gain to the sensor signal to reduce motion of the conduit.

The control and measurement system also may compensate for zero offset in the sensor signal. The zero offset may include a component attributable to gain variation and a component attributable to gain nonlinearity, and the control and measurement system may separately compensate for the two components. The control and measurement system may compensate for zero offset by generating one or more correction factors and modifying the sensor signal using the correction factors.

The control and measurement system may calculate phase offsets for the first and second sensor signals. The phase offset may be defined as a difference between a zero-crossing point of a sensor signal and a point of zero phase for a component of the sensor signal corresponding to a fundamental frequency of the sensor signal. The control and measurement system may combine the calculated phase offsets to produce a phase difference.

The control and measurement system may generate the measurement of the property by estimating a frequency of the first sensor signal, estimating a frequency of the second sensor signal, with the frequency of the second sensor signal being different from the frequency of the first sensor signal, and calculating a phase difference between the sensor signals using the estimated frequencies.

When the sensor is a velocity sensor, the control and measurement system may estimate a frequency, amplitude, and phase of the sensor signal, and may correct the estimated frequency, amplitude, and phase to account for performance differences between a velocity sensor and an absolute position sensor. Instead of controlling the apparent amplitude of oscillation (i.e., the velocity of oscillation when the sensor is a velocity sensor), the system may control the true amplitude by dividing the sensor signal by the estimated frequency. This correction should provide improved amplitude control and noise reduction.

The control and measurement system may estimate a first parameter of the sensor signal, determine a rate of change of a second parameter, and correct the estimated first parameter based on the determined rate of change. For example, the system may correct an estimated frequency, amplitude, or phase of the sensor signal based on a determined rate of change of the frequency or amplitude of oscillation of the conduit. The system may perform separate corrections for each sensor signal.

The digital flowmeter may be a mass flowmeter and the property of material flowing through the conduit may be a mass flow rate. The digital flowmeter also may be a densitometer and the property of material flowing through the conduit may be a density of the material.

The control and measurement system may account for effects of aeration in the conduit by determining an initial mass flow rate, determining an apparent density of material flowing through the conduit, comparing the apparent density to a known density of the material to determine a density difference, and adjusting the initial mass flow rate based on the density difference to produce an adjusted mass flow rate. The system may further account for effects of aeration in the conduit by adjusting the adjusted mass flow rate to account for effects of damping. To further account for effects of aeration in the conduit, the system may adjust the adjusted mass flow rate based on differences between amplitudes of the first and second sensor signals.

The vibratable conduit may include two parallel planar loops. The sensor and driver may be connected between the loops.

The meter may include a power circuit that receives power on only a single pair of wires. The power circuit provides power to the digital control and measurement system and to the driver, and the digital control and measurement system is operable to transmit the measurement of the property of material flowing through the conduit on the single pair of wires. The power circuit may include a constant output circuit that provides power to the digital control and measurement system and drive capacitor that is charged by excess power from the two wires. The digital control and measurement system may discharge the drive capacitor to power the driver, and may monitor a charge level of the drive capacitor and discharge the drive capacitor after a charge level of the capacitor reaches a threshold level. The digital control and measurement system also may discharge the drive capacitor periodically and to perform bidirectional communications on the pair of wires.

The control and measurement system may collect a first data set for a period of the periodic signal and process the first data set to generate the drive signal and the measurement. The system may collect a second data set for a subsequent period of the sensor signal simultaneously with processing the first data set. The period corresponding to the first data set may overlap the period corresponding to the second data set.

The control and measurement system may control the drive signal to maintain an amplitude of the sensor signal at a fixed setpoint, reduce the fixed setpoint when the drive signal exceeds a first threshold level, and increase the fixed setpoint when the drive signal is less than a second threshold level and the fixed setpoint is less than a maximum permitted value for the setpoint. The first threshold level may be 95% or less of a maximum permitted drive signal.

The control and measurement system may perform an uncertainty analysis on the measurement. In this case, the control and measurement system may transmit the measurement and results of the uncertainty analysis to the control system.

The control and measurement system may also use digital processing to adjust a phase of the drive signal to compensate for a time delay associated with the sensor.

Other features and advantages of the invention will be apparent from the following description, including the drawings, and from the claims.

Preferred embodiments of the present invention will now be described by way of example only and with reference to the accompanying drawings, in which:

Fig. 1 is a block diagram of a digital mass flowmeter.
Figs. 2A and 2B are perspective and side views of mechanical components of a mass flowmeter.
Figs. 3A-3C are schematic representations of three modes of motion of the flowmeter of Fig. 1.
Fig. 4 is a block diagram of an analog control and measurement circuit.
Fig. 5 is a block diagram of a digital mass flowmeter.
Fig. 6 is a flow chart showing operation of the meter of Fig. 5.
Figs. 7A and 7B are graphs of sensor data.
Figs. 8A and 8B are graphs of sensor voltage relative to time.

Fig. 9 is a flow chart of a curve fitting procedure.
Fig. 10 is a flow chart of a procedure for generating phase differences.
Figs. 11A-11D, 12A-12D, and 13A-13D illustrate drive and sensor voltages at system startup.
Fig. 14 is a flow chart of a procedure for measuring frequency, amplitude, and phase of sensor data using a synchronous modulation technique.
Figs. 15A and 15B are block diagrams of a mass flowmeter.
Fig. 16 is a flow chart of a procedure implemented by the meter of Figs. 15A and 15B.
Fig. 17 illustrates log-amplitude control of a transfer function.
Fig. 18 is a root locus diagram.
Figs. 19A-19D are graphs of analog-to-digital converter performance relative to temperature.
Figs. 20A-20C are graphs of phase measurements.
Figs. 21A and 21B are graphs of phase measurements.
Fig. 22 is a flow chart of a zero offset compensation procedure.
Figs. 23A-23C, 24A, and 24B are graphs of phase measurements.
Fig. 25 is a graph of sensor voltage.
Fig. 26 is a flow chart of a procedure for compensating for dynamic effects.
Figs. 27A-35E are graphs illustrating application of the procedure of Fig. 29.
Figs. 36A-36L are graphs illustrating phase measurement.
Fig. 37A is a graph of sensor voltages.
Figs. 37B and 37C are graphs of phase and frequency measurements corresponding to the sensor voltages of Fig. 37A.
Figs. 37D and 37E are graphs of correction parameters for the phase and frequency measurements of Figs. 37B and 37C.
Figs. 38A-38H are graphs of raw measurements.
Figs. 39A-39H are graphs of corrected measurements.
Figs. 40A-40H are graphs illustrating correction for aeration.
Fig. 41 is a block diagram illustrating the effect of aeration in a conduit.
Fig. 42 is a flow chart of a setpoint control procedure.
Figs. 43A-43C are graphs illustrating application of the procedure of Fig. 41.
Fig. 44 is a graph comparing the performance of digital and analog flowmeters.
Fig. 45 is a flow chart showing operation of a self-validating meter.
Fig. 46 is a block diagram of a two-wire digital mass flowmeter.

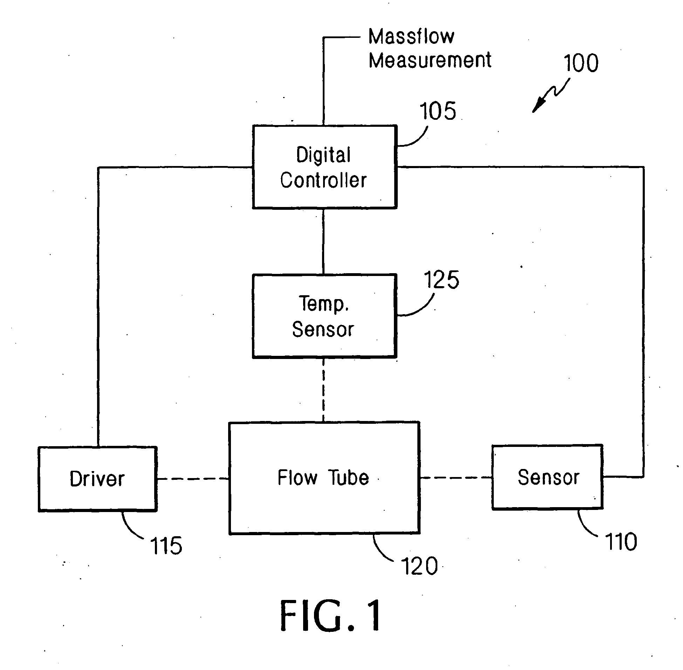

Referring to Fig. 1, a digital mass flowmeter 100 includes a digital controller 105, one or more motion sensors 110, one or more drivers 115, a conduit 120 (also referred to as a flowtube), and a temperature sensor 125. The digital controller 105 may be implemented using one or more of, for example, a processor, a field-programmable gate array, an ASIC, other programmable logic or gate arrays, or programmable logic with a processor core. The digital controller generates a measurement of mass flow through the conduit 120 based at least on signals received from the motion sensors 110. The digital controller also controls the drivers 115 to induce motion in the conduit 120. This motion is sensed by the motion sensors 110.
Mass flow through the conduit 120 is related to the motion induced in the conduit in response to a driving force supplied by the drivers 115. In particular, mass flow is related to the phase and frequency of the motion, as well as to the temperature of the conduit. The digital mass flowmeter also may provide a measurement of the density of material flowing through the conduit. The density is related to the frequency of the motion and the temperature of the conduit. Many of the described techniques are applicable to a densitometer that provides a measure of density rather than a measure of mass flow.
The temperature in the conduit, which is measured using the temperature sensor 125, affects certain properties of the conduit, such as its stiffness and dimensions. The digital controller compensates for these temperature effects. The temperature of the digital controller 105 affects, for example, the operating frequency of the digital controller. In general, the effects of controller temperature are sufficiently small to be considered negligible. However, in some instances, the digital controller may measure the controller temperature using a solid state device and may compensate for effects of the controller temperature.

A. Mechanical Design

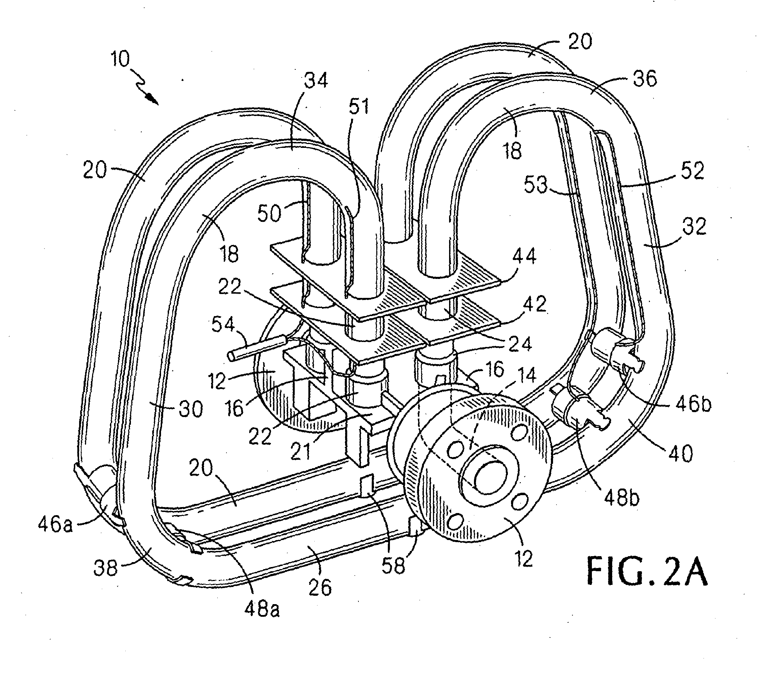

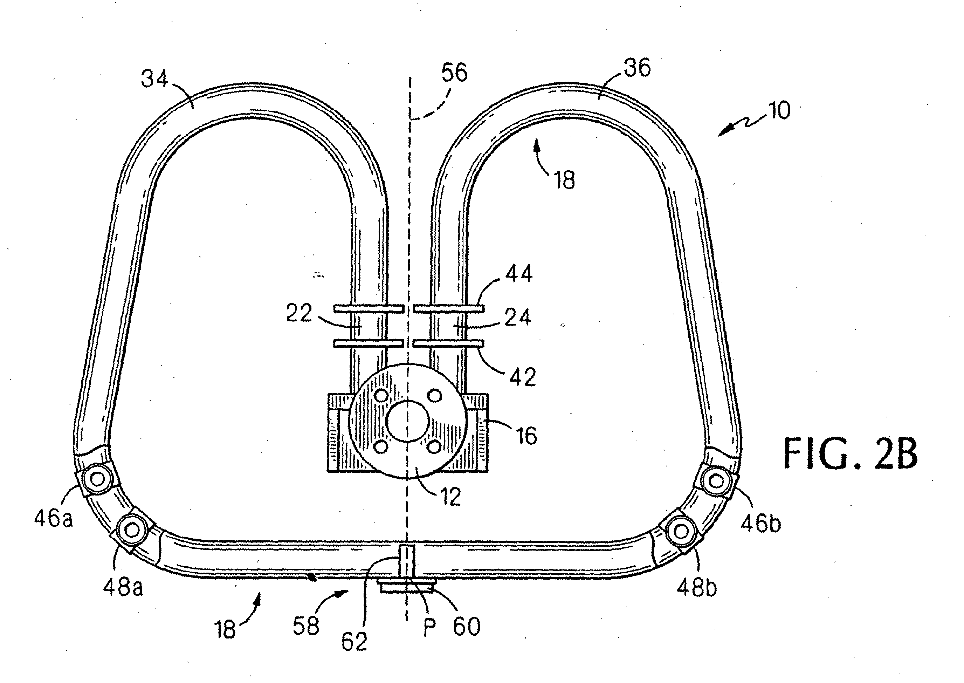

In one implementation, as illustrated in Figs. 2A and 2B, the conduit 120 is designed to be inserted in a pipeline (not shown) having a small section removed, or reserved to make room for the conduit. The conduit 120 includes mounting flanges 12 for connection to the pipeline, and a central manifold block 16 supporting two parallel planar loops 18 and 20 that are oriented perpendicularly to the pipeline. An electromagnetic driver 46 and a sensor 48 are attached between each end of loops 18 and 20. Each of the two drivers 46 corresponds to a driver 115 of Fig. 1, while each of the two sensors 48 corresponds to a sensor 120 of Fig. 1.

The drivers 46 on opposite ends of the loops are energized with current of equal magnitude but opposite sign (i.e., currents that are 180° out-of-phase) to cause straight sections 26 of the loops 18, 20 to rotate about their co-planar perpendicular bisector 56, which intersects the tube at point P (Fig. 2B). Repeatedly reversing (e.g., controlling sinusoidally) the energizing current supplied to the drivers causes each straight section 26 to undergo oscillatory motion that sweeps out a bow tie shape in the horizontal plane about line 56-56, the axis of symmetry of the loop. The entire lateral excursion of the loops at the lower rounded turns 38 and 40 is small, on the order of 0.0016m (1/16 of an inch) for a 0.6m (two foot) long straight section 26 of a pipe having a 0.025m (one inch) diameter. The frequency of oscilation is typically about 80 to 90 Hertz.

### B. Conduit Motion

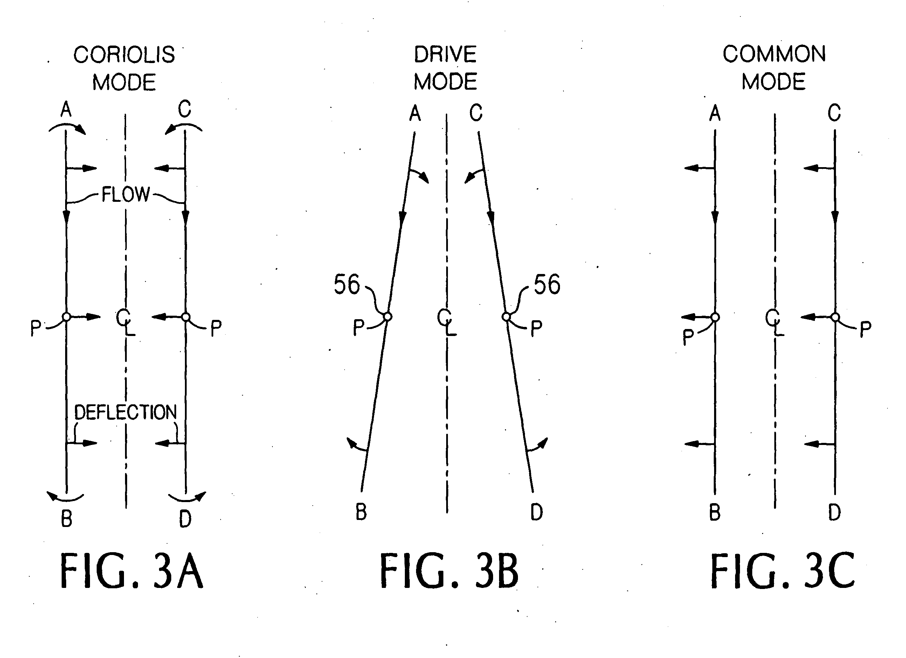

The motion of the straight sections of loops 18 and 20 are shown in three modes in Figs. 3A, 3B and 3C. In the drive mode shown in Fig. 3B, the loops are driven 180° out-of-phase about their respective points P so that the two loops rotate synchronously but in the opposite sense. Consequently, respective ends such as A and C periodically come together and go apart.

The drive motion shown in Fig. 3B induces the Coriolis mode motion shown in Fig. 3A, which is in opposite directions between the loops and moves the straight sections 26 slightly toward (or away) from each other. The Coriolis effect is directly related to $mvW$, where $m$ is the mass of material in a cross section of a loop, $v$ is the velocity at which the mass is moving (the volumetric flow rate), $W$ is the angular velocity of the loop ($W = W_o sin\omega t$), and $mv$ is the mass flow rate. The Coriolis effect is greatest when the two straight sections are driven sinusoidally and have a sinusoidally varying angular velocity. Under these conditions, the Coriolis effect is 90° out-of-phase with the drive signal.

Fig. 3C shows an undesirable common mode motion that deflects the loops in the same direction. This type of motion might be produced by an axial vibration in the pipeline in the embodiment of Figs. 2A and 2B because the loops are perpendicular to the pipeline.

The type of oscillation shown in Fig. 3B is called the antisymmetrical mode, and the Coriolis mode of Fig. 3A is called the symmetrical mode. The natural frequency of oscillation in the antisymmetrical mode is a function of the torsional resilience of the legs. Ordinarily the resonant frequency of the antisymmetrical mode for conduits of the shape shown in Figs. 2A and 2B is higher than the resonant frequency of the symmetrical mode. To reduce the noise sensitivity of the mass flow measurement, it is desirable to maximize the Coriolis force for a given mass flow rate. As noted above, the loops are driven at their resonant frequency, and the Coriolis force is directly related to the frequency at which the loops are oscillating (i.e., the angular velocity of the loops). Accordingly, the loops are driven in the antisymmetrical mode, which tends to have the higher resonant frequency.

Other implementations may include different conduit designs. For example, a single loop or a straight tube section may be employed as the conduit.

### C. Electronic Design

The digital controller 105 determines the mass flow rate by processing signals produced by the sensors 48 (i.e., the motion sensors 110) located at opposite ends of the loops. The signal produced by each sensor includes a component corresponding to the relative velocity at which the loops are driven by a driver positioned next to the sensor and a component corresponding to the relative velocity of the loops due to Coriolis forces induced in the loops. The loops are driven in the antisymmetrical mode, so that the components of the sensor signals corresponding to drive velocity are equal in magnitude but opposite in sign. The resulting Coriolis force is in the symmetrical mode so that the components of the sensor signals corresponding to Coriolis velocity are equal in magnitude and sign. Thus, differencing the signals cancels out the Coriolis velocity components and results in a difference that is proportional to the drive velocity. Similarly, summing the signals cancels out the drive velocity components and results in a sum that is proportional to the Coriolis velocity, which, in turn, is proportional to the Coriolis force. This sum then may be used to determine the mass flow rate.

### 1. Analog Control System

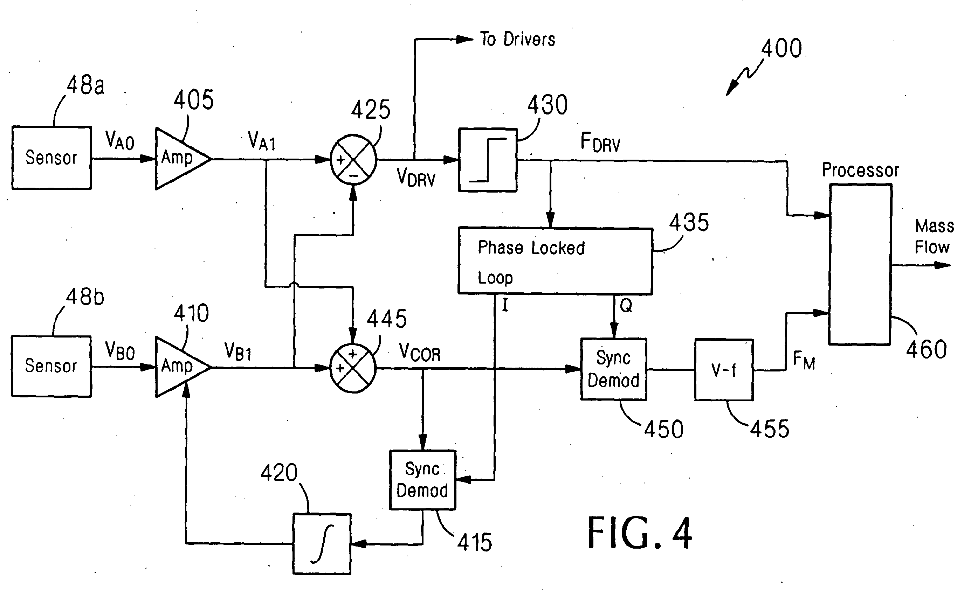

The digital mass flowmeter 100 provides considerable advantages over traditional, analog mass flowmeters. For use in later discussion, Fig. 4 illustrates an analog control system 400 of a traditional mass flowmeter. The sensors 48 each produce a voltage signal, with signal $V_{A0}$ being produced by sensor 48a and signal $V_{B0}$ being produced by sensor 48b. $V_{A0}$ and $V_{B0}$ correspond to the velocity of the loops relative to each other at the positions of the sensors.

Prior to processing, signals $V_{A0}$ and $V_{B0}$ are amplified at respective input amplifiers 405 and 410 to produce signals $V_{A1}$ and $V_{B1}$. To correct for imbalances in the amplifiers and the sensors, input amplifier 410 has a variable gain that is controlled by a balance signal coming from a feedback loop that contains a synchronous demodulator 415 and an integrator 420.

At the output of amplifier 405, signal $V_{A1}$ is of the form:

$$V_{A1} = V_D \sin\omega t + V_C \cos\omega t,$$

and, at the output of amplifier 410, signal $V_{B1}$ is of the form:

$$V_{B1} = -V_D \sin\omega t + V_C \cos\omega t,$$

where $V_D$ and $V_C$ are, respectively, the drive voltage and the Coriolis voltage, and $\omega$ is the drive mode angular frequency.

Voltages $V_{A1}$ and $V_{B1}$ are differenced by operational amplifier 425 to produce:

$$V_{DRV} = V_{A1} - V_{B1} = 2V_D \sin\omega t,$$

where $V_{DRV}$ corresponds to the drive motion and is used to power the drivers. In addition to powering the drivers, $V_{DRV}$ is supplied to a positive going zero crossing detector 430 that produces an output square wave $F_{DRV}$ having a frequency corresponding to that of $V_{DRV}$ ($\omega = 2\pi F_{DRV}$). $F_{DRV}$ is used as the input to a digital phase locked loop circuit 435. $F_{DRV}$ also is supplied to a processor 440.

Voltages $V_{A1}$ and $V_{B1}$ are summed by operational amplifier 445 to produce:

$$V_{COR} = V_{A1} + V_{B1} = 2V_C \cos\omega t,$$

where $V_{COR}$ is related to the induced Coriolis motion.

$V_{COR}$ is supplied to a synchronous demodulator 450 that produces an output voltage $V_M$ that is directly proportional to mass by rejecting the components of $V_{COR}$ that do not have the same frequency as, and are not in phase with, a gating signal Q. The phase locked loop circuit 435 produces Q, which is a quadrature reference signal that has the same frequency ($\omega$) as $V_{DRV}$ and is 90° out of phase with $V_{DRV}$ (i.e., in phase with $V_{COR}$). Accordingly, synchronous demodulator 450 rejects frequencies other than $\omega$ so that $V_M$ corresponds to the amplitude of $V_{COR}$ at $\omega$. This amplitude is directly proportional to the mass in the conduit.

$V_M$ is supplied to a voltage-to-frequency converter 455 that produces a square wave signal $F_M$ having a frequency that corresponds to the amplitude of $V_M$. The processor 440 then divides $F_M$ by $F_{DRV}$ to produce a measurement of the mass flow rate.

Digital phase locked loop circuit 435 also produces a reference signal I that is in phase with $V_{DRV}$ and is used to gate the synchronous demodulator 415 in the feedback loop controlling amplifier 410. When the gains of the input amplifiers 405 and 410 multiplied by the drive components of the corresponding input signals are equal, the summing operation at operational amplifier 445 produces zero drive component (i.e., no signal in phase with $V_{DRV}$) in the signal $V_{COR}$. When the gains of the input amplifiers 405 and 410 are not equal, a drive component exists in $V_{COR}$. This drive component is extracted by synchronous demodulator 415 and integrated by integrator 420 to generate an error voltage that corrects the gain of input amplifier 410. When the gain is too high or too low, the synchronous demodulator 415 produces an output voltage that causes the integrator to change the error voltage that modifies the gain. When the gain reaches the desired value, the output of the synchronous modulator goes to zero and the error voltage stops changing to maintain the gain at the desired value.

2. <u>Digital Control System</u>

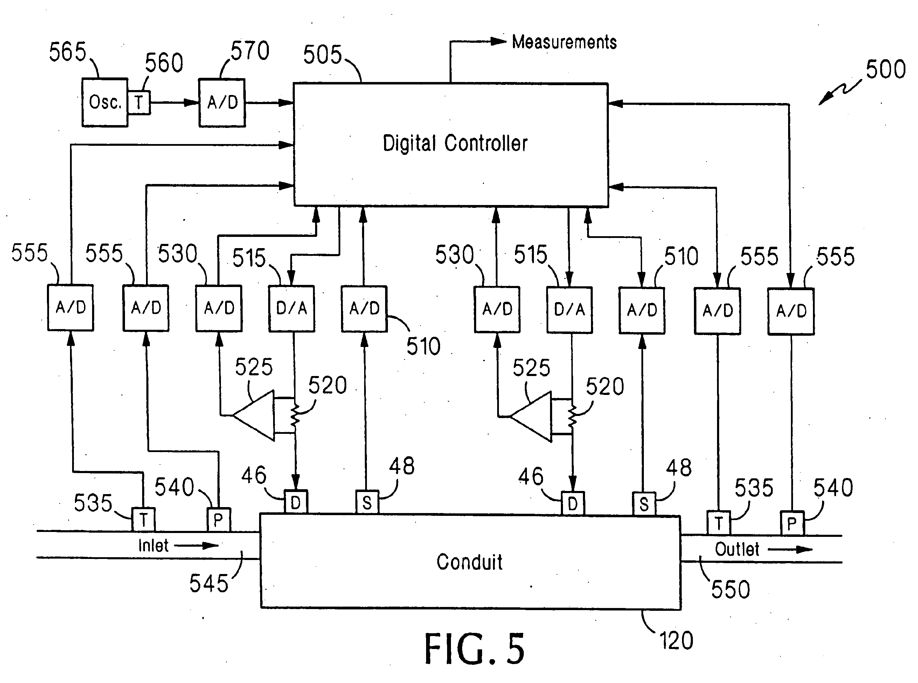

Fig. 5 provides a block diagram of an implementation 500 of the digital mass flowmeter 100 that includes the conduit 120, drivers 46, and sensors 48 of Figs. 2A and 2B, along with a digital controller 505. Analog signals from the sensors 48 are converted to digital signals by analog-to-digital ("A/D") converters 510 and supplied to the controller 505. The A/D converters may be implemented as separate converters, or as separate channels of a single converter.

Digital-to-analog ("D/A") converters 515 convert digital control signals from the controller 505 to analog signals for driving the drivers 46. The use of a separate drive signal for each driver has a number of advantages. For example, the system may easily switch between symmetrical and antisymmetrical drive modes for diagnostic purposes. In other implementations, the signals produced by converters 515 may be amplified by amplifiers prior to being supplied to the drivers 46. In still other implementations, a single D/A converter may be used to produce a drive signal applied to both drivers, with the drive signal being inverted prior to being provided to one of the drivers to drive the conduit 120 in the antisymmetrical mode.

High precision resistors 520 and amplifiers 525 are used to measure the current supplied to each driver 46. A/D converters 530 convert the measured current to digital signals and supply the digital signals to controller 505. The controller 505 uses the measured currents in generating the driving signals.

Temperature sensors 535 and pressure sensors 540 measure, respectively, the temperature and the pressure at the inlet 545 and the outlet 550 of the conduit. A/D converters 555 convert the measured values to digital signals and supply the digital signals to the controller 505. The controller 505 uses the measured values in a number of ways. For example, the difference between the pressure measurements may be used to determine a back pressure in the conduit. Since the stiffness of the conduit varies with the back pressure, the controller may account for conduit stiffness based on the determined back pressure.

An additional temperature sensor 560 measures the temperature of the crystal oscillator 565 used by the A/D converters. An A/D converter 570 converts this temperature measurement to a digital signal for use by the controller 505. The input/output relationship of the A/D converters varies with the operating frequency of the converters, and the operating frequency varies with the temperature of the crystal oscillator. Accordingly, the controller uses the temperature measurement to adjust the data provided by the A/D converters, or in system calibration.

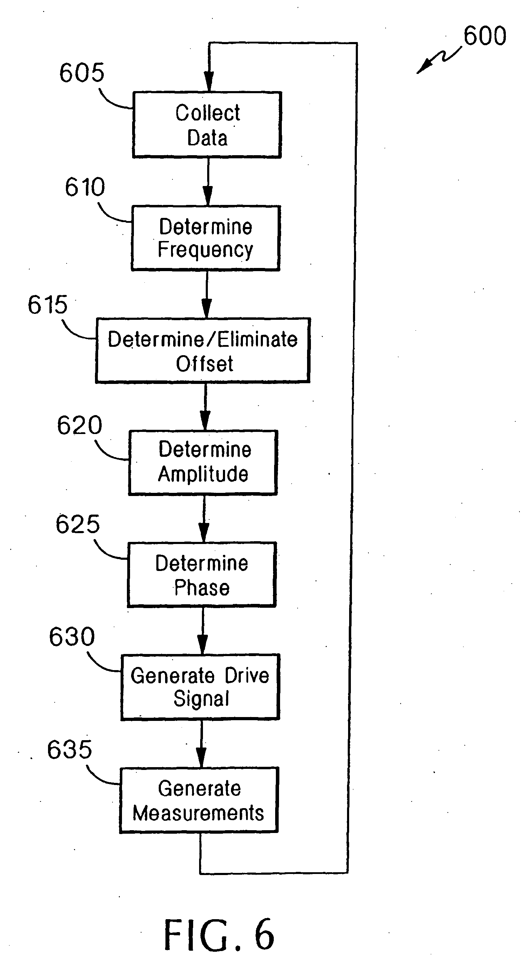

In the implementation of Fig. 5, the digital controller 505 processes the digitized sensor signals produced by the A/D converters 510 according to the procedure 600 illustrated in Fig. 6 to generate the mass flow measurement and the drive signal supplied to the drivers 46. Initially, the controller collects data from the sensors (step 605). Using this data, the controller determines the frequency of the sensor signals (step 610), eliminates zero offset from the sensor signals (step 615), and determines the amplitude (step 620) and phase (step 625) of the sensor signals. The controller uses these calculated values to generate the drive signal (step 630) and to generate the mass flow and other measurements (step 635). After generating the drive signals and measurements, the controller collects a new set of data and repeats the procedure. The steps of the procedure 600 may be performed serially or in parallel, and may be performed in varying order.

Because of the relationships between frequency, zero offset, amplitude, and phase, an estimate of one may be used in calculating another. This leads to repeated calculations to improve accuracy. For example, an initial frequency determination used in determining the zero offset in the sensor signals may be revised using offset-eliminated sensor signals. In addition, where appropriate, values generated for a cycle may be used as starting estimates for a following cycle.

Fig. 5 provides a general description of the hardware included in a digital flowmeter.

a. <u>Data Collection</u>

For ease of discussion, the digitized signals from the two sensors will be referred to as signals $SV_1$ and $SV_2$, with signal $SV_1$ coming from sensor 48a and signal $SV_2$ coming from sensor 48b. Although new data is generated constantly, it is assumed that calculations are based upon data corresponding to one complete cycle of both sensors. With sufficient data buffering, this condition will be true so long as the average time to process data is less than the time taken to collect the data. Tasks to be carried out for a cycle include deciding that the cycle has been completed, calculating the frequency of the cycle (or the frequencies of $SV_1$ and $SV_2$), calculating the amplitudes of $SV_1$ and $SV_2$, and calculating the phase difference between $SV_1$ and $SV_2$. In some implementations, these calculations are repeated for each cycle using the end point of the previous cycle as the start for the next. In other implementations, the cycles overlap by 180° or other amounts (e.g., 90°) so that a cycle is subsumed within the cycles that precede and follow it.

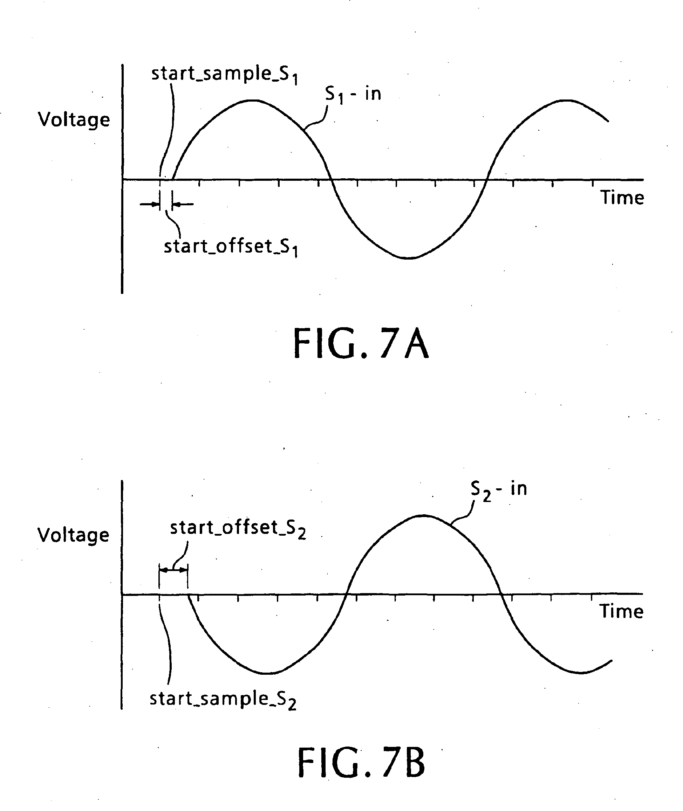

Figs. 7A and 7B illustrate two vectors of sampled data from signals $SV_1$ and $SV_2$, which are named, respectively, sv1_in and sv2_in. The first sampling point of each vector is known, and corresponds to a zero crossing of the sine wave represented by the vector. For sv1_in, the first sampling point is the zero crossing from a negative value to a positive value, while for sv2_in the first sampling point is the zero crossing from a positive value to a negative value.

An actual starting point for a cycle (i.e., the actual zero crossing) will rarely coincide exactly with a sampling point. For this reason, the initial sampling points (start_sample_SV1 and start_sample_SV2) are the sampling points occurring just before the start of the cycle. To account for the difference between the first sampling point and the actual start of the cycle, the approach also uses the position (start_offset_SV1 or start_offset_SV2) between the starting sample and the next sample at which the cycle actually begins.

Since there is a phase offset between signals $SV_1$ and $SV_2$, sv1_in and sv2_in may start at different sampling points. If both the sample rate and the phase difference are high, there may be a difference of several samples between the start of sv1_in and the start of sv2_in. This difference provides a crude estimate of the phase offset, and may be used as a check on the calculated phase offset, which is discussed below. For example, when sampling at 55 kHz, one sample corresponds to approximately 0.5 degrees of phase shift, and one cycle corresponds to about 800 sample points.

When the controller employs functions such as the sum (A+B) and difference (A-B), with B weighted to have the same amplitude as A, additional variables (e.g., start_sample_sum and start_offset_sum) track the start of the period for each function. The sum and difference functions have a phase offset halfway between $SV_1$ and $SV_2$.

In one implementation, the data structure employed to store the data from the sensors is a circular list for each sensor, with a capacity of at least twice the maximum number of samples in a cycle. With this data structure, processing may be carried out on data for a current cycle while interrupts or other techniques are used to add data for a following cycle to the lists.

Processing is performed on data corresponding to a full cycle to avoid errors when employing approaches based on sine-waves. Accordingly, the first task in assembling data for a cycle is to determine where the cycle begins and ends. When nonoverlapping cycles are employed, the beginning of the cycle may be identified as the end of the previous cycle. When overlapping cycles are employed, and the cycles overlap by 180°, the beginning of the cycle may be identified as the midpoint of the previous cycle, or as the endpoint of the cycle preceding the previous cycle.

The end of the cycle may be first estimated based on the parameters of the previous cycle and under the assumption that the parameters will not change by more than a predetermined amount from cycle to cycle. For example, five percent may be used as the maximum permitted change from the last cycle's value, which is reasonable since, at sampling rates of 55 kHz, repeated increases or decreases of five percent in amplitude or frequency over consecutive cycles would result in changes of close to 5,000 percent in one second.

By designating five percent as the maximum permissible increase in amplitude and frequency, and allowing for a maximum phase change of 5° in consecutive cycles, a conservative estimate for the upper limit on the end of the cycle for signal $SV_1$ may be determined as:

$$end\_sample\_SV1 \le start\_sample\_SV1 + \frac{365}{360} * \frac{sample\_rate}{est\_freq * 0.95}$$

where start_sample_SV1 is the first sample of sv1_in, sample_rate is the sampling rate, and est_freq is the frequency from the previous cycle. The upper limit on the end of the cycle for signal $SV_2$ (end_sample_SV2) may be determined similarly.

After the end of a cycle is identified, simple checks may be made as to whether the cycle is worth processing. A cycle may not be worth processing when, for example, the conduit has stalled or the sensor waveforms are severely distorted. Processing only suitable cycles provides considerable reductions in computation.

One way to determine cycle suitability is to examine certain points of a cycle to confirm expected behavior. As noted above, the amplitudes and frequency of the last cycle give useful starting estimates of the corresponding values for the current cycle. Using these values, the points corresponding to 30°, 150°, 210° and 330° of the cycle may be examined. If the amplitude and frequency were to match exactly the amplitude and frequency for the previous cycle, these points should have values corresponding to est_amp/2, est_amp/2, -est_amp/2, and -est_amp/2, respectively, where est_amp is the estimated amplitude of a signal (i.e., the amplitude from the previous cycle). Allowing for a five percent change in both amplitude and frequency, inequalities may be generated for each quarter cycle. For the 30° point, the inequality is

$$sv1\_in \left( start\_sample\_SV1 + \frac{30}{360} * \frac{sample\_rate}{est\_freq * 1.05} \right) > 0.475 * est\_amp\_$$

The inequalities for the other points have the same form, with the degree offset term (x/360) and the sign of the est_amp_SV1 term having appropriate values. These inequalities can be used to check that the conduit has vibrated in a reasonable manner.

Measurement processing takes place on the vectors sv1_in(start:end) and sv2_in(start:end) where:

$$start = \min(start\_sample\_SV1, \; start\_sample\_SV2),$$

and

$$end = \max(end\_sample\_SV1, \; end\_sample\_SV2).$$

The difference between the start and end points for a signal is indicative of the frequency of the signal.

b. Frequency Determination

The frequency of a discretely-sampled pure sine wave may be calculated by detecting the transition between periods (i.e., by detecting positive or negative zero-crossings) and counting the number of samples in each period. Using this method, sampling, for example, an 82.2 Hz sine wave at 55 kHz will provide an estimate of frequency with a maximum error of 0.15 percent. Greater accuracy may be achieved by estimating the fractional part of a sample at which the zero-crossing actually occurred using, for example, start_offset_SV1 and start_offset_SV2. Random noise and zero offset may reduce the accuracy of this approach.

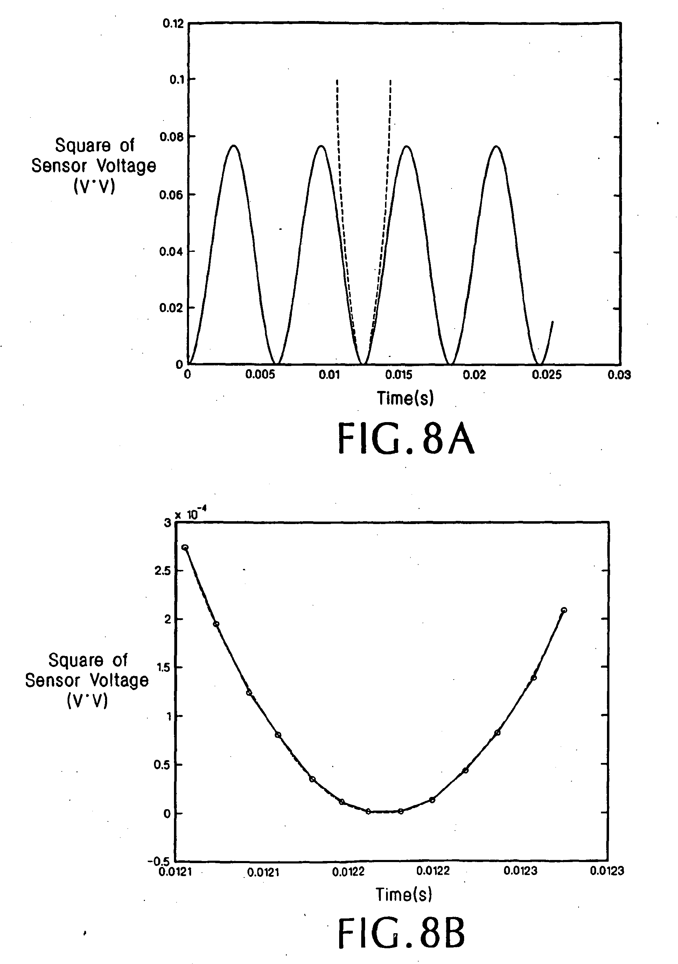

As illustrated in Figs. 8A and 8B, a more refined method of frequency determination uses quadratic interpolation of the square of the sine wave. With this method, the square of the sine wave is calculated, a quadratic function is fitted to match the minimum point of the squared sine wave, and the zeros of the quadratic function are used to determine the frequency. If

$$sv_t = A \sin x_t + \delta + \sigma \varepsilon_t,$$

where $sv_t$ is the sensor voltage at time t, A is the amplitude of oscillation, $x_t$ is the radian angle at time t (i.e., $x_t = 2\pi ft$), $\delta$ is the zero offset, $\varepsilon_t$ is a random variable with distribution N(0,1), and $\sigma$ is the variance of the noise, then the squared function is given by:

$$sv_t^2 = A^2 \sin^2 x_t + 2A(\delta + \sigma \varepsilon_t)\sin x_t + 2\delta \sigma \varepsilon_t + \delta^2 + \sigma^2 \varepsilon_t^2.$$

When $x_t$ is close to $2\pi$, $\sin x_t$ and $\sin^2 x_t$ can be approximated as $x_{0t} = x_t - 2\pi$ and $x_{0t}^2$, respectively. Accordingly, for values of $x_t$ close to $2\pi$, $a_t$ can be approximated as:

$$a_t^2 \approx A^2 x_{0t}^2 + 2A(\delta + \sigma \varepsilon_t)x_{0t} + 2\delta \sigma \varepsilon_t + \delta^2 + \sigma^2 \varepsilon_t^2$$
$$\approx \left(A^2 x_{0t}^2 + 2A\delta x_{0t} + \delta^2\right) + \sigma \varepsilon_t \left(2Ax_{0t} + 2\delta + \sigma \varepsilon_t\right).$$

This is a pure quadratic (with a non-zero minimum, assuming $\delta \neq 0$) plus noise, with the amplitude of the noise being dependent upon both $\sigma$ and $\delta$. Linear interpolation also could be used.

Error sources associated with this curve fitting technique are random noise, zero offset, and deviation from a true quadratic. Curve fitting is highly sensitive to the level of random noise. Zero offset in the sensor voltage increases the amplitude of noise in the sine-squared function, and illustrates the importance of zero offset elimination (discussed below). Moving away from the minimum, the square of even a pure sine wave is not entirely quadratic. The most significant extra term is of fourth order. By contrast, the most significant extra term for linear interpolation is of third order.

Degrees of freedom associated with this curve fitting technique are related to how many, and which, data points are used. The minimum is three, but more may be used (at greater computational expense) by using least-squares fitting. Such a fit is less susceptible to random noise. Fig. 8A illustrates that a quadratic approximation is good up to some 20° away from the minimum point. Using data points further away from the minimum will reduce the influence of random noise, but will increase the errors due to the non-quadratic terms (i.e., fourth order and higher) in the sine-squared function.

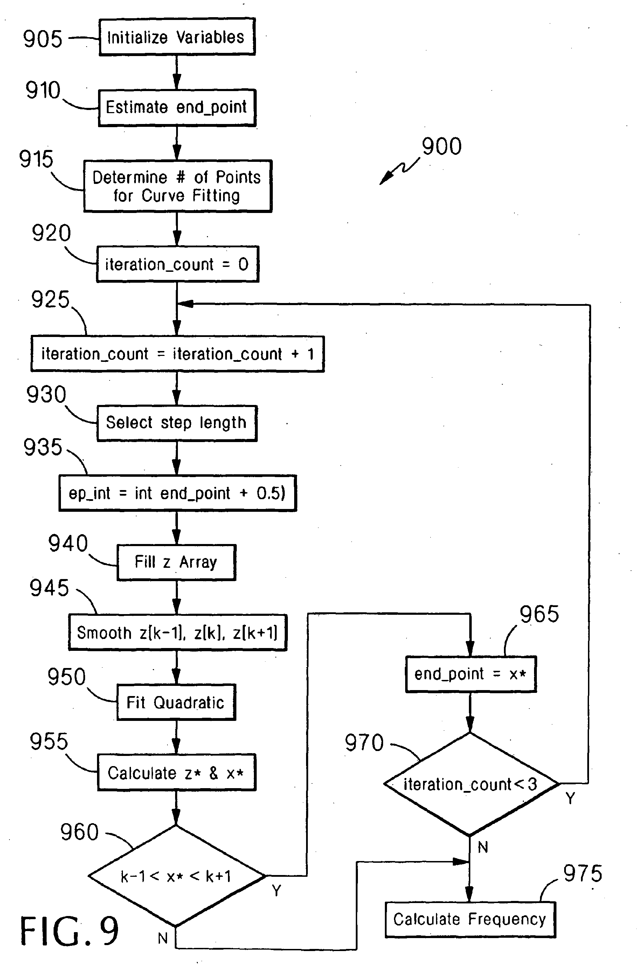

Fig. 9 illustrates a procedure 900 for performing the curve fitting technique. As a first step, the controller initializes variables (step 905). These variables include end_point, the best estimate of the zero crossing point; ep_int, the integer value nearest to end_point; s[0..i], the set of all sample points; z[k], the square of the sample point closest to end_point; z[0..n-1], a set of squared sample points used to calculate end_point; n, the number of sample points used to calculate end_point (n=2k+1); step_length, the number of samples in s between consecutive values in z; and iteration_count, a count of the iterations that the controller has performed.

The controller then generates a first estimate of end_point (step 910). The controller generates this estimate by calculating an estimated zero-crossing point based on the estimated frequency from the previous cycle and searching around the estimated crossing point (forwards and backwards) to find the nearest true crossing point (i.e., the occurrence of consecutive samples with different signs). The controller then sets end_point equal to the sample point having the smaller magnitude of the samples surrounding the true crossing point.

Next, the controller sets n, the number of points for curve fitting (step 915). The controller sets n equal to 5 for a sample rate of 11 kHz, and to 21 for a sample rate of 44 kHz. The controller then sets iteration_count to 0 (step 920) and increments iteration_count (step 925) to begin the iterative portion of the procedure.

As a first step in the iterative portion of the procedure, the controller selects step_length (step 930) based on the value of iteration_count. The controller sets step_length equal to 6, 3, or 1 depending on whether iteration_count equals, respectively, 1, 2 or 3.

Next, the controller determines ep_int as the integer portion of the sum of end_point and 0.5 (step 935) and fills the z array (step 940). For example, when n equals 5, $z[0] = s[ep\_int-2*step\_length]^2$, $z[1] = s[ep\_int-step\_length]^2$, $z[2] = s[ep\_int]^2$, $z[3] = s[ep\_int+step\_length]^2$, and $z[4] = s[ep\_int+2*step\_length]^2$.

Next, the controller uses a filter, such as a Savitzky-Golay filter, to calculate smoothed values of z[k-1], z [k] and z[k+1] (step 945). Savitzky-Golay smoothing filters are discussed by Press et al. in Numerical Recipes in C, pp. 650-655 (2nd ed., Cambridge University Press, 1995). The controller then fits a quadratic to z[k-1], z[k] and z[k+1] (step 950), and calculates the minimum value of the quadratic (z*) and the corresponding position (x*) (step 955).

If x* is between the points corresponding to k-1 and k+1 (step 960), then the controller sets end_point equal to x* (step 965). Thereafter, if iteration_count is less than 3 (step 970), the controller increments iteration_count (step 925) and repeats the iterative portion of the procedure.

If x* is not between the points corresponding to k-1 and k+1 (step 960), or if iteration_count equals 3 (step 970), the controller exits the iterative portion of the procedure. The controller then calculates the frequency based on the difference between end_point and the starting point for the cycle, which is known (step 975).

In essence, the procedure 900 causes the controller to make three attempts to home in on end_point, using smaller step_lengths in each attempt. If the resulting minimum for any attempt falls outside of the points used to fit the curve (i.e., there has been extrapolation rather than interpolation), this indicates that either the previous or new estimate is poor, and that a reduction in step size is unwarranted.

The procedure 900 may be applied to at least three different sine waves produced by the sensors. These include signals $SV_1$ and $SV_2$ and the weighted sum of the two. Moreover, assuming that zero offset is eliminated, the frequency estimates produced for these signals are independent. This is clearly true for signals $SV_1$ and $SV_2$, as the errors on each are independent. It is also true, however, for the weighted sum, as long as the mass flow and the corresponding phase difference between signals $SV_1$ and $SV_2$ are large enough for the calculation of frequency to be based on different samples in each case. When this is true, the random errors in the frequency estimates also should be independent.

The three independent estimates of frequency can be combined to provide an improved estimate. This combined estimate is simply the mean of the three frequency estimates.

c. <u>Zero Offset Compensation</u>

An important error source in a Coriolis transmitter is zero offset in each of the sensor voltages. Zero offset is introduced into a sensor voltage signal by drift in the pre-amplification circuitry and the analog-to-digital converter. The zero offset effect may be worsened by slight differences in the pre-amplification gains for positive and negative voltages due to the use of differential circuitry. Each error source varies between transmitters, and will vary with transmitter temperature and more generally over time with component wear.

An example of the zero offset compensation technique employed by the controller is discussed in detail below. In general, the controller uses the frequency estimate and an integration technique to determine the zero offset in each of the sensor signals. The controller then eliminates the zero offset from those signals. After eliminating zero offset from signals $SV_1$ and $SV_2$, the controller may recalculate the frequency of those signals to provide an improved estimate of the frequency.

d. Amplitude Determination

The amplitude of oscillation has a variety of potential uses. These include regulating conduit oscillation via feedback, balancing contributions of sensor voltages when synthesizing driver waveforms, calculating sums and differences for phase measurement, and calculating an amplitude rate of change for measurement correction purposes.

In one implementation, the controller uses the estimated amplitudes of signals $SV_1$ and $SV_2$ to calculate the sum and difference of signals $SV_1$ and $SV_2$, and the product of the sum and difference. Prior to determining the sum and difference, the controller compensates one of the signals to account for differences between the gains of the two sensors. For example, the controller may compensate the data for signal $SV_2$ based on the ratio of the amplitude of signal $SV_1$ to the amplitude of signal $SV_2$ so that both signals have the same amplitude.

The controller may produce an additional estimate of the frequency based on the calculated sum. This estimate may be averaged with previous frequency estimates to produce a refined estimate of the frequency of the signals, or may replace the previous estimates.

The controller may calculate the amplitude according to a Fourier-based technique to eliminate the effects of higher harmonics. A sensor voltage x(t) over a period T (as identified using zero crossing techniques) can be represented by an offset and a series of harmonic terms as:

$$x(t) = a_0/2 + a_1\cos(\omega t) + a_2\cos(2\omega t) + a_3\cos(3\omega t) + ... + b_1\sin(\omega t) + b_2\sin(2\omega t) + ...$$

With this representation, a non-zero offset $a_0$ will result in non-zero cosine terms $a_n$. Though the amplitude of interest is the amplitude of the fundamental component (i.e., the amplitude at frequency w), monitoring the amplitudes of higher harmonic components (i.e., at frequencies $k\omega$, where k is greater than 1) may be of value for diagnostic purposes. The values of $a_n$ and $b_n$ may be calculated as:

$$a_n = \frac{2}{T}\int_0^T x(t)\cos n\omega dt,$$

and

$$b_n = \frac{2}{T}\int_0^T x(t)\sin n\omega dt.$$

The amplitude, $A_n$, of each harmonic is given by:

$$A_n = \sqrt{a_n^2 + b_n^2}.$$

The integrals are calculated using Simpson's method with quadratic correction (described below). The chief computational expense of the method is calculating the pure sine and cosine functions.

e. Phase Determination

The controller may use a number of approaches to calculate the phase difference between signals $SV_1$ and $SV_2$. For example, the controller may determine the phase offset of each harmonic, relative to the starting time at t=0, as:

$$\varphi_n = \tan^{-1}\frac{a_n}{b_n}.$$

The phase offset is interpreted in the context of a single waveform as being the difference between the start of the cycle (i.e., the zero-crossing point) and the point of zero phase for the component of SV(t) of frequency ω. Since the phase offset is an average over the entire waveform, it may be used as the phase offset from the midpoint of the cycle. Ideally, with no zero offset and constant amplitude of oscillation, the phase offset should be zero every cycle. The controller may determine the phase difference by comparing the phase offset of each sensor voltage over the same time period.

The amplitude and phase may be generated using a Fourier method that eliminates the effects of higher harmonics. This method has the advantage that it does not assume that both ends of the conduits are oscillating at the same frequency. As a first step in the method, a frequency estimate is produced using the zero crossings to measure the time between the start and end of the cycle. If linear variation in frequency is assumed, this estimate equals the time-averaged frequency over the period. Using the estimated, and assumed time-invariant, frequency ω of the cycle, the controller calculates:

$$I_1 = \frac{2\omega}{\pi} \int_0^{\frac{2\pi}{\omega}} SV(t)\sin(\omega t)\, dt,$$

and

$$I_2 = \frac{2\omega}{\pi} \int_0^{\frac{2\pi}{\omega}} SV(t)\cos(\omega t)\, dt,$$

where SV(t) is the sensor voltage waveform (i.e., $SV_1(t)$ or $SV_2(t)$). The controller then determines the estimates of the amplitude and phase:

$$Amp = \sqrt{I_1^2 + I_2^2},$$

and

$$Phase = \tan^{-1}\frac{I_2}{I_1}.$$

The controller then calculates a phase difference, assuming that the average phase and frequency of each sensor signal is representative of the entire waveform. Since these frequencies are different for $SV_1$ and $SV_2$, the corresponding phases are scaled to the average frequency. In addition, the phases are shifted to the same starting point (i.e., the midpoint of the cycle on $SV_1$). After scaling, they are subtracted to provide the phase difference:

$$scaled\_phase\_SV_1 = phase\_SV_1 \frac{av\_freq}{freq\_SV_1},$$

$$scale\_shift\_SV_2 = \frac{(midpoint\_SV_2 - midpoint\_SV_1)\, h\, freq\_SV_2}{360}, \text{ a}$$

and

$$\texttt{scaled\_phase\_SV}_2 = (\texttt{phase\_SV}_2 + \texttt{scale\_shift\_SV}_2) \frac{\texttt{av\_freq}}{\texttt{freq\_SV}_2},$$

where h is the sample length and the midpoints are defined in terms of samples:

$$\texttt{midpoint\_SV}_x = \frac{(\texttt{startpoint\_SV}_x + \texttt{endpoint\_SV}_x)}{2}.$$

In general, phase and amplitude are not calculated over the same time-frame for the two sensors. When the flow rate is zero, the two cycle mid-points are coincident. However, they diverge at high flow rates so that the calculations are based on sample sets that are not coincident in time. This leads to increased phase noise in conditions of changing mass flow. At full flow rate, a phase shift of 4° (out of 360°) means that only 99% of the samples in the $SV_1$ and $SV_2$ data sets are coincident. Far greater phase shifts may be observed under aerated conditions, which may lead to even lower rates of overlap.

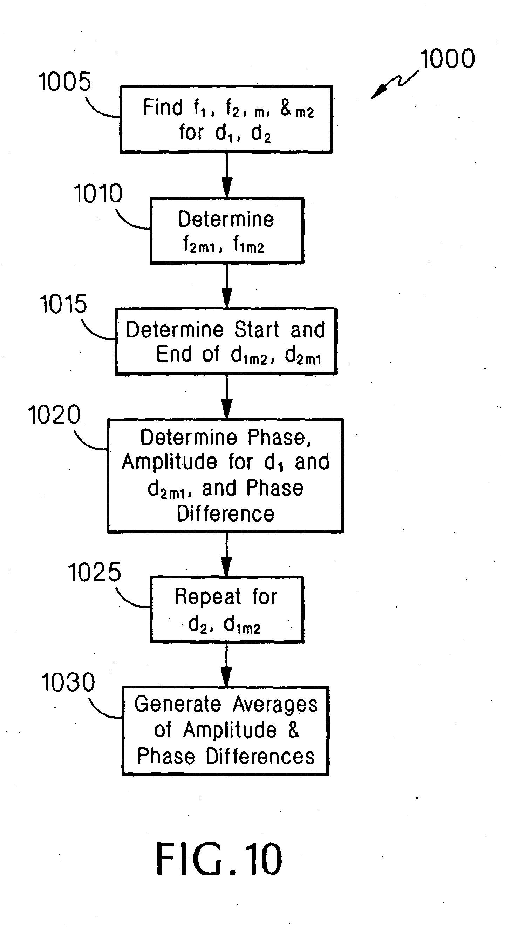

Fig. 10 illustrates a modified approach 1000 that addresses this issue. First, the controller finds the frequencies ($f_1$, $f_2$) and the mid-points ($m_1$, $m_2$) of the $SV_1$ and $SV_2$ data sets ($d_1$, $d_2$) (step 1005). Assuming linear shift in frequency from the last cycle, the controller calculates the frequency of $SV_2$ at the midpoint of $SV_1$ ($f_{2m1}$) and the frequency of $SV_1$ at the midpoint of $SV_2$ ($f_{1m2}$) (step 1010).

The controller then calculates the starting and ending points of new data sets ($d_{1m2}$ and $d_{2m1}$) with mid-points $m_2$ and $m_1$ respectively, and assuming frequencies of $f_{1m2}$ and $f_{2m1}$ (step 1015). These end points do not necessarily coincide with zero crossing points. However, this is not a requirement for Fourier-based calculations.

The controller then carries out the Fourier calculations of phase and amplitude on the sets $d_1$ and $d_{2m1}$, and the phase difference calculations outlined above (step 1020). Since the mid-points of $d_1$ and $d_{2m1}$ are identical, scale-shift\_$SV_2$ is always zero and can be ignored. The controller repeats these calculations for the data sets $d_2$ and $d_{1m2}$ (step 1025). The controller then generates averages of the calculated amplitude and phase difference for use in measurement generation (step 1030). When there is sufficient separation between the mid points $m_1$ and $m_2$, the controller also may use the two sets of results to provide local estimates of the rates of change of phase and amplitude.

The controller also may use a difference-amplitude method that involves calculating a difference between $SV_1$ and $SV_2$, squaring the calculated difference, and integrating the result. According to another approach, the controller synthesizes a sine wave, multiplies the sine wave by the difference between signals $SV_1$ and $SV_2$, and integrates the result. The controller also may integrate the product of signals $SV_1$ and $SV_2$, which is a sine wave having a frequency 2f (where f is the average frequency of signals $SV_1$ and $SV_2$), or may square the product and integrate the result. The controller also may synthesize a cosine wave comparable to the product sine wave and multiply the synthesized cosine wave by the product sine wave to produce a sine wave of frequency 4f that the controller then integrates. The controller also may use multiple ones of these approaches to produce separate phase measurements, and then may calculate a mean value of the separate measurements as the final phase measurement.

The difference-amplitude method starts with:

$$SV_1(t) = A_1 \sin\left(2\pi ft + \frac{\varphi}{2}\right) \quad and \quad SV_2(t) = A_2 \sin\left(2\pi ft - \frac{\varphi}{2}\right),$$

where $\varphi$ is the phase difference between the sensors. Basic trigonometric identities may be used to define the sum (Sum) and difference (Diff) between the signals as:

$$Sum \equiv SV_1(t) + \frac{A_1}{A_2} SV_2(t) = 2A_1 \cos\frac{\varphi}{2} \cdot \sin 2\pi ft,$$

and

$$Diff \equiv SV_1(t) - \frac{A_1}{A_2} SV_2(t) = 2A_1 \sin\frac{\varphi}{2} \cdot \cos2\pi ft.$$

These functions have amplitudes of $2A_1\cos(\varphi/2)$ and $2A_1\sin(\varphi/2)$, respectively. The controller calculates data sets for Sum and Diff from the data for $SV_1$ and $SV_2$, and then uses one or more of the methods described above to calculate the amplitude of the signals represented by those data sets. The controller then uses the calculated amplitudes to calculate the phase difference, $\varphi$.

As an alternative, the phase difference may be calculated using the function Prod, defined as:

$$Prod \equiv Sum \times Diff = 4A_1^2\cos\frac{\varphi}{2} \cdot \sin\frac{\varphi}{2} \cdot \cos2\pi ft \cdot \sin2\pi ft$$
$$= A_1^2\sin\varphi \cdot \sin4\pi ft,$$

which is a function with amplitude $A^2\sin\varphi$ and frequency 2f. Prod can be generated sample by sample, and $\varphi$ may be calculated from the amplitude of the resulting sine wave.

The calculation of phase is particularly dependent upon the accuracy of previous calculations (i.e., the calculation of the frequencies and amplitudes of $SV_1$ and $SV_2$). The controller may use multiple methods to provide separate (if not entirely independent) estimates of the phase, which may be combined to give an improved estimate.

f. Drive Signal Generation

The controller generates the drive signal by applying a gain to the difference between signals $SV_1$ and $SV_2$. The controller may apply either a positive gain (resulting in positive feedback) or a negative gain (resulting in negative feedback).

In general, the Q of the conduit is high enough that the conduit will resonate only at certain discrete frequencies. For example, the lowest resonant frequency for some conduits is between 65 Hz and 95 Hz, depending on the density of the process fluid, and irrespective of the drive frequency. As such, it is desirable to drive the conduit at the resonant frequency to minimize cycle-to-cycle energy loss. Feeding back the sensor voltage to the drivers permits the drive frequency to migrate to the resonant frequency.

As an alternative to using feedback to generate the drive signal, pure sine waves having phases and frequencies determined as described above may be synthesized and sent to the drivers. This approach offers the advantage of eliminating undesirable high frequency components, such as harmonics of the resonant frequency. This approach also permits compensation for time delays introduced by the analog-to-digital converters, processing, and digital-to-analog converters to ensure that the phase of the drive signal corresponds to the mid-point of the phases of the sensor signals. This compensation may be provided by determining the time delay of the system components and introducing a phase shift corresponding to the time delay.

Another approach to driving the conduit is to use square wave pulses. This is another synthesis method, with fixed (positive and negative) direct current sources being switched on and off at timed intervals to provide the required energy. The switching is synchronized with the sensor voltage phase. Advantageously, this approach does not require digital-to-analog converters.

In general, the amplitude of vibration of the conduit should rapidly achieve a desired value at startup, so as to quickly provide the measurement function, but should do so without significant overshoot, which may damage the meter. The desired rapid startup may be achieved by setting a very high gain so that the presence of random noise and the high Q of the conduit are sufficient to initiate motion of the conduit. In one implementation, high gain and positive feedback are used to initiate motion of the conduit. Once stable operation is attained, the system switches to a synthesis approach for generating the drive signals.

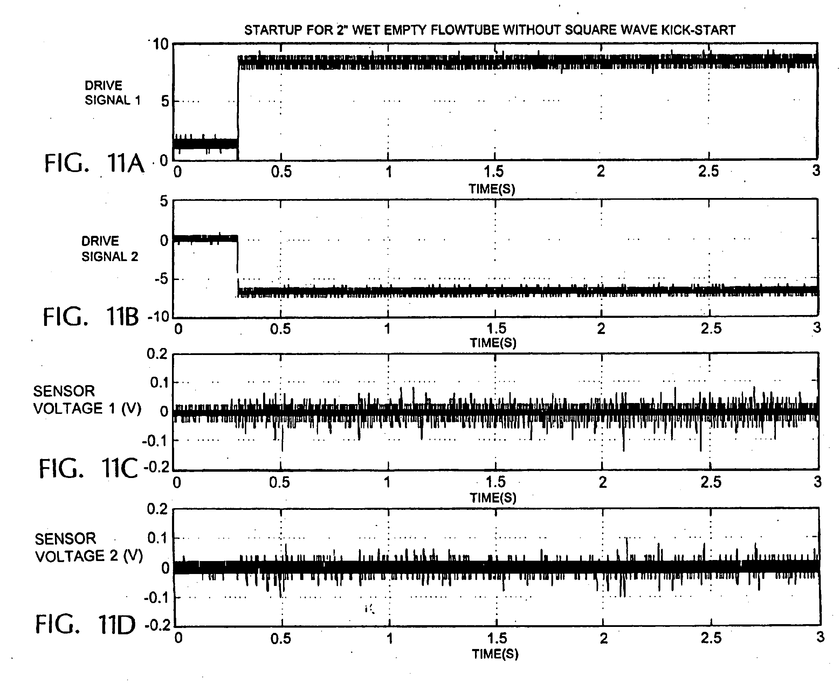

Referring to Figs. 11A-13D, synthesis methods also may be used to initiate conduit motion when high gain is unable to do so. For example, if the DC voltage offset of the sensor voltages is significantly larger than random noise, the application of a high gain will not induce oscillatory motion. This condition is shown in Figs. 11A-11D, in which a high gain is applied at approximately 0.3 seconds. As shown in Figs. 11A and 11B, application of the high gain causes one of the drive signals to assume a large positive value (Fig. 11A) and the other to assume a large negative value (Fig. 11B). The magnitudes of the drive signals vary with noise in the sensor signals (Figs. 11C and 11D). However, the amplified noise is insufficient to vary the sign of the drive signals so as to induce oscillation.

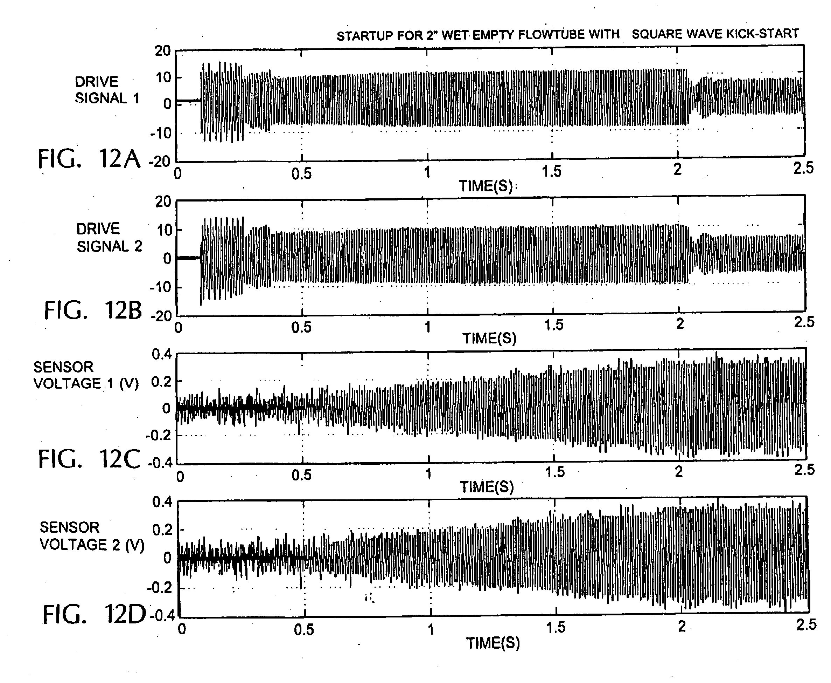

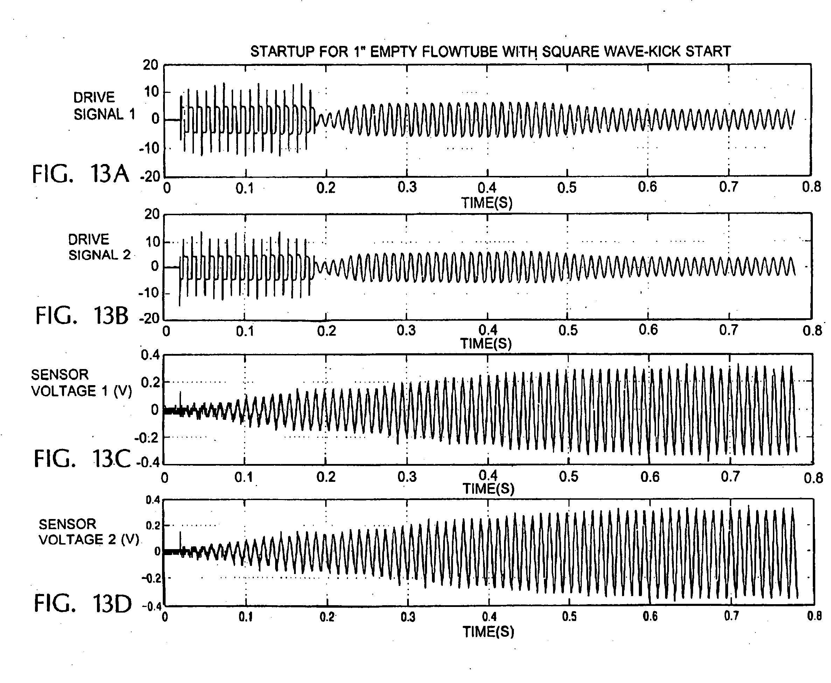

Figs. 12A-12D illustrate that imposition of a square wave over several cycles can reliably cause a rapid startup of oscillation. Oscillation of a conduit having a two inch diameter may be established in approximately two seconds. The establishment of conduit oscillation is indicated by the reduction in the amplitude of the drive signals, as shown in Figs. 12A and 12B. Figs. 13A-13D illustrate that oscillation of a one inch conduit may be established in approximately half a second.

A square wave also may be used during operation to correct conduit oscillation problems. For example, in some circumstances, flow meter conduits have been known to begin oscillating at harmonics of the resonant frequency of the conduit, such as frequencies on the order of 1.5 kHz. When such high frequency oscillations are detected, a square wave having a more desirable frequency may be used to return the conduit oscillation to the resonant frequency.

g. Measurement Generation

The controller digitally generates the mass flow measurement in a manner similar to the approach used by the analog controller. The controller also may generate other measurements, such as density.

In one implementation, the controller calculates the mass flow based on the phase difference in degrees between the two sensor signals (phase_diff), the frequency of oscillation of the conduit (freq), and the process temperature (temp):

$$T_z = \texttt{temp} - T_c,$$

$$\texttt{noneu\_mf} = \tan(\pi * \texttt{phase\_diff}/180),$$

and

$$\texttt{massflow} = 16(MF_1 * T_z^2 + MF_2 * T_z + MF_3) * \texttt{noneu\_mf}/\texttt{freq},$$

noneu_mf/freq,
where $T_c$ is a calibration temperature, $MF_1$-$MF_3$ are calibration constants calculated during a calibration procedure, and noneu_mf is the mass flow in non-engineering units.

The controller calculates the density based on the frequency of oscillation of the conduit and the process temperature:

$$T_z = \texttt{temp} - T_c,$$

$$c_2 = \texttt{freq}^2,$$

and

$$\texttt{density} = (D_1 * T_z^2 + D_2 * T_z + D_3)/c_2 + D_4 * T_z^2,$$

where $D_1$-$D_4$ are calibration constants generated during a calibration procedure.

D. Integration Techniques

Many integration techniques are available, with different techniques requiring different levels of computational effort and providing different levels of accuracy. In the described implementation, variants of Simpson's method are used. The basic technique may be expressed as:

$$\int_{t_n}^{t_{n+2}} y\,dt \approx \frac{h}{3}\left(y_n + 4\,y_{n+1} + y_{n+2}\right),$$

where $t_k$ is the time at sample k, $y_k$ is the corresponding function value, and h is the step length. This rule can be applied repeatedly to any data vector with an odd number of data points (i.e., three or more points), and is equivalent to fitting and integrating a cubic spline to the data points. If the number of data points happens to be even, then the so-called 3/8ths rule can be applied at one end of the interval:

$$\int_{t_n}^{t_{n+3}} y\,dt \approx \frac{3h}{8}\left(y_n + 3\,y_{n+1} + 3\,y_{n+2} + y_{n+3}\right).$$

As stated earlier, each cycle begins and ends at some offset (e.g., start_offset_SV1) from a sampling point. The accuracy of the integration techniques are improved considerably by taking these offsets into account. For example, in an integration of a half cycle sine wave, the areas corresponding to partial samples must be included in the calculations to avoid a consistent underestimate in the result.

Two types of function are integrated in the described calculations: either sine or sine-squared functions. Both are easily approximated close to zero where the end points occur. At the end points, the sine wave is approximately linear and the sine-squared function is approximately quadratic.

In view of these two types of functions, three different integration methods have been evaluated. These are Simpson's method with no end correction, Simpson's method with linear end correction, and Simpson's method with quadratic correction.

The integration methods were tested by generating and sampling pure sine and sine-squared functions, without simulating any analog-to-digital truncation error. Integrals were calculated and the results were compared to the true amplitudes of the signals. The only source of error in these calculations was due to the integration techniques. The results obtained are illustrated in tables A and B.

Table A - Integration of a sine function

| % error (based on 1000 simulations) | Av.Errors (%) | S.D. Error (%) | Max.Error (%) |
| --- | --- | --- | --- |
| Simpson Only | -3.73e-3 | 1.33e-3 | 6.17e-3 |
| Simpson + linear correction | 3.16e-8 | 4.89e-8 | 1.56e-7 |
| Simpson + quadratic correction | 2.00e-4 | 2.19e-2 | 5.18e-1 |

Table B - Integration of a sine-squared function

| % error (based on 1000 simulations | Av.Errors (%) | S.D. Error (%) | Max.Error (%) |
| --- | --- | --- | --- |
| Simpson Only | -2.21e-6 | 1.10e-6 | 4.39e-3 |
| Simpson + linear correction | 2.21e-6 | 6.93e-7 | 2.52e-6 |
| Simpson + quadratic correction | 2.15e-11 | 6.83e-11 | 1.88e-10 |

For sine functions, Simpson's method with linear correction was unbiased with the smallest standard deviation, while Simpson's method without correction was biased to a negative error and Simpson's method with quadratic correction had a relatively high standard deviation. For sine-squared functions, the errors were generally reduced, with the quadratic correction providing the best result. Based on these evaluations, linear correction is used when integrating sine functions and quadratic correction is used when integrating sine-squared functions.

E. Synchronous Modulation Technique

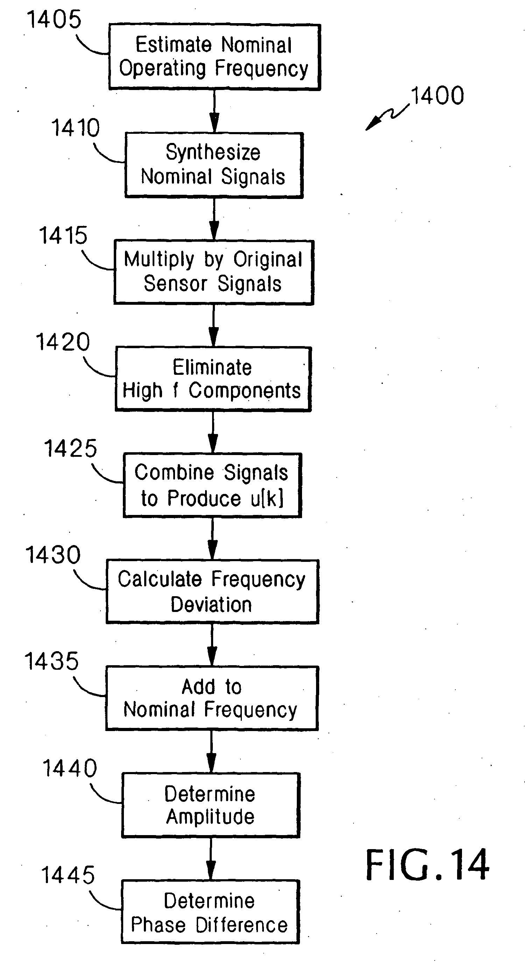

Fig. 14 illustrates an alternative procedure 1400 for processing the sensor signals. Procedure 1400 is based on synchronous modulation, such as is described by Denys et al., in "Measurement of Voltage Phase for the French Future Defence Plan Against Losses of Synchronism", IEEE Transactions on Power Delivery, 7(1), 62-69, 1992 and by Begovic et al. in "Frequency Tracking in Power Networks in the Presence of Harmonics", IEEE Transactions on Power Delivery, 8(2), 480-486, 1993.

First, the controller generates an initial estimate of the nominal operating frequency of the system (step 1405). The controller then attempts to measure the deviation of the frequency of a signal x[k] (e.g., $SV_1$) from this nominal frequency:

$$x[k] = A\sin[(\omega_0 + \Delta\omega)kh + \phi] + \varepsilon(k) ,$$

where A is the amplitude of the sine wave portion of the signal, $\omega_0$ is the nominal frequency (e.g., 88 Hz), $\Delta\omega$ is the deviation from the nominal frequency, h is the sampling interval, $\phi$ is the phase shift, and $\varepsilon(k)$ corresponds to the added noise and harmonics.

To generate this measurement, the controller synthesizes two signals that oscillate at the nominal frequency (step 1410). The signals are phase shifted by 0 and $\pi/2$ and have amplitude of unity. The controller multiplies each of these signals by the original signal to produce signals $y_1$ and $y_2$ (step 1415) :

$$y_1 = x[k]\cos(\omega_0 kh) = \frac{A}{2}\sin[(2\omega_0 + \Delta\omega)kh + \phi] + \frac{A}{2}\sin(\Delta\omega kh + \phi) ,$$

and

$$y_2 = x[k]\sin(\omega_0 kh) = \frac{A}{2}\cos[(2\omega_0 + \Delta\omega)kh + \phi] + \frac{A}{2}\cos(\Delta\omega kh + \phi) ,$$

where the first terms of $y_1$ and $y_2$ are high frequency (e.g., 176 Hz) components and the second terms are low frequency (e.g., 0 Hz) components. The controller then eliminates the high frequency components using a low pass filter (step 1420):

$$y_1' = \frac{A}{2}\sin(\Delta\omega kh + \phi) + \varepsilon_1[k] ,$$

and

$$y_2' = \frac{A}{2}\cos(\Delta\omega kh + \phi) + \varepsilon_2[k] ,$$

where $\varepsilon_1[k]$ and $\varepsilon_2[k]$ represent the filtered noise from the original signals. The controller combines these signals to produce u[k] (step 1425):

$$\begin{aligned} u[k] &= (y_1'[k] + jy_2'[k])(y_1'[k-1] + jy_2'[k-1]) \\ &= u_1[k] + ju_2[k] \\ &= \frac{A^2}{4}\cos(\Delta\omega h) + j\frac{A^2}{4}\sin(\Delta\omega h) , \end{aligned}$$

which carries the essential information about the frequency deviation. As shown, $u_1[k]$ represents the real component of u[k], while $u_2[k]$ represents the imaginary component.

The controller uses the real and imaginary components of u[k] to calculate the frequency deviation, $\Delta f$ (step 1430):

The controller then adds the frequency deviation to the nominal frequency (step 1435) to give the actual

$$\Delta f = \frac{1}{h} \arctan \frac{u_2[k]}{u_1[k]} .$$

frequency:

$$f = \Delta f + f_0 .$$

The controller also uses the real and imaginary components of u[k] to determine the amplitude of the original signal. In particular, the controller determines the amplitude as (step 1440):

$$A^2 = 4\sqrt{u_1^2[k] + u_2^2[k]} .$$

Next, the controller determines the phase difference between the two sensor signals (step 1445). Assuming that any noise ($\varepsilon_1[k]$ and $\varepsilon_2[k]$) remaining after application of the low pass filter described below will be negligible, noise free versions of $y_1'[k]$ and $y_2'[k]$ ($y_1^*[k]$ and $y_2^*[k]$) may be expressed as:

$$y_1^{\bullet}[k] = \frac{A}{2} \sin(\Delta \omega k h + \phi) ,$$

and

$$y_2^{\bullet}[k] = \frac{A}{2} \cos(\Delta \omega k h - \phi) .$$

Multiplying these signals together gives:

$$v = y_1^{\bullet} y_2^{\bullet} = \frac{A^2}{8} [\sin(2\phi) + \sin(2\Delta \omega k h)] .$$

Filtering this signal by a low pass filter having a cutoff frequency near 0 Hz removes the unwanted component and leaves:

$$v' = \frac{A^2}{8} \sin(2\phi) ,$$

from which the phase difference can be calculated as:

$$\phi = \frac{1}{2} \arcsin \frac{8v'}{A^2} .$$

This procedure relies on the accuracy with which the operating frequency is initially estimated, as the procedure measures only the deviation from this frequency. If a good estimate is given, a very narrow filter can be used, which makes the procedure very accurate. For typical flowmeters, the operating frequencies are around 95 Hz (empty) and 82 Hz (full). A first approximation of half range (88 Hz) is used, which allows a low-pass filter cut-off of 13 Hz. Care must be taken in selecting the cut-off frequency as a very small cut-off frequency can attenuate the amplitude of the sine wave.

The accuracy of measurement also depends on the filtering characteristics employed. The attenuation of the filter in the dead-band determines the amount of harmonics rejection, while a smaller cutoff frequency improves the noise rejection.

F. Meter with PI Control

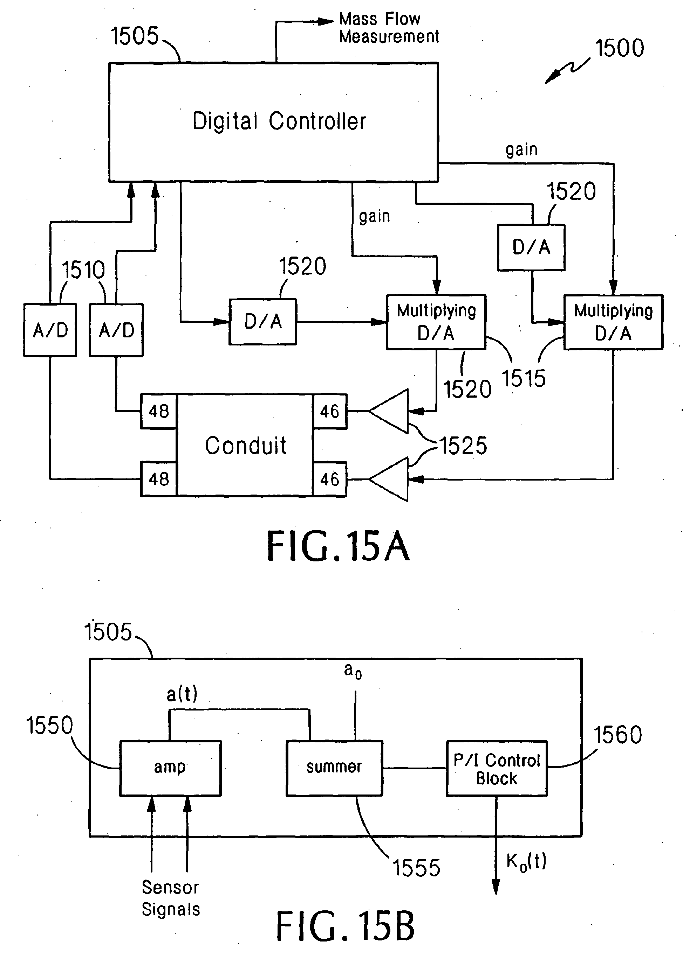

Figs. 15A and 15B illustrate a meter 1500 having a controller 1505 that uses another technique to generate the signals supplied to the drivers. Analog-to-digital converters 1510 digitize signals from the sensors 48 and provide the digitized signals to the controller 1505. The controller 1505 uses the digitized signals to calculate gains for each driver, with the gains being suitable for generating desired oscillations in the conduit. The gains may be either positive or negative. The controller 1505 then supplies the gains to multiplying digital-to-analog converters 1515. In other implementations, two or more multiplying digital-to-analog converters arranged in series may be used to implement a single, more sensitive multiplying digital-to-analog converter.

The controller 1505 also generates drive signals using the digitized sensor signals. The controller 1505 provides these drive signals to digital-to-analog converters 1520 that convert the signals to analog signals that are supplied to the multiplying digital-to-analog converters 1515.

The multiplying digital-to-analog converters 1515 multiply the analog signals by the gains from the controller 1505 to produce signals for driving the conduit. Amplifiers 1525 then amplify these signals and supply them to the drivers 46. Similar results could be obtained by having the controller 1505 perform the multiplication performed by the multiplying digital-to-analog converter, at which point the multiplying digital-to-analog converter could be replaced by a standard digital-to-analog converter.

Fig. 15B illustrates the control approach in more detail. Within the controller 1505, the digitized sensor signals are provided to an amplitude detector 1550, which determines a measure, $a(t)$, of the amplitude of motion of the conduit using, for example, the technique described above. A summer 1555 then uses the amplitude $a(t)$ and a desired amplitude $a_0$ to calculate an error $e(t)$ as:

$$e(t) = a_0 - a(t) .$$

The error $e(t)$ is used by a proportional-integral ("PI") control block 1560 to generate a gain $K_0(t)$. This gain is multiplied by the difference of the sensor signals to generate the drive signal. The PI control block permits high speed response to changing conditions. The amplitude detector 1550, summer 1555, and PI control block 1560 may be implemented as software processed by the controller 1505, or as separate circuitry.

1. Control Procedure

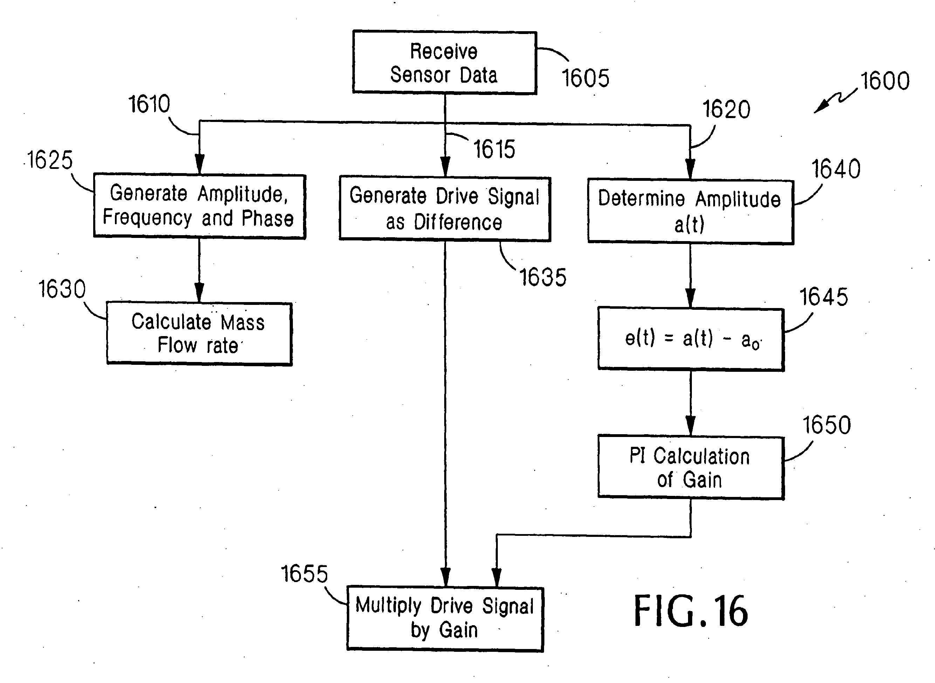

The meter 1500 operates according to the procedure 1600 illustrated in Fig. 16. Initially, the controller receives digitized data from the sensors (step 1605). Thereafter, the procedure 1600 includes three parallel branches: a measurement branch 1610, a drive signal generation branch 1615, and a gain generation branch 1620.

In the measurement branch 1610, the digitized sensor data is used to generate measurements of amplitude, frequency, and phase, as described above (step 1625). These measurements then are used to calculate the mass flow rate (step 1630) and other process variables. In general, the controller 1505 implements the measurement branch 1610.

In the drive signal generation branch 1615, the digitized signals from the two sensors are differenced to generate the signal (step 1635) that is multiplied by the gain to produce the drive signal. As described above, this differencing operation is performed by the controller 1505. In general, the differencing operation produces a weighted difference that accounts for amplitude differences between the sensor signals.

In the gain generation branch 1620, the gain is calculated using the proportional-integral control block. As noted above, the amplitude, $a(t)$, of motion of the conduit is determined (step 1640) and subtracted from the desired amplitude $a_0$ (step 1645) to calculate the error $e(t)$. Though illustrated as a separate step, generation of the amplitude, $a(t)$, may correspond to generation of the amplitude in the measurement generation step 1625. Finally, the PI control block uses the error $e(t)$ to calculate the gain (step 1650).

The calculated gain is multiplied by the difference signal to generate the drive signal supplied to the drivers (step 1655). As described above, this multiplication operation is performed by the multiplying D/A converter or may be performed by the controller.

2. <u>PI Control Block</u>

The objective of the PI control block is to sustain in the conduit pure sinusoidal oscillations having an amplitude $a_0$. The behavior of the conduit may be modelled as a simple mass-spring system that may be expressed as:

$$\ddot{x} + 2\zeta\omega_n\dot{x} + \omega_n^2 x = 0 \ ,$$

where x is a function of time and the displacement of the mass from equilibrium, $\omega_n$ is the natural frequency, and $\zeta$ is a damping factor, which is assumed to be small (e.g., 0.001). The solution to this force equation as a function of an output y(t) and an input i(t) is analogous to an electrical network in which the transfer function between a supplied current, i(s), and a sensed output voltage, y(s), is:

$$\frac{y(s)}{i(s)} = \frac{ks}{s^2 + 2\zeta\omega_n s + \omega_n^2} \ .$$

To achieve the desired oscillation in the conduit, a positive-feedback loop having the gain $K_0(t)$ is automatically adjusted by a 'slow' outer loop to give:

$$\ddot{x} + (2\zeta\omega_n - kK_0(t))\dot{x} + \omega_n^2 x = 0 \ .$$

The system is assumed to have a "two-time-scales" property, which means that variations in $K_0(t)$ are slow .enough that solutions to the equation for x provided above can be obtained by assuming constant damping.

A two-term PI control block that gives zero steady-state error may be expressed as:

$$K_0(t) = K_p e(t) + K_i \int_0^t e(t)\,dt \ ,$$

where the error, e(t) (i.e., $a_0$-a(t)), is the input to the PI control block, and $K_p$ and $K_i$ are constants. In one implementation, with $a_0 = 10$, controller constants of $K_p$=0.02 and $K_i$=0.0005 provide a response in which oscillations build up quickly. However, this PI control block is nonlinear, which may result in design and operational difficulties.

A linear model of the behavior of the oscillation amplitude may be derived by assuming that x(t) equals $Ae^{j\omega t}$, which results in:

$$\dot{x} = \dot{A}e^{j\omega t} + j\omega e^{j\omega t},$$

and

$$\ddot{x} = [\ddot{A} - \omega^2 A]e^{j\omega t} + 2j\omega\dot{A}e^{j\omega t} \ .$$

Substituting these expressions into the expression for oscillation of the loop, and separating into real and imaginary terms, gives:

$$j\omega\{2\dot{A} + (2\zeta\omega_n - kK_o)A\} = 0 \ ,$$

and

$$\ddot{A} + (2\zeta\omega_n - kK_o)\dot{A} + (\omega_n^2 - \omega^2)A = 0 \; .$$

A(t) also may be expressed as:

$$\frac{\dot{A}}{A} = -\zeta\omega_n + \frac{kK_o}{2}t \; .$$

A solution of this equation is:

$$\log A(t) = \left(-\zeta\omega_n + \frac{kK_o}{2}\right)t \; .$$

Transforming variables by defining a(t) as being equal to log A(t), the equation for A(t) can be written as:

$$\frac{da}{dt} = -\zeta\omega_n + \frac{kK_o(t)}{2} \; ,$$

where $K_o$ is now explicitly dependent on time. Taking Laplace transforms results in:

$$a(s) = \frac{-\zeta\omega_n - kK_o(s)/2}{s} \; ,$$

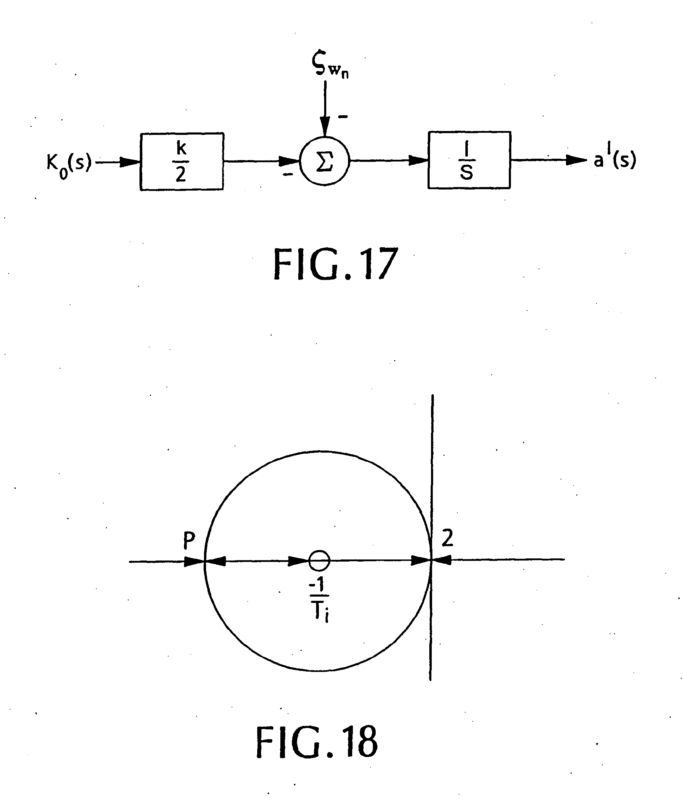

which can be interpreted in terms of transfer-functions as in Fig. 17. This figure is of particular significance for the design of controllers, as it is linear for all $K_o$ and a, with the only assumption being the two-time-scales property. The performance of the closed-loop is robust with respect to this assumption so that fast responses which are attainable in practice can be readily designed.

From Fig. 17, the term $\zeta\omega_n$, is a "load disturbance" that needs to be eliminated by the controller (i.e., $kK_o/2$ must equal $\zeta\omega_n$ for a(t) to be constant). For zero steady-state error this implies that the outer-loop controller must have an integrator (or very large gain). As such, an appropriate PI controller, C(s), may be assumed to be $K_p(1+1/sT_i)$, where $T_i$ is a constant. The proportional term is required for stability. The term $\zeta\omega_n$, however, does not affect stability or controller design, which is based instead on the open-loop transfer function:

$$C(s)G(s) = \frac{a(s)}{e(s)} = \frac{kK_p(1+sT_i)}{2s^2 T_i} = \frac{kK_p/2\,(s+1/T_i)}{s^2} \; .$$

The root locus for varying $K_p$ is shown in Fig. 18. For small $K_p$, there are slow underdamped roots. As $K_p$ increases, the roots become real at the point P for which the controller gain is $K_p = 8/(kT_i)$. Note in particular that the theory does not place any restriction upon the choice of $T_i$. Hence the response can, in principle, be made critically damped and as fast as desired by appropriate choices of $K_p$ and $T_i$.

Although the poles are purely real at point P, this does not mean there is no overshoot in the closed-loop step response. This is most easily seen by inspecting the transfer function between the desired value, $a_0$, and the error e:

$$\frac{e(s)}{a_0(s)} = \frac{s^2}{s^2 + 0.5kK_p(s+1/T_i)} = \frac{s^2}{p_2(s)} \; ,$$

where $p_2$ is a second-order polynomial. With a step input, $a_0(s) = \alpha/s$, the response can be written as $\alpha p'(t)$, where $p(t)$ is the inverse transform of $1/p_2(s)$ and equals $a_1 \exp(-\lambda_1 t) + a_2 \exp(-\lambda_2 t)$. The signal $p(t)$ increases and then decays to zero so that $e(t)$, which is proportional to $p'$, must change sign, implying overshoot in $a(t)$. The set-point $a_0$ may be prefiltered to give a pseudo set-point $a_0^*$ :

$$a_0^{\bullet}(s) = \frac{1}{1 + sT_i} a_0(s),$$

where $T_i$ is the known controller parameter. With this prefilter, real controller poles should provide overshoot-free step responses. This feature is useful as there may be physical constraints on overshoot (e.g., mechanical interference or overstressing of components).

The root locus of Fig. 18 assumes that the only dynamics are from the inner-loop's gain/log-amplitude transfer function (Fig. 16) and the outer-loop's PI controller C(s) (i.e., that the log-amplitude $a = \log A$ is measured instantaneously). However, A is the amplitude of an oscillation which might be growing or decaying and hence cannot in general be measured without taking into account the underlying sinusoid. There are several possible methods for measuring A, in addition to those discussed above. Some are more suitable for use in quasi-steady conditions. For example, a phase-locked loop in which a sinusoidal signal $s(t) = \sin(\omega_n t + \phi_0)$ locks onto the measured waveform $y(t) = A(t)\sin(\omega_n t + \phi_1)$ may be employed. Thus, a measure of the amplitude $a = \log A$ is given by dividing these signals (with appropriate safeguards and filters). This method is perhaps satisfactory near the steady-state but not for start-up conditions before there is a lock.

Another approach uses a peak-follower that includes a zero-crossing detector together with a peak-following algorithm implemented in the controller. Zero-crossing methods, however, can be susceptible to noise. In addition, results from a peak-follower are available only every half-cycle and thereby dictate the sample interval for controller updates.

Finally, an AM detector may be employed. Given a sine wave $y(t) = A\sin\omega_n t$, an estimate of A may be obtained from $\hat{A}_1 0.5\pi F\{\text{abs}(y)\}$, where $F\{\}$ is a suitable low-pass filter with unity DC gain. The AM detector is the simplest approach. Moreover, it does not presume that there are oscillations of any particular frequency, and hence is usable during startup conditions. It suffers from a disadvantage that there is a leakage of harmonics into the inner loop which will affect the spectrum of the resultant oscillations. In addition, the filter adds extra dynamics into the outer loop such that compromises need to be made between speed of response and spectral purity. In particular, an effect of the filter is to constrain the choice of the best $T_i$.

The Fourier series for abs(y) is known to be:

$$A \, \text{abs}(\sin \omega_n t) = \frac{2A}{\pi} \left[ 1 + \frac{2}{3} \cos 2\omega_n t - \frac{2}{15} \cos 4\omega_n t + \frac{2}{35} \cos 6\omega_n t + \cdots \right]$$

As such, the output has to be scaled by $\pi/2$ to give the correct DC output A, and the (even) harmonic terms $a_k \cos 2k\omega_n t$ have to be filtered out. As all the filter needs to do is to pass the DC component through and reduce all other frequencies, a "brick-wall" filter with a cut-off below $2\omega_n$ is sufficient. However, the dynamics of the filter will affect the behavior of the closed-loop. A common choice of filter is in the Butterworth form. For example, the third-order low-pass filter with a design break-point frequency $\omega_b$ is:

$$F(s) = \frac{1}{1 + 2s/\omega_b + 2s^2/\omega_b^2 + s^3/\omega_b^3}.$$

At the design frequency the response is 3dB down; at $2\omega_b$ it is -18dB (0.12), and at $4\omega_b$ it is -36dB (0.015) down. Higher-order Butterworth filters have a steeper roll-off, but most of their poles are complex and may affect negatively the control-loop's root locus.

G. Zero Offset Compensation

As noted above, zero offset may be introduced into a sensor voltage signal by drift in the pre-amplification circuitry and by the analog-to-digital converter. Slight differences in the pre-amplification gains for positive and negative voltages due to the use of differential circuitry may worsen the zero offset effect. The errors vary between transmitters, and with transmitter temperature and component wear.

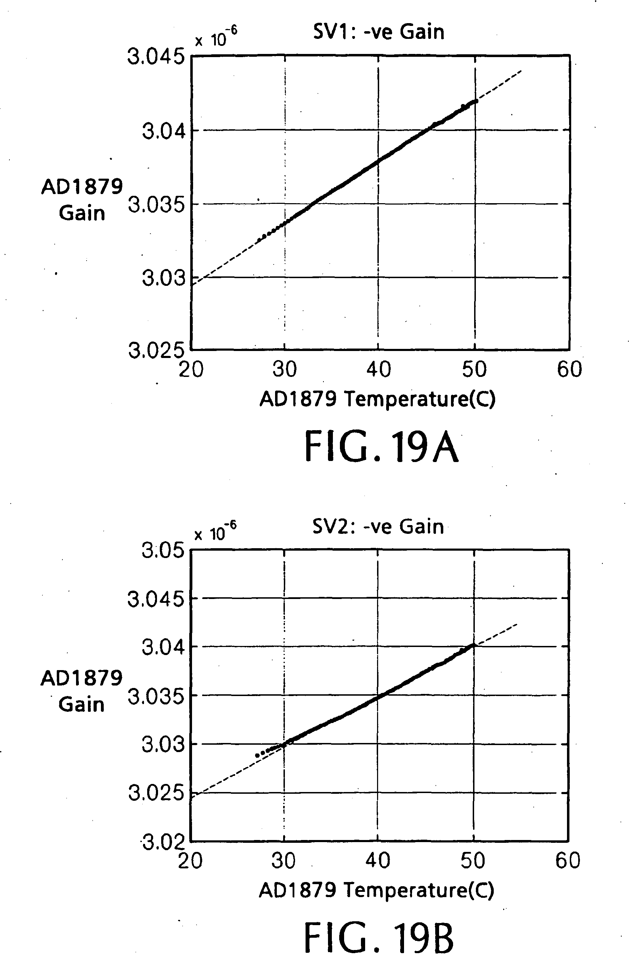

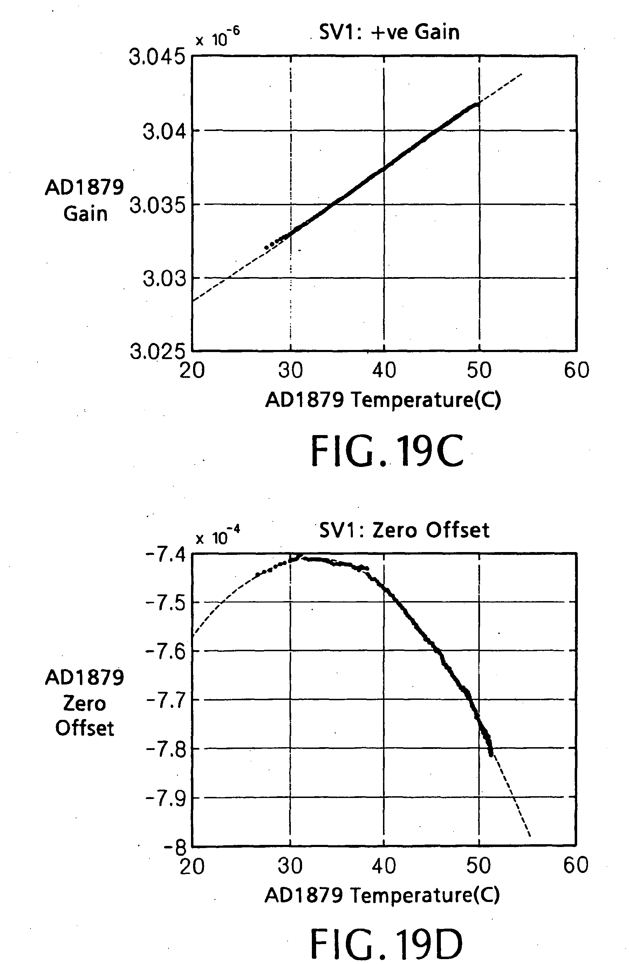

Audio quality (i.e., relatively low cost) analog-to-digital converters may be employed for economic reasons. These devices are not designed with DC offset and amplitude stability as high priorities. Figs. 19A-19D show how offset and positive and negative gains vary with chip operating temperature for one such converter (the AD1879 converter). The repeatability of the illustrated trends is poor, and even allowing for temperature compensation based on the trends, residual zero offset and positive/negative gain mismatch remain.

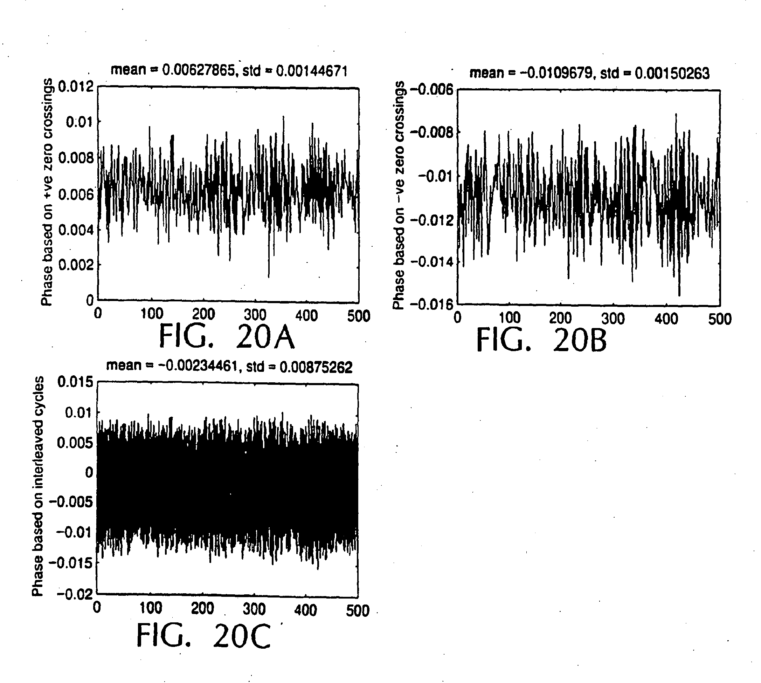

If phase is calculated using the time difference between zero crossing points on the two sensor voltages, DC offset may lead to phase errors. This effect is illustrated by Figs 20A-20C. Each graph shows the calculated phase offset as measured by the digital transmitter when the true phase offset is zero (i.e., at zero flow).

Fig. 20A shows phase calculated based on whole cycles starting with positive zero-crossings. The mean value is 0.00627 degrees.

Fig. 20B shows phase calculated starting with negative zero-crossings. The mean value is 0.0109 degrees.

Fig. 20C shows phase calculated every half-cycle. Fig. 20C interleaves the data from Figs. 20A and 20B. The average phase (-0.00234) is closer to zero than in Figs. 20A and 20B, but the standard deviation of the signal is about six times higher.

More sophisticated phase measurement techniques, such as those based on Fourier methods, are immune to DC offset. However, it is desirable to eliminate zero offset even when those techniques are used, since data is processed in whole-cycle packets delineated by zero crossing points. This allows simpler analysis of the effects of, for example, amplitude modulation on apparent phase and frequency. In addition, gain mismatch between positive and negative voltages will introduce errors into any measurement technique.

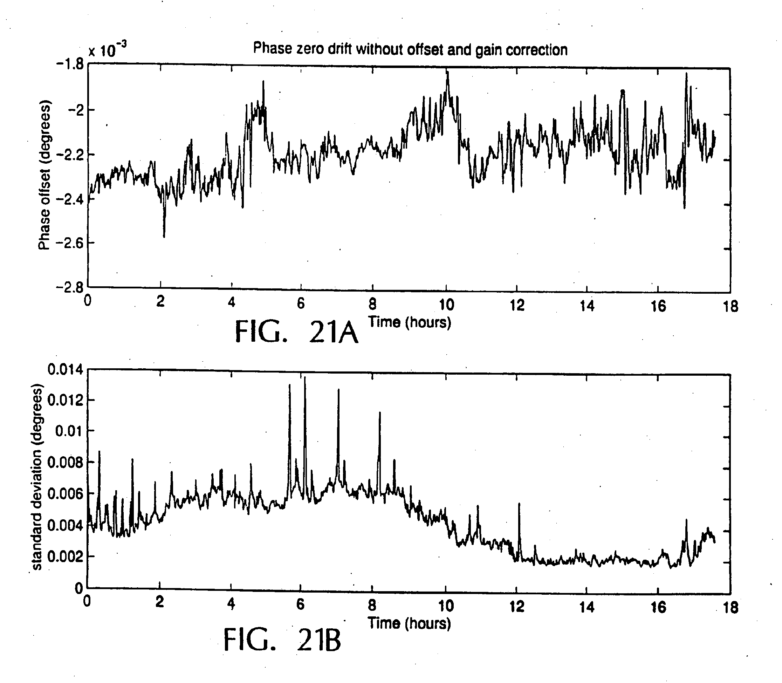

The zero-crossing technique of phase detection may be used to demonstrate the impact of zero offset and gain mismatch error, and their consequent removal. Figs. 21A and 21B illustrate the long term drift in phase with zero flow. Each point represents an average over one minute of live data. Fig. 21A shows the average phase, and Fig. 21B shows the standard deviation in phase. Over several hours, the drift is significant. Thus, even if the meter were zeroed every day, which in many applications would be considered an excessive maintenance requirement, there would still be considerable phase drift.

1. <u>Compensation Technique</u>

A technique for dealing with voltage offset and gain mismatch uses the computational capabilities of the digital transmitter and does not require a zero flow condition. The technique uses a set of calculations each cycle which, when averaged over a reasonable period (e.g., 10,000 cycles), and excluding regions of major change (e.g., set point change, onset of aeration), converge on the desired zero offset and gain mismatch compensations.

Assuming the presence of up to three higher harmonics, the desired waveform for a sensor voltage SV(t) is of the form:

$$SV(t) = A_1 \sin(\omega t) + A_2 \sin(2\omega t) + A_3 \sin(3\omega t) + A_4 \sin(4\omega t)$$

where $A_1$ designates the amplitude of the fundamental frequency component and $A_2$-$A_4$ designate the amplitudes of the three harmonic components. However, in practice, the actual waveform is adulterated with zero offset $Z_o$ (which has a value close to zero) and mismatch between the negative and positive gains $G_n$ and $G_p$. Without any loss of generality, it can be assumed that $G_p$ equals one and that $G_n$ is given by:

$$G_n = 1 + \varepsilon_G,$$

where $\varepsilon_G$ represents the gain mismatch.

The technique assumes that the amplitudes $A_i$ and the frequency $\omega$ are constant. This is justified because estimates of $Z_o$ and $\varepsilon_G$ are based on averages taken over many cycles (e.g., 10,000 interleaved cycles occurring in about 1 minute of operation). When implementing the technique, the controller tests for the presence of significant changes in frequency and amplitude to ensure the validity of the analysis. The presence of the higher harmonics leads to the use of Fourier techniques for extracting phase and amplitude information for specific harmonics. This entails integrating SV(t) and multiplying by a modulating sine or cosine function.

The zero offset impacts the integral limits, as well as the functional form. Because there is a zero offset, the starting point for calculation of amplitude and phase will not be at the zero phase point of the periodic waveform SV(t). For zero offset $Z_o$, the corresponding phase offset is, approximately,

$$\varphi_{Z_o} = -\sin\left(\frac{Z_o}{A_1}\right).$$

For small phase, $\varphi_{Z_o} = -\frac{Z_o}{A_1}$, with corresponding time delay $t_{Z_o} = \frac{\varphi_{Z_o}}{\omega}$.

The integrals are scaled so that the limiting value (i.e., as $Z_o$ and $\varepsilon_G$ approach zero) equals the amplitude of the relevant harmonic. The first two integrals of interest are:

$$I_{1Ps} = \frac{2\omega}{\pi} \int_{t_{Z_o}}^{\frac{\pi}{\omega}+t_{Z_o}} (SV(t) + Z_o) \cdot \sin\left[\omega(t - t_{Z_o})\right] dt,$$

and These integrals represent what in practice is calculated during a normal Fourier analysis of the sensor voltage data. The subscript 1 indicates the first harmonic, N

$$I_{1Ns} = \frac{2\omega}{\pi}(1 + \varepsilon_G) \int_{\frac{\pi}{\omega}+t_{Z_o}}^{2\frac{\pi}{\omega}+t_{Z_o}} (SV(t) + Z_o) \cdot \sin\left[\omega(t - t_{Z_o})\right] dt.$$

and P indicate, respectively, the negative or positive half cycle, and s and c indicate, respectively, whether a sine or a cosine modulating function has been used.

Strictly speaking, the mid-zero crossing point, and hence the corresponding integral limits, should be given by $\pi/\omega - t_{Z_o}$, rather than $\pi/\omega + t_{Z_o}$. However, the use of the exact mid-point rather than the exact zero crossing point leads to an easier analysis, and better numerical behavior (due principally to errors in the location of the zero crossing point). The only error introduced by using the exact mid-point is that a small section of each of the above integrals is multiplied by the wrong gain (1 instead of $1 + \varepsilon_G$ and vice versa). However, these errors are of order $Z_o^2 \varepsilon_G$ and are considered negligible.

Using computer algebra and assuming small $Z_o$ and $\varepsilon_G$, first order estimates for the integrals may be derived as:

$$I_{1Ps\_est} = A_1 + \frac{4}{\pi} Z_o\left[1 + \frac{2}{3}\frac{A_2}{A_1} + \frac{4}{15}\frac{A_4}{A_1}\right],$$

and

$$I_{1Ns\_est} = (1 + \varepsilon_G)\left[A_1 - \frac{4}{\pi} Z_o\left[1 + \frac{2}{3}\frac{A_2}{A_1} + \frac{4}{15}\frac{A_4}{A_1}\right]\right].$$

Useful related functions including the sum, difference, and ratio of the integrals and their estimates may be determined. The sum of the integrals may be expressed as:

$$Sum_{1s} = (I_{1Ps} + I_{1Ns}),$$

while the sum of the estimates equals:

$$Sum_{1s\_est} = A_1\left(2 + \varepsilon_G\right) - \frac{4}{\pi} Z_o \varepsilon_G\left[1 + \frac{2}{3}\frac{A_2}{A_1} + \frac{4}{15}\frac{A_4}{A_1}\right].$$

Similarly, the difference of the integrals may be expressed as:

$$Diff_{1s} = I_{1Ps} - I_{1Ns},$$

while the difference of the estimates is:

$$Diff_{1s\_est} = -A_1 \varepsilon_G + \frac{4}{\pi} Z_o\left(2 + \varepsilon_G\right)\left[1 + \frac{2}{3}\frac{A_2}{A_1} + \frac{4}{15}\frac{A_4}{A_1}\right].$$

Finally, the ratio of the integrals is:

$$Ratio_{1s} = \frac{I_{1Ps}}{I_{1Ns}},$$

while the ratio of the estimates is:

$$Ratio_{1s\_est} = \frac{1}{1 + \varepsilon_G}\left[1 + Z_o\left[\frac{8}{15}\frac{15A_1 + 10A_2 + 4A_4}{\pi A_1^2}\right]\right].$$

Corresponding cosine integrals are defined as:

$$I_{1Pc} = \frac{2\omega}{\pi} \cdot \int_{t_{z_o}}^{\frac{\pi}{\omega} + t_{z_o}} (SV(t) + Z_o) \cos\left[\omega\left(t - t_{z_o}\right)\right] dt,$$

and

$$I_{1Nc} = \frac{2\omega}{\pi} (1 + \varepsilon_G) \int_{\frac{\pi}{\omega} + t_{z_o}}^{\frac{2\pi}{\omega} + t_{z_o}} (SV(t) + Z_o) \cos\left[\omega\left(t - t_{z_o}\right)\right] dt,$$

with estimates:
and sums:

$$I_{1Pc\_est} = -Z_o + \frac{40A_2 + 16A_4}{15\pi},$$

and

$$I_{1Nc\_est} = (1 + \varepsilon_G)\left[Z_o + \frac{40A_2 + 16A_4}{15\pi}\right],$$

$$Sum_{1c} = I_{1Pc} + I_{1Nc},$$

and

$$Sum_{1c\_est} = \varepsilon_G\left[Z_o + \frac{40A_2 + 16A_4}{15\pi}\right].$$

Second harmonic integrals are:

$$I_{2Ps} = \frac{2\omega}{\pi} \int_{t_{z_o}}^{\frac{\pi}{\omega} + t_{z_o}} (SV(t) + Z_o)\sin\left[2\omega(t - t_{z_o})\right]dt,$$

and

$$I_{2Ns} = \frac{2\omega}{\pi}(1 + \varepsilon_G) \int_{\frac{\pi}{\omega} + t_{z_o}}^{\frac{2\pi}{\omega} + t_{z_o}} (SV(t) + Z_o)\sin\left[2\omega(t - t_{z_o})\right]dt,$$

with estimates:

$$I_{2Ps\_est} = A_2 + \frac{8}{15\pi}Z_o\left[-5 + 9\frac{A_3}{A_1}\right],$$

and

$$I_{2Ps\_est} = (1 + \varepsilon_G)\left[A_2 - \frac{8}{15\pi}Z_o\left[-5 + 9\frac{A_3}{A_1}\right]\right],$$

and sums:

$$Sum_{2s} = I_{2Ps} + I_{2Ns},$$

and

$$Sum_{2Ps\_est} = A_2 (2 + \varepsilon_G) - \frac{8}{15\pi} \varepsilon_G Z_o \left[ -5 + 9 \frac{A_3}{A_1} \right].$$

The integrals can be calculated numerically every cycle. As discussed below, the equations estimating the values of the integrals in terms of various amplitudes and the zero offset and gain values are rearranged to give estimates of the zero offset and gain terms based on the calculated integrals.

2. Example

The accuracy of the estimation equations may be illustrated with an example. For each basic integral, three values are provided: the "true" value of the integral (calculated within Mathcad using Romberg integration), the value using the estimation equation, and the value calculated by the digital transmitter operating in simulation mode, using Simpson's method with end correction.

Thus, for example, the value for $I_{1Ps}$ calculated according to:

$$I_{1Ps} = \frac{2\omega}{\pi} \int_{t_{z_o}}^{\frac{\pi}{\omega} + t_{z_o}} (SV(t) + Z_o) \sin\left[\omega (t - t_{z_o})\right] dt$$

is 0.101353, while the estimated value ($I_{1Ps\_est}$) calculated as:

$$I_{1Ps\_est} = A_1 + \frac{4}{\pi} Z_o \left[ 1 + \frac{2}{3} \frac{A_2}{A_1} + \frac{4}{15} \frac{A_4}{A_1} \right]$$

is 0.101358. The value calculated using the digital transmitter in simulation mode is 0.101340. These calculations use the parameter values illustrated in Table C.

Table C

| Parameter | Value | Comment |
|---|---|---|
| $\omega$ | $160\pi$ | This corresponds to frequency = 80Hz, a typical value. |
| $A_1$ | 0.1 | This more typically is 0.3, but it could be smaller with aeration. |
| $A_2$ | 0.01 | This more typically is 0.005, but it could be larger with aeration. |
| $A_3$ and $A_4$ | 0.0 | The digital Coriolis simulation mode only offers two harmonics, so these higher harmonics are ignored. However, they are small (<0.002). |
| $Z_o$ | 0.001 | Experience suggests that this is a large value for zero offset. |
| $\varepsilon_G$ | 0.001 | Experience suggests this is a large value for gain mismatch. |

The exact, estimate and simulation results from using these parameter values are illustrated in Table D.

Table D

| Integral | 'Exact' Value | Estimate | Digital Coriolis Simulation |
|---|---|---|---|
| $I_{1Ps}$ | 0.101353 | 0.101358 | 0.101340 |
| $I_{1Ns}$ | 0.098735 | 0.098740 | 0.098751 |
| $I_{1Pc}$ | 0.007487 | 0.007488 | 0.007500 |
| $I_{1Nc}$ | -0.009496 | -0.009498 | -0.009531 |
| $I_{2Ps}$ | 0.009149 | 0.009151 | 0.009118 |
| $I_{2Ns}$ | 0.010857 | 0.010859 | 0.010885 |

Thus, at least for the particular values selected, the estimates given by the first order equations are extremely accurate. As $Z_o$ and $\varepsilon_G$ approach zero, the errors in both the estimate and the simulation approach zero.

3. Implementation

The first order estimates for the integrals define a series of non-linear equations in terms of the amplitudes of the harmonics, the zero offset, and the gain mismatch. As the equations are non-linear, an exact solution is not readily available. However, an approximation followed by corrective iterations provides reasonable convergence with limited computational overhead.

Conduit-specific ratios may be assumed for $A_1$-$A_4$. As such, no attempt is made to calculate all of the amplitudes $A_1$-$A_4$. Instead, only $A_1$ and $A_2$ are estimated using the integral equations defined above. Based on experience of the relative amplitudes, $A_3$ may be approximated as $A_2/2$, and $A_4$ may be approximated as $A_2/10$.

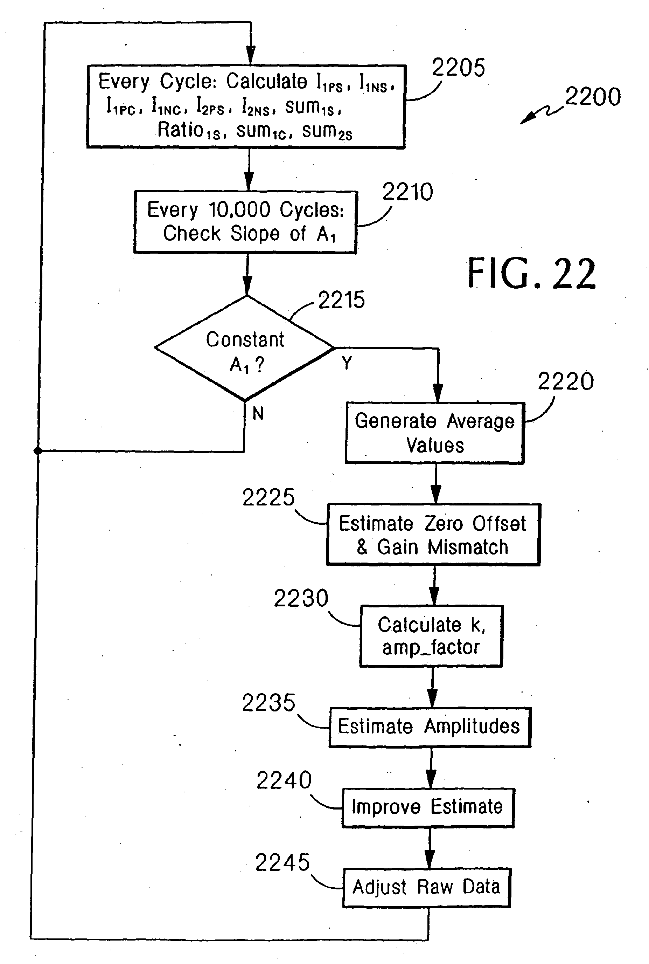

The zero offset compensation technique may be implemented according to the procedure 2200 illustrated in Fig. 22. During each cycle, the controller calculates the integrals $I_{1Ps}$, $I_{1Ns}$, $I_{1Pc}$, $I_{1Nc}$, $I_{2Ps}$, $I_{2Ns}$ and related functions $sum_{1s}$, $ratio_{1s}$, $sum_{1c}$ and $sum_{2s}$ (step 2205). This requires minimal additional calculation beyond the conventional Fourier calculations used to determine frequency, amplitude and phase.

Every 10,000 cycles, the controller checks on the slope of the sensor voltage amplitude $A_1$, using a conventional rate-of-change estimation technique (step 2210). If the amplitude is constant (step 2215), then the controller proceeds with calculations for zero offset and gain mismatch. This check may be extended to test for frequency stability.

To perform the calculations, the controller generates average values for the functions (e.g., $sum_{1s}$) over the last 10,000 cycles. The controller then makes a first estimation of zero offset and gain mismatch (step 2225) :

$$\mathtt{Z_o \; = \; -Sum_{1c}/2,}$$

and

$$\mathtt{\varepsilon_G \; = \; 1/Ratio_{1s} \; - \; 1}$$

Using these values, the controller calculates an inverse gain factor (k) and amplitude factor (amp_factor) (step 2230) :

$$\mathtt{k \; = \; 1.0 \; / \; (1.0 \; + \; 0.5 \; * \; \varepsilon_G),}$$

and

$$\mathtt{amp\_factor \; = \; 1 \; + \; 50/75 \; * \; Sum_{2s}/Sum_{1s}}$$

The controller uses the inverse gain factor and amplitude factor to make a first estimation of the amplitudes (step 2235) :

$$A_1 = k * [Sum_{1s}/2 + 2/\pi * Z_o * \varepsilon_G * amp\_factor],$$

and

$$A_2 = k * [Sum_{2s}/2 - 4/(3 * \pi) * Z_o * \varepsilon_G$$

The controller then improves the estimate by the following calculations, iterating as required (step 2240) :

$$x_1 = Z_o,$$

$$x_2 = \varepsilon_G,$$

$$\varepsilon_G = [1 + 8/\pi * x_1/A_1 * amp\_factor]/Ratio_{1s} - 1.0,$$

$$Z_o = - Sum_{1c}/2 + x_2 * (x_1 + 2.773/\pi*A_2)/2,$$

$$A_1 = k * [Sum_{1s}/2 + 2/\pi * x_1 * x_2 * amp\_factor],$$

$$A_2 = k * [Sum_{2s}/2 - 4/(15 * \pi) * x_1 * x_2 * (5 - 4.5 * A_2)].$$

The controller uses standard techniques to test for convergence of the values of $Z_o$ and $\varepsilon_G$. In practice the corrections are small after the first iteration, and experience suggests that three iterations are adequate.

Finally, the controller adjusts the raw data to eliminate $Z_o$ and $\varepsilon_G$ (step 2245). The controller then repeats the procedure. Once zero offset and gain mismatch have been eliminated from the raw data, the functions (i.e., $sum_{1s}$) used in generating subsequent values for $Z_o$ and $\varepsilon_G$ are based on corrected data. Accordingly, these subsequent values for $Z_o$ and $\varepsilon_G$ reflect residual zero offset and gain mismatch, and are summed with previously generated values to produce the actual zero offset and gain mismatch. In one approach to adjusting the raw data, the controller generates adjustment parameters (e.g., S1_off and S2_off) that are used in converting the analog signals from the sensors to digital data.

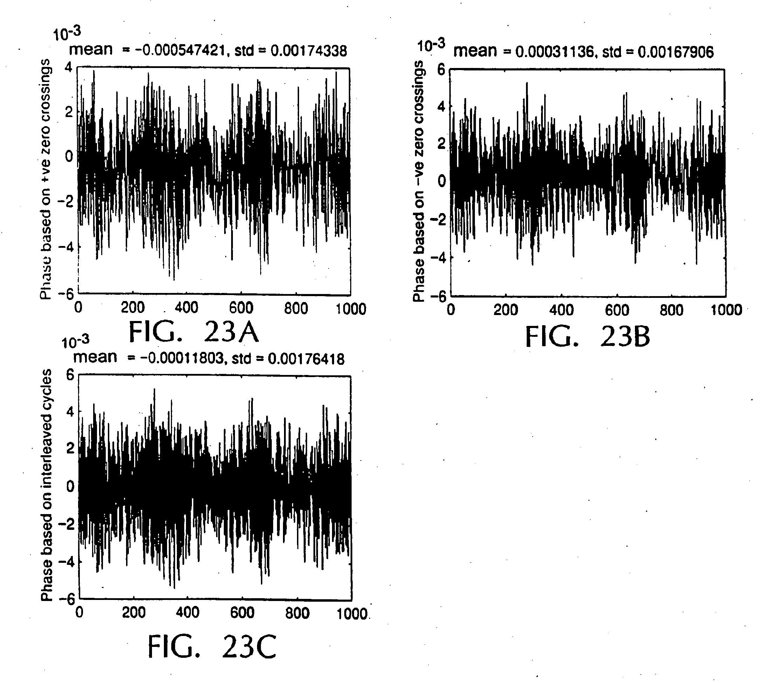

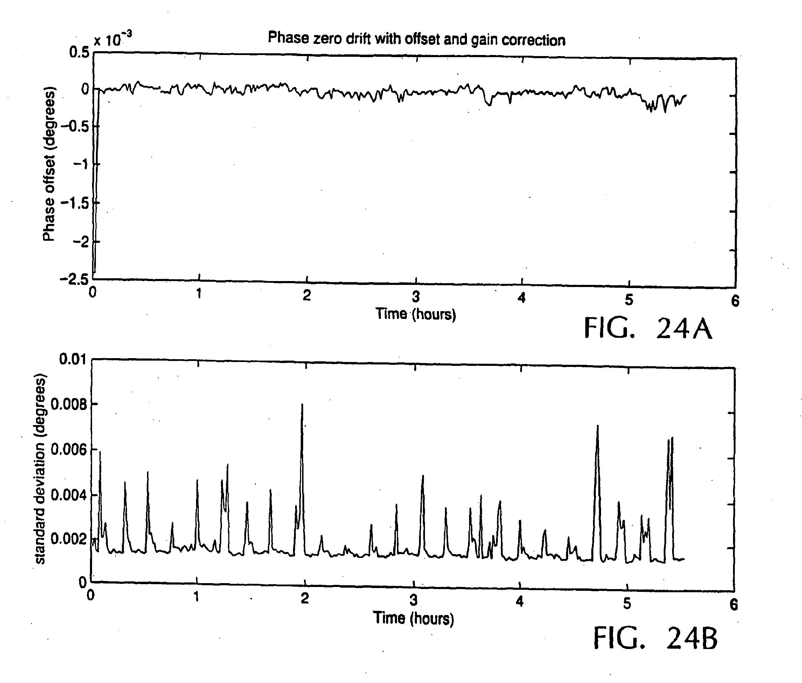

Figs. 23A-23C, 24A and 24B show results obtained using the procedure 2200. The short-term behavior is illustrated in Figs. 23A-23C. This shows consecutive phase estimates obtained five minutes after startup to allow time for the procedure to begin affecting the output. Phase is shown based on positive zero-crossings, negative zero-crossings, and both.

The difference between the positive and negative mean values has been reduced by a factor of 20, with a corresponding reduction in mean zero offset in the interleaved data set. The corresponding standard deviation has been reduced by a factor of approximately 6.

Longer term behavior is shown in Figs. 24A and 24B. The initial large zero offset is rapidly corrected, and then the phase offset is kept close to zero over many hours. The average phase offset, excluding the first few values, is $6.14e^{-6}$, which strongly suggests that the procedure is successful in compensating for changes in voltage offset and gain imbalance.

Typical values for $Z_o$ and $\varepsilon_G$ for the digital Coriolis meter are $Z_o = -7.923e^{-4}$ and $\varepsilon_G = -1.754e^{-5}$ for signal $SV_1$, and $Z_o = -8.038e^{-4}$ and $\varepsilon_G = +6.93e^{-4}$ for signal $SV_2$.

H. <u>Dynamic Analysis</u>

In general, conventional measurement calculations for Coriolis meters assume that the frequency and amplitude of oscillation on each side of the conduit are constant, and that the frequency on each side of the conduit is identical and equal to the so-called resonant frequency. Phases generally are not measured separately for each side of the conduit, and the phase difference between the two sides is assumed to be constant for the duration of the measurement process. Precise measurements of frequency, phase and amplitude every half-cycle using the digital meter demonstrate that these assumptions are only valid when parameter values are averaged over a time period on the order of seconds. Viewed at 100 Hz or higher frequencies, these parameters exhibit considerable variation. For example, during normal operation, the frequency and amplitude values of $SV_1$ may exhibit strong negative correlation with the corresponding $SV_2$ values. Accordingly, conventional measurement algorithms are subject to noise attributable to these dynamic variations. The noise becomes more significant as the measurement calculation rate increases. Other noise terms may be introduced by physical factors, such as flowtube dynamics, dynamic nonlinearities (e.g. flowtube stiffness varying with amplitude), or the dynamic consequences of the sensor voltages providing velocity data rather than absolute position data.

The described techniques exploit the high precision of the digital meter to monitor and compensate for dynamic conduit behavior to reduce noise so as to provide more precise measurements of process variables such as mass flow and density. This is achieved by monitoring and compensating for such effects as the rates of change of frequency, phase and amplitude, flowtube dynamics, and dynamic physical non-idealities. A phase difference calculation which does not assume the same frequency on each side has already been described above. Other compensation techniques are described below.

Monitoring and compensation for dynamic effects may take place at the individual sensor level to provide corrected estimates of phase, frequency, amplitude or other parameters. Further compensation may also take place at the conduit level, where data from both sensors are combined, for example in the calculation of phase difference and average frequency. These two levels may be used together to provide comprehensive compensation.

Thus, instantaneous mass flow and density measurements by the flowmeter may be improved by modelling and accounting for dynamic effects of flowmeter operation. In general, 80% or more of phase noise in a Coriolis flowmeter may be attributed to flowtube dynamics (sometimes referred to as "ringing"), rather than to process conditions being measured. The application of a dynamic model can reduce phase noise by a factor of 4 to 10, leading to significantly improved flow measurement performance. A single model is effective for all flow rates and amplitudes of oscillation. Generally, computational requirements are negligible.

The dynamic analysis may be performed on each of the sensor signals in isolation from the other. This avoids, or at least delays, modelling the dynamic interaction between the two sides of the conduit, which is likely to be far more complex than the dynamics at each sensor. Also, analyzing the individual sensor signals is more likely to be successful in circumstances such as batch startup and aeration where the two sides of the conduit are subject to different forces from the process fluid.

In general, the dynamic analysis considers the impact of time-varying amplitude, frequency and phase on the calculated values for these parameters. While the frequency and amplitude are easily defined for the individual sensor voltages, phase is conventionally defined in terms of the difference between the sensor voltages. However, when a Fourier analysis is used, phase for the individual sensor may be defined in terms of the difference between the midpoint of the cycle and the average 180° phase point.

Three types of dynamic effects are measurement error and the so-called "feedback" and "velocity" effects. Measurement error results because the algorithms for calculating amplitude and phase assume that frequency, amplitude, and phase are constant over the time interval of interest. Performance of the measurement algorithms may be improved by correcting for variations in these parameters.

The feedback effect results from supplying energy to the conduit to make up for energy loss from the conduit so as to maintain a constant amplitude of oscillation. The need to add energy to the conduit is only recognized after the amplitude of oscillation begins to deviate from a desired setpoint. As a result, the damping term in the equation of motion for the oscillating conduit is not zero, and, instead, constantly dithers around zero. Although the natural frequency of the conduit does not change, it is obscured by shifts in the zero-crossings (i.e., phase variations) associated with these small changes in amplitude.

The velocity effect results because the sensor voltages observe conduit velocity, but are analyzed as being representative of conduit position. A consequence of this is that the rate of change of amplitude has an impact on the apparent frequency and phase, even if the true values of these parameters are constant.

1. <u>Sensor-Level Compensation for Amplitude Modulation</u>

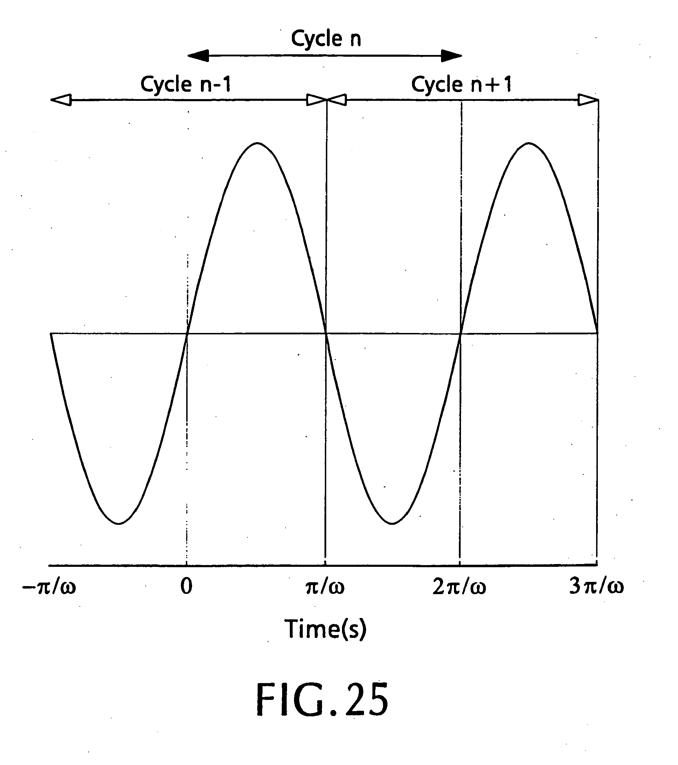

One approach to correcting for dynamic effects monitors the amplitudes of the sensor signals and makes adjustments based on variations in the amplitudes. For purposes of analyzing dynamic effects, it is assumed that estimates of phase, frequency and amplitude may be determined for each sensor voltage during each cycle. As shown in Fig. 25, calculations are based on complete but overlapping cycles. Each cycle starts at a zero crossing point, halfway through the previous cycle. Positive cycles begin with positive voltages immediately after the initial zero-crossing, while negative cycles begin with negative voltages. Thus cycle n is positive, while cycles n-1 and n+1 are negative. It is assumed that zero offset correction has been performed so that zero offset is negligible. It also is assumed that higher harmonics may be present.

Linear variation in amplitude, frequency, and phase are assumed. Under this assumption, the average value of each parameter during a cycle equals the instantaneous value of the parameter at the mid-point of the cycle. Since the cycles overlap by 180°, the average value for a cycle equals the starting value for the next cycle.

For example, cycle n is from time 0 to $2\pi/\omega$. The average values of amplitude, frequency and phase equal the instantaneous values at the mid-point, $\pi/\omega$, which is also the starting point for cycle n+1, which is from time $\pi/\omega$ to $3\pi/\omega$. Of course, these timings are approximate, since $\omega$ also varies with time.

a. <u>Dynamic Effect Compensation Procedure</u>

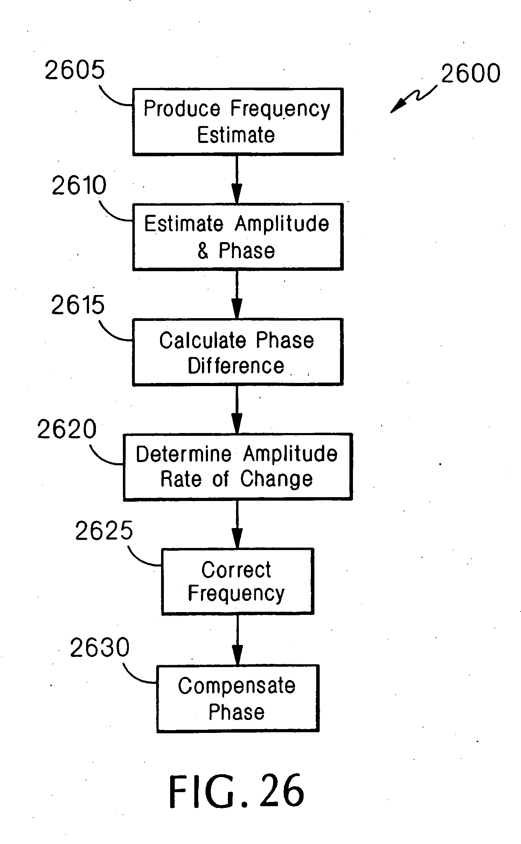

The controller accounts for dynamic effects according to the procedure 2600 illustrated in Fig. 26. First, the controller produces a frequency estimate (step 2605) by using the zero crossings to measure the time between the start and end of the cycle, as described above. Assuming that frequency varies linearly, this estimate equals the time-averaged frequency over the period.

The controller then uses the estimated frequency to generate a first estimate of amplitude and phase using the Fourier method described above (step 2610). As noted above, this method eliminates the effects of higher harmonics.

Phase is interpreted in the context of a single waveform as being the difference between the start of the cycle (i.e., the zero-crossing point) and the point of zero phase for the component of SV(t) of frequency $\omega$, expressed as a phase offset. Since the phase offset is an average over the entire waveform, it may be used as the phase offset from the midpoint of the cycle. Ideally, with no zero offset and constant amplitude of oscillation, the phase offset should be zero every cycle. In practice, however, it shows a high level of variation and provides an excellent basis for correcting mass flow to account for dynamic changes in amplitude.

The controller then calculates a phase difference (step 2615). Though a number of definitions of phase difference are possible, the analysis assumes that the average phase and frequency of each sensor signal is representative of the entire waveform. Since these frequencies are different for $SV_1$ and $SV_2$, the corresponding phases are scaled to the average frequency. In addition, the phases are shifted to the same starting point (i.e., the midpoint of the cycle on $SV_1$). After scaling, they are subtracted to provide the phase difference.

The controller next determines the rate of change of the amplitude for the cycle n (step 2620):

$$\texttt{roc\_amp}_n \approx \frac{\texttt{amp (end of cycle)} - \texttt{amp (start of cycle)}}{\texttt{period of cycle}}$$

$$= (\texttt{amp}_{n+1} - \texttt{amp}_{n-1})\ \texttt{freq}_n.$$

This calculation assumes that the amplitude from cycle n+1 is available when calculating the rate of change of cycle n. This is possible if the corrections are made one cycle after the raw amplitude calculations have been made. The advantage of having an accurate estimate of the rate of change, and hence good measurement correction, outweighs the delay in the provision of the corrected measurements, which, in one implementation, is on the order of 5 milliseconds. The most recently generated information is always used for control of the conduit (i.e., for generation of the drive signal).

If desired, a revised estimate of the rate of change can be calculated after amplitude correction has been applied (as described below). This results in iteration to convergence for the best values of amplitude and rate of change.

b. <u>Frequency Compensation for Feedback and Velocity Effects</u>

As noted above, the dynamic aspects of the feedback loop introduce time varying shifts in the phase due to the small deviations in amplitude about the set-point. This results in the measured frequency, which is based on zero-crossings, differing from the natural frequency of the conduit. If velocity sensors are used, an additional shift in phase occurs. This additional shift is also associated with changes in the positional amplitude of the conduit. A dynamic analysis can monitor and compensate for these effects. Accordingly, the controller uses the calculated rate of amplitude change to correct the frequency estimate (step 2625).

The position of an oscillating conduit in a feedback loop that is employed to maintain the amplitude of oscillation of the conduit constant may be expressed as:

$$X = A(t)\sin(\omega_o t - \theta(t)),$$

where $\theta(t)$ is the phase delay caused by the feedback effect. The mechanical Q of the oscillating conduit is typically on the order of 1000, which implies small deviations in amplitude and phase. Under these conditions, θ(t) is given by:

$$\theta(t) \approx -\frac{\dot{A}(t)}{2\omega_0 A(t)}.$$

Since each sensor measures velocity:

$$= \omega_0 A(t) \left[\left(1 - \frac{\dot{\theta}}{\omega_0}\right)^2 + \left(\frac{\dot{A}(t)}{\omega_0 A(t)}\right)^2\right]^{1/2} \cos(\omega_0 t - \theta(t) - \gamma(t)),$$

where γ(t) is the phase delay caused by the velocity effect:

$$\gamma(t) = \tan^{-1}\left(\frac{\dot{A}(t)}{\omega_0 A(t)\left(1 - \frac{\dot{\theta}}{\omega_0}\right)}\right).$$

Since the mechanical Q of the conduit is typically on the order of 1000, and, hence, variations in amplitude and phase are small, it is reasonable to assume:

$$\frac{\dot{\theta}}{\omega_0} \ll 1 \quad and \quad \frac{\dot{A}(t)}{\omega_0 A(t)} \ll 1.$$

This means that the expression for SV(t) may be simplified to:

$$SV(t) \approx \omega_0 A(t) \cos(\omega_0 t - \theta(t) - \gamma(t)),$$

and for the same reasons, the expression for the velocity offset phase delay may be simplified to:

$$\gamma(t) \approx \frac{\dot{A}(t)}{\omega_0 A(t)}.$$

Summing the feedback and velocity effect phase delays gives the total phase delay:

$$\varphi(t) = \theta(t) + \gamma(t) \approx -\frac{\dot{A}(t)}{2\omega_0 A(t)} + \frac{\dot{A}(t)}{w_0 A(t)} = \frac{\dot{A}(t)}{2\omega_0 A(t)},$$

and the following expression for SV(t):

$$SV(t) \approx \omega_0 A(t) \cos[\omega_0 t - \varphi(t)].$$

From this, the actual frequency of oscillation may be distinguished from the natural frequency of oscillation. Though the former is observed, the latter is useful for density calculations. Over any reasonable length of time, and assuming adequate amplitude control, the averages of these two frequencies are the same (because the average rate of change of amplitude must be zero). However, for improved instantaneous density measurement, it is desirable to compensate the actual frequency of oscillation for dynamic effects to obtain the natural frequency. This is particularly useful in dealing with aerated fluids for which the instantaneous density can vary rapidly with time.

The apparent frequency observed for cycle n is delineated by zero crossings occurring at the midpoints of cycles n-1 and n+1. The phase delay due to velocity change will have an impact on the apparent start and end of the cycle:

$$\mathtt{obs\_freq_n = obs\_freq_{n-1}} + \frac{\mathtt{true\_freq_n}}{2\pi}\left(\varphi_{n+1} - \varphi_{n-1}\right)$$

$$= \mathtt{obs\_freq_{n-1}} + \frac{\mathtt{true\_freq_{n-1}}}{2\pi}\left(\frac{\dot{A}_{n+1}}{4\pi\,\mathtt{true\_freq_n}A_{n+1}} - \frac{\dot{A}_{n-1}}{4\pi\,\mathtt{true\_freq_n}A_{n-1}}\right)$$

$$= \mathtt{obs\_freq_{n-1}} + \frac{1}{8\pi^2}\left(\frac{\dot{A}_{n+1}}{A_{n+1}} - \frac{\dot{A}_{n-1}}{A_{n-1}}\right).$$

Based on this analysis, a correction can be applied using an integrated error term:

$$\mathtt{error\_sum_n = error\_sum_{n-1}} - \frac{1}{8\pi^2}\left(\frac{\dot{A}_{n+1}}{A_{n+1}} - \frac{\dot{A}_{n-1}}{A_{n-1}}\right),$$

and

$$\mathtt{est\_freq_n = obs\_freq_n - error\_sum_n},$$

where the value of error_sum at startup (i.e., the value at cycle zero) is:

$$\mathtt{error\_sum_0} = -\frac{1}{8\pi^2}\left(\frac{\dot{A}_0}{A_0} + \frac{\dot{A}_1}{A_1}\right).$$

Though these equations include a constant term having a value of $1/8\pi^2$, actual data has indicated that a constant term of $1/8\pi$ is more appropriate. This discrepancy may be due to unmodelled dynamics that may be resolved through further analysis.

The calculations discussed above assume that the true amplitude of oscillation, A, is available. However, in practice, only the sensor voltage SV is observed. This sensor voltage may be expressed as:

$$SV(t) \approx \omega_0 A(t) \cos(\omega_0 t - \varphi(t))$$

The amplitude, amp_SV(t), of this expression is:

$$\mathtt{amp\_SV}(t) \approx \omega_0 A(t).$$

The rate of change of this amplitude is:

$$\texttt{roc\_amp\_SV(t)} \approx \omega_0 \dot{A}(t)$$

so that the following estimation can be used:

$$\frac{\dot{A}(t)}{A(t)} \approx \frac{\texttt{roc\_amp\_SV(t)}}{\texttt{amp\_SV(t)}}.$$

c. Application of Feedback and Velocity Effect Frequency Compensation

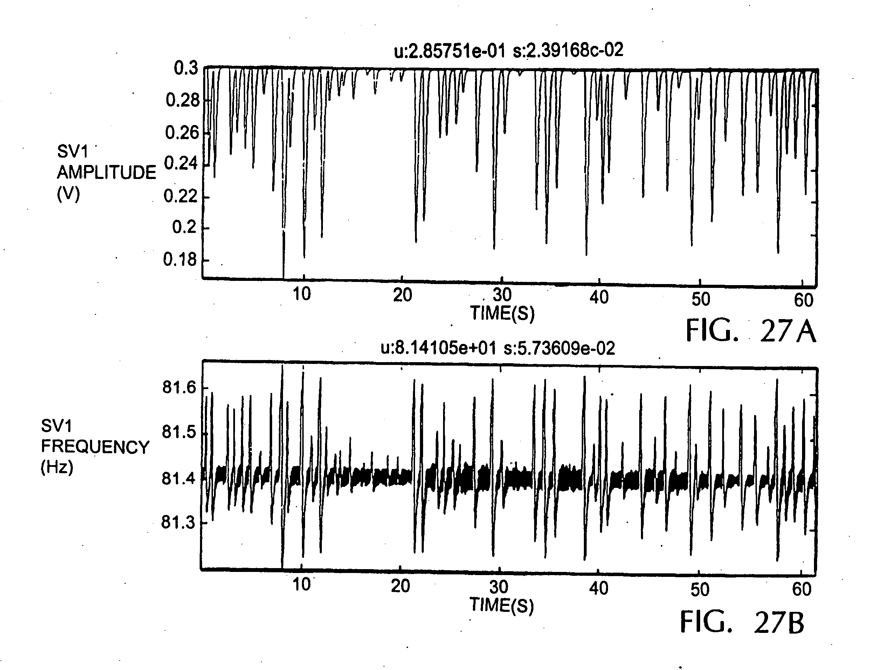

Figs. 27A-32B illustrate how application of the procedure 2600 improves the estimate of the natural frequency, and hence the process density, for real data from a meter having a one inch diameter conduit. Each of the figures shows 10,000 samples, which are collected in just over 1 minute.

Figs. 27A and 27B show amplitude and frequency data from $SV_1$, taken when random changes to the amplitude set-point have been applied. Since the conduit is full of water and there is no flow, the natural frequency is constant. However, the observed frequency varies considerably in response to changes in amplitude. The mean frequency value is 81.41 Hz, with a standard deviation of 0.057 Hz.

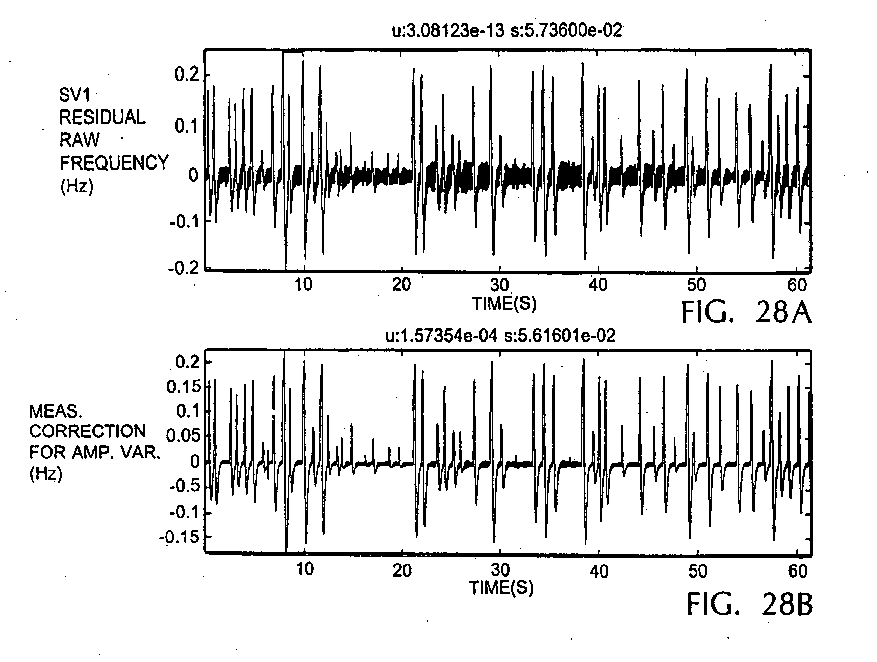

Figs. 28A and 28B show, respectively, the variation in frequency from the mean value, and the correction term generated using the procedure 2600. The gross deviations are extremely well matched. However, there is additional variance in frequency which is not attributable to amplitude variation. Another important feature illustrated by Fig. 28B is that the average is close to zero as a result of the proper initialization of the error term, as described above.

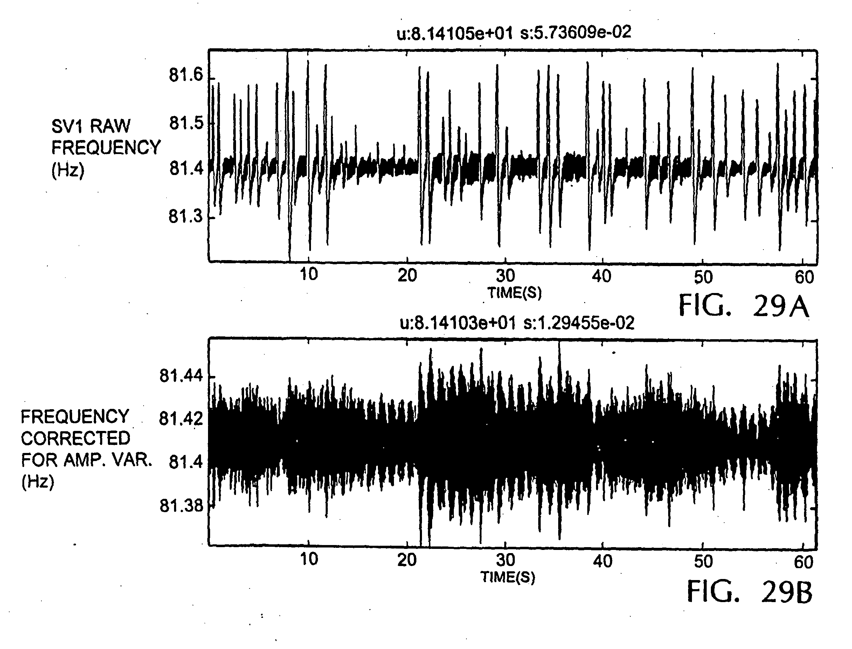

Figs. 29A and 92B compare the raw frequency data (Fig. 29A) with the results of applying the correction function (Fig. 29B). There has been a negligible shift in the mean frequency, while the standard deviation has been reduced by a factor of 4.4. From Fig. 29B, it is apparent that there is residual structure in the corrected frequency data. It is expected that further analysis, based on the change in phase across a cycle and its impact on the observed frequency, will yield further noise reductions.

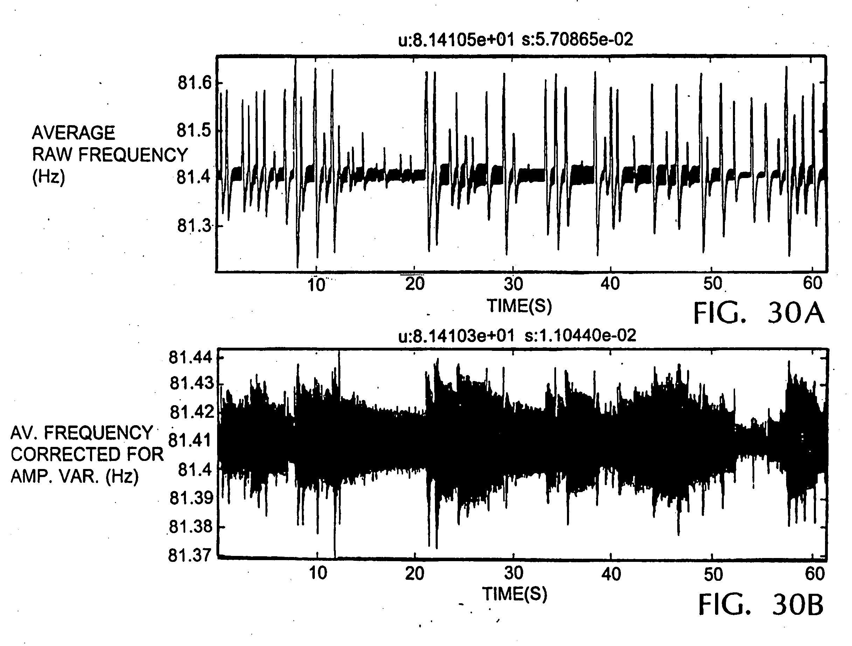

Figs. 30A and 30B show the corresponding effect on the average frequency, which is the mean of the instantaneous sensor voltage frequencies. Since the mean frequency is used to calculate the density of the process fluid, the noise reduction (here by a factor of 5.2) will be propagated into the calculation of density.

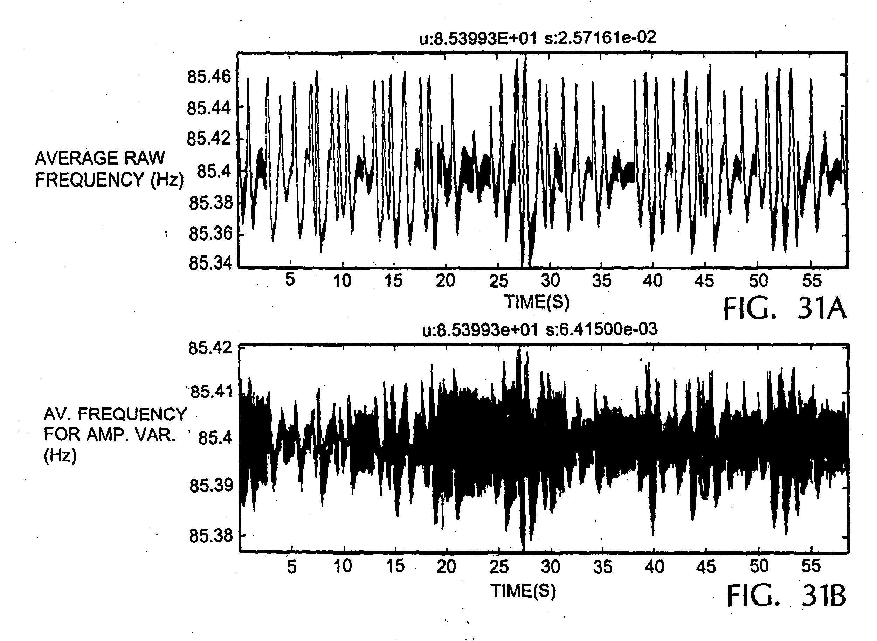

Figs. 31A and 31B illustrate the raw and corrected average frequency for a 0.05m (2") diameter conduit subject to a random amplitude set-point. The 0.05m (2") flowtube exhibits less frequency variation than the 0.025m (1"), for both raw and corrected data. The noise reduction factor is 4.0.

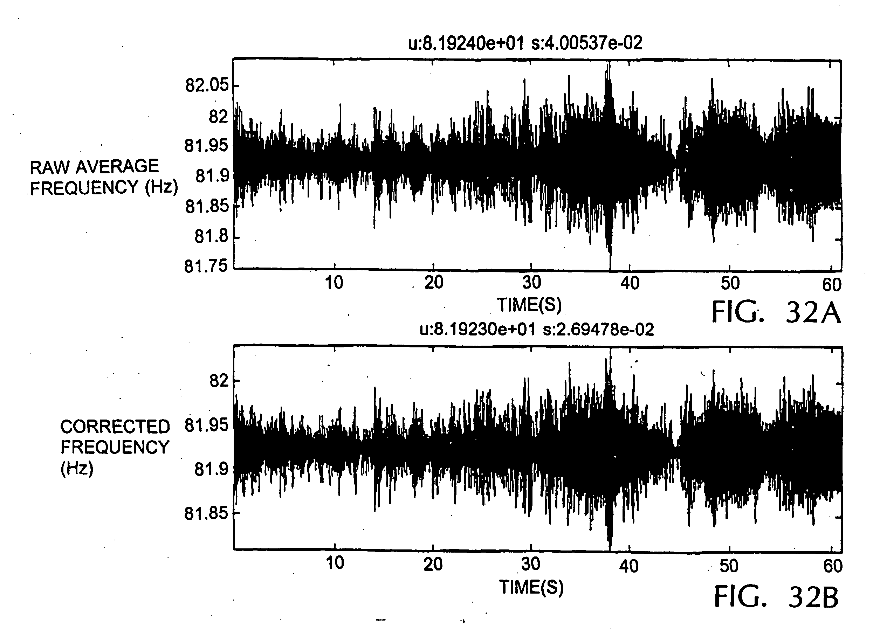

Figs. 32A and 32B show more typical result with real flow data for the 0.025m (one inch) flowtube. The random setpoint algorithm has been replaced by the normal constant setpoint. As a result, there is less amplitude variation than in the previous examples, which results in a smaller noise reduction factor of 1.5.

d. Compensation of Phase Measurement for Amplitude Modulation

Referring again to Fig. 26, the controller next compensates the phase measurement to account for amplitude modulation assuming the phase calculation provided above (step 2630). The Fourier calculations of phase described above assume that the amplitude of oscillation is constant throughout the cycle of data on which the calculations take place. This section describes a correction which assumes a linear variation in amplitude over the cycle of data.

Ignoring higher harmonics, and assuming that any zero offset has been eliminated, the expression for the sensor voltage is given by:

$$SV(t) \approx A_1 (1 + \lambda_A t) \sin(\omega t)$$

where $\lambda_A$ is a constant corresponding to the relative change in amplitude with time. As discussed above, the integrals $I_1$ and $I_2$ may be expressed as:

$$I_1 = \frac{2\omega}{\pi} \int_0^{\frac{2\pi}{\omega}} SV(t) \sin(\omega t)\, dt,$$

and

$$I_2 = \frac{2\omega}{\pi} \int_0^{\frac{2\pi}{\omega}} SV(t) \cos(\omega t)\, dt.$$

Evaluating these integrals results in:

$$I_1 = A_1 \left(1 + \frac{\pi}{\omega} \lambda_A\right),$$

and

$$I_2 = -A_1 \frac{1}{2\omega} \lambda_A.$$

Substituting these expressions into the calculation for amplitude and expanding as a series in $\lambda_A$ results in:

$$Amp = A_1 \left(1 + \frac{\pi}{\omega} \lambda_A + \frac{1}{8\omega^2} \lambda_A^2 + \ldots\right).$$

Assuming $\lambda_A$ is small, and ignoring all terms after the first order term, this may be simplified to:

$$Amp = A_1 \left(1 + \frac{\pi}{\omega} \lambda_A\right).$$

This equals the amplitude of SV(t) at the midpoint of the cycle (t = $\pi/\omega$). Accordingly, the amplitude calculation provides the required result without correction.

For the phase calculation, it is assumed that the true phase difference and frequency are constant, and that there is no voltage offset, which means that the phase value should be zero. However, as a result of amplitude modulation, the correction to be applied to the raw phase data to compensate for amplitude modulation is:

$$Phase = \tan^{-1}\left(\frac{\lambda_A}{2(\pi\lambda_A + \omega)}\right).$$

Assuming that the expression in brackets is small, the inverse tangent function can be ignored.

A more elaborate analysis considers the effects of higher harmonics. Assuming that the sensor voltage may be expressed as:

$$SV(t) = (1 + \lambda_A t)\left[A_1 \sin(\omega t) + A_2 \sin(2\omega t) + A_3 \sin(3\omega t) + A_4 \sin(4\omega t)\right]$$

such that all harmonic amplitudes increase at the same relative rate over the cycle, then the resulting integrals may be expressed as:

$$I_1 = A_1\left(1 + \frac{\pi}{\omega}\lambda_A\right),$$

and

$$I_2 = \frac{-1}{60\omega}\lambda_A\left(30A_1 + 80A_2 + 45A_3 + 32A_4\right)$$

for positive cycles, and

$$I_2 = \frac{-1}{60\omega}\lambda_A\left(30A_1 - 80A_2 + 45A_3 - 32A_4\right)$$

for negative cycles.

For amplitude, substituting these expressions into the calculations establishes that the amplitude calculation is only affected in the second order and higher terms, so that no correction is necessary to a first order approximation of the amplitude. For phase, the correction term becomes:

$$\frac{-1}{60}\lambda_A\left(\frac{30A_1 + 80A_2 + 45A_3 + 32A_4}{A_1\left(\pi\lambda_A + \omega\right)}\right)$$

for positive cycles, and

$$\frac{-1}{60}\lambda_A\left(\frac{30A_1 - 80A_2 + 45A_3 - 32A_4}{A_1\left(\pi\lambda_A + \omega\right)}\right)$$

for negative cycles. These correction terms assume the availability of the amplitudes of the higher harmonics. While these can be calculated using the usual Fourier technique, it is also possible to approximate some or all them using assumed ratios between the harmonics. For example, for one implementation of a 0.025m (one inch) diameter conduit, typical amplitude ratios are $A_1 = 1.0$, $A_2 = 0.01$, $A_3 = 0.005$, and $A_4 = 0.001$.

e. Application of Amplitude Modulation Compensation to Phase

Simulations have been carried out using the digital transmitter, including the simulation of higher harmonics and amplitude modulation. One example uses f = 80 Hz, $A_1$(t=0) = 0.3, $A_2 = 0$, $A_3 = 0$, $A_4 = 0$, $\lambda_A = 1e^{-5}$ * 48KHz (sampling rate) = 0.47622, which corresponds to a high rate of change of amplitude, but with no higher harmonics. Theory suggests a phase offset of -0.02706 degrees. In simulation over 1000 cycles, the average offset is -0.02714 degrees, with a standard deviation of only $2.17e^{-6}$. The difference between simulation and theory (approx 0.3% of the simulation error) is attributable to the model's assumption of a linear variation in amplitude over each cycle, while the simulation generates an exponential change in amplitude.

A second example includes a second harmonic, and has the parameters f = 80Hz, $A_1(t=0) = 0.3$, $A_2(t=0) = 0.003$, $A_3 = 0$, $A_4 = 0$, $\lambda_A = -1e^{-6} * 48KHz$ (sampling rate) = - 0.047622. For this example, theory predicts the phase offset to be $+2.706e^{-3}$, +/-2.66% for positive or negative cycles. In simulation, the results are $2.714e^{-3}$ +/-2.66%, which again matches well.

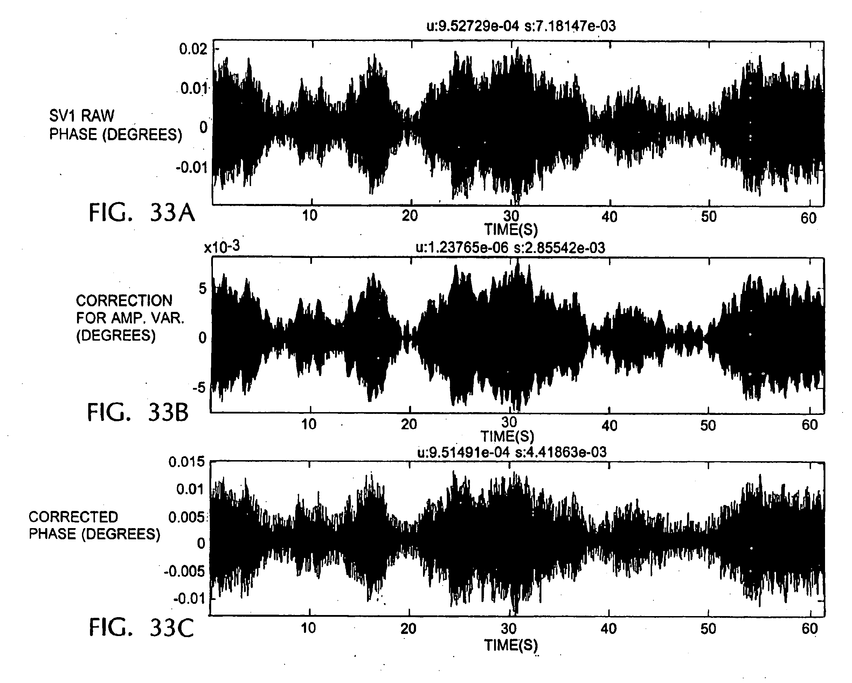

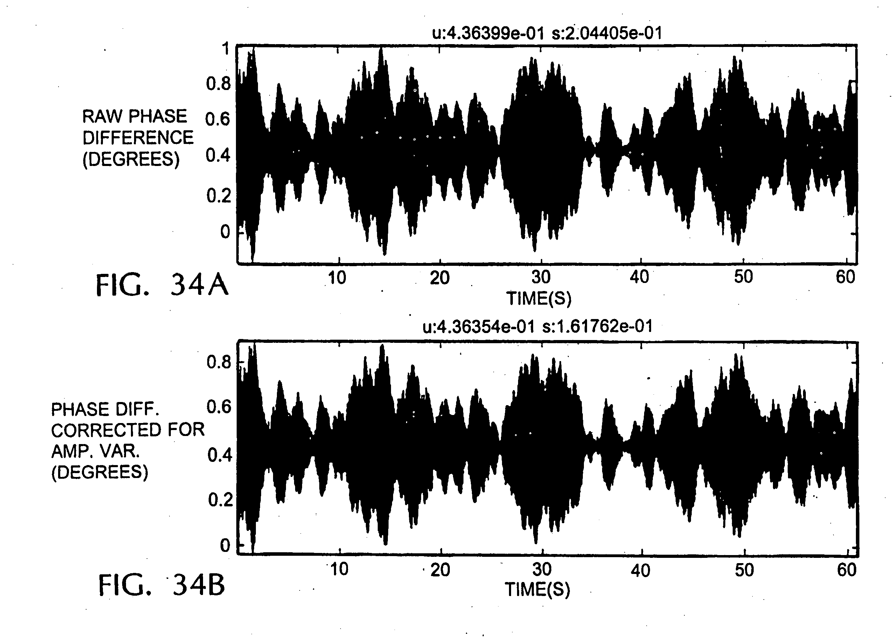

Figs. 33A-34B give examples of how this correction improves real flowmeter data. Fig. 33A shows raw phase data from $SV_1$, collected from a 1" diameter conduit, with low flow assumed to be reasonably constant. Fig. 33B shows the correction factor calculated using the formula described above, while Fig. 33C shows the resulting corrected phase. The most apparent feature is that the correction has increased the variance of the phase signal, while still producing an overall reduction in the phase difference (i.e., $SV_2 - SV_1$) standard deviation by a factor of 1.26, as shown in Figs. 34A and 34B. The improved performance results because this correction improves the correlation between the two phases, leading to reduced variation in the phase difference. The technique works equally well in other flow conditions and on other conduit sizes.

f. Compensation to Phase Measurement for Velocity Effect

The phase measurement calculation is also affected by the velocity effect. A highly effective and simple correction factor, in radians, is of the form

$$c_v(t_k) = \frac{1}{\pi}\Delta SV(t_k),$$

where $\Delta SV(t_k)$ is the relative rate of change of amplitude and may be expressed as:

$$\Delta SV(t_k) = \frac{SV(t_{k+1}) - SV(t_{k-1})}{t_{k+1} - t_{k-1}} \cdot \frac{1}{SV(t_k)},$$

where $t_k$ is the completion time for the cycle for which $\Delta SV(t_k)$ is being determined, $t_{k+1}$ is the completion time for the next cycle, and $t_{k-1}$ is the completion time of the previous cycle. $\Delta SV$ is an estimate of the rate of change of SV, scaled by its absolute value, and is also referred to as the proportional rate of change of SV.

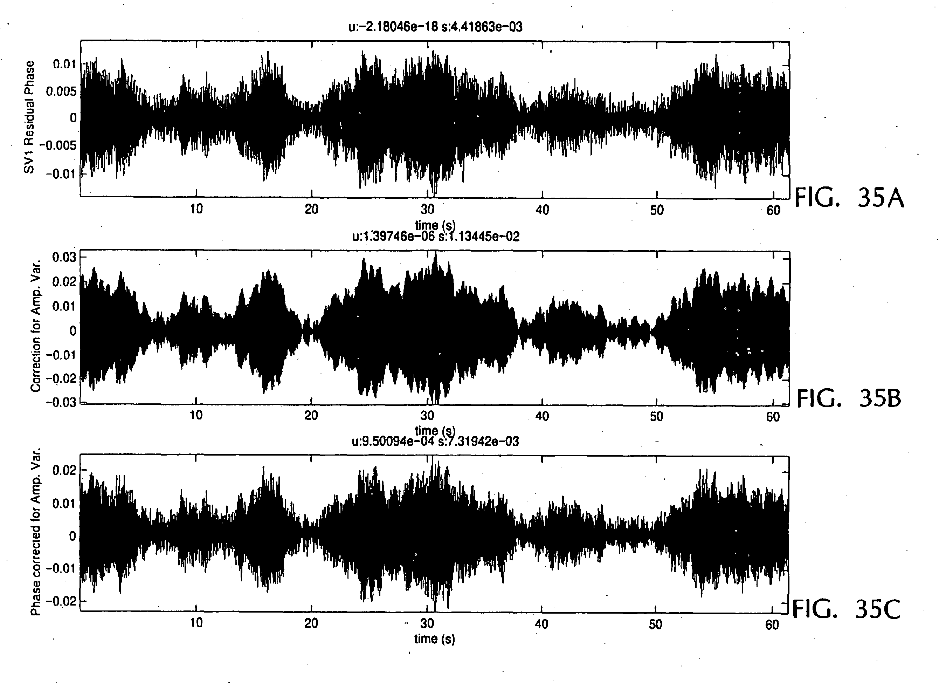

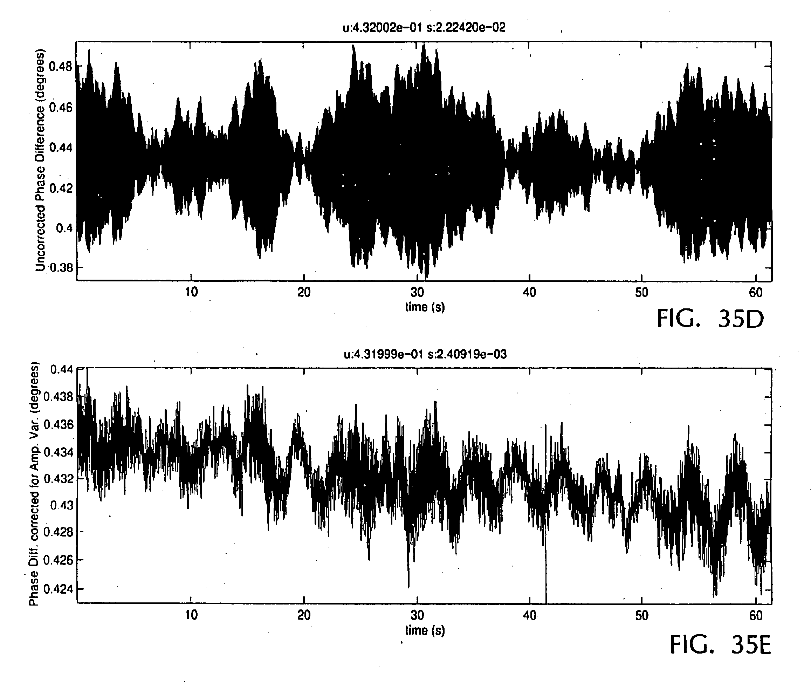

Figs. 35A-35E illustrate this technique. Fig. 35A shows the raw phase data from a single sensor ($SV_1$), after having applied the amplitude modulation corrections described above. Fig. 35B shows the correction factor in degrees calculated using the equation above, while Fig. 35C shows the resulting corrected phase. It should be noted that the standard deviation of the corrected phase has actually increased relative to the raw data. However, when the corresponding calculations take place on the other sensor ($SV_2$), there is an increase in the negative correlation (from -0.8 to -0.9) between the phases on the two signals. As a consequence, the phase difference calculations based on the raw phase measurements (Fig. 35D) have significantly more noise than the corrected phase measurements (Fig. 35E).

Comparison of Figs. 35D and 35E shows the benefits of this noise reduction technique. It is immediately apparent from visual inspection of Fig. 35E that the process variable is decreasing, and that there are significant cycles in the measurement, with the cycles being attributable, perhaps, to a poorly conditioned pump. None of this is discernable from the uncorrected phase difference data of Fig. 35D.

g. Application of Sensor Level Noise Reduction

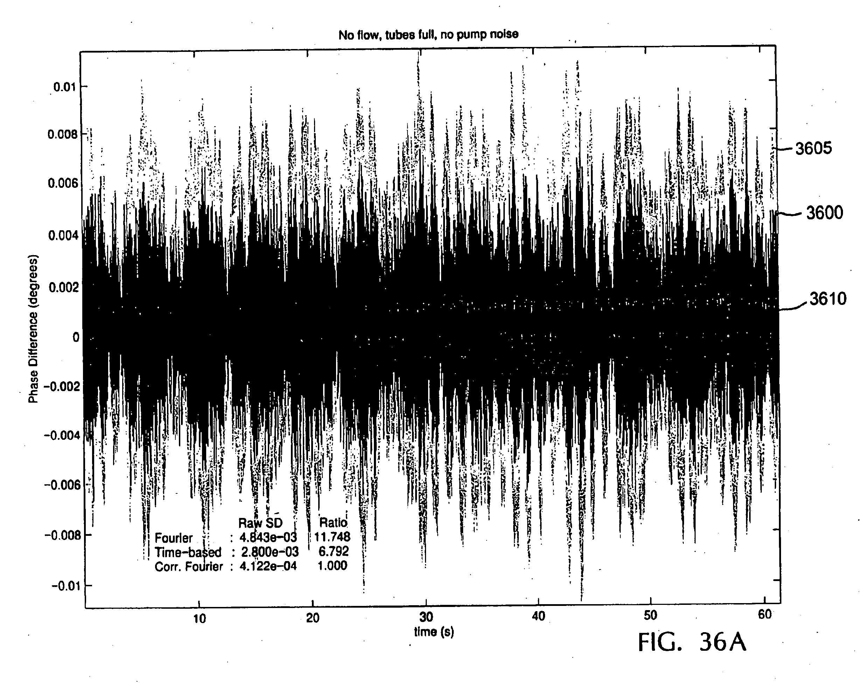

The combination of phase noise reduction techniques described above results in substantial improvements in instantaneous phase difference measurement in a variety of flow conditions, as illustrated in Figs. 36A-36L. Each graph shows three phase difference measurements calculated simultaneously in real time by the digital Coriolis transmitter operating on a one inch conduit. The middle band 3600 shows phase data calculated using the simple time-difference technique. The outermost band 3605 shows phase data calculated using the Fourier-based technique described above.

It is perhaps surprising that the Fourier technique, which uses far more data, a more sophisticated analysis, and much more computational effort, results in a noisier calculation. This can be attributed to the sensitivity of the Fourier technique to the dynamic effects described above. The innermost band of data 3610 shows the same Fourier data after the application of the sensor-level noise reduction techniques. As can be seen, substantial noise reduction occurs in each case, as indicated by the standard deviation values presented on each graph.

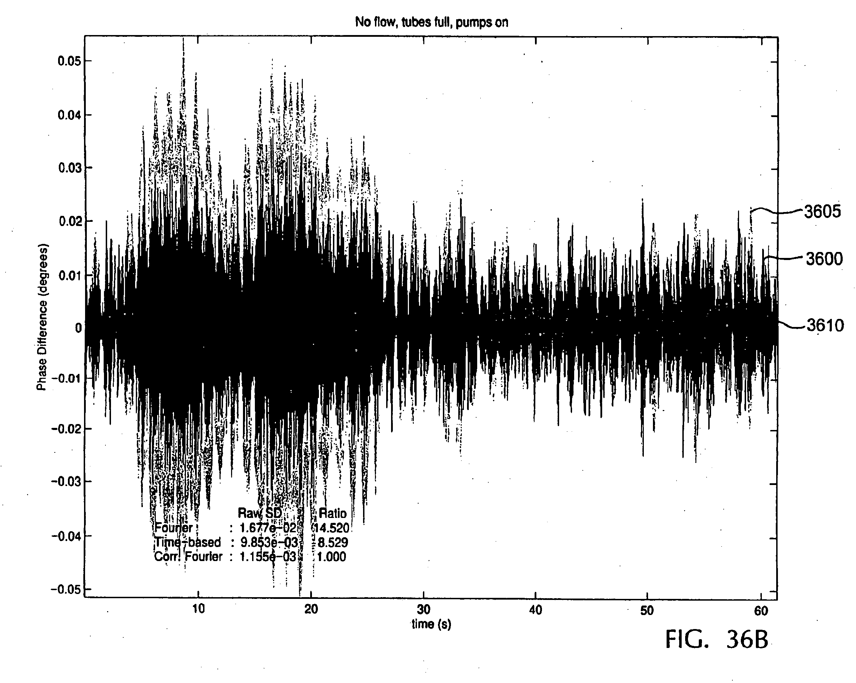

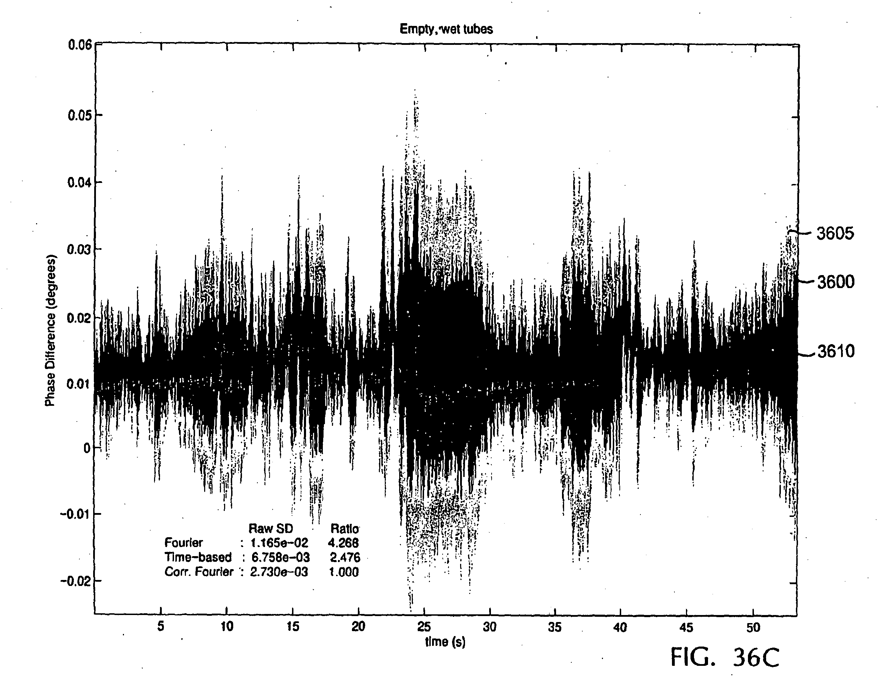

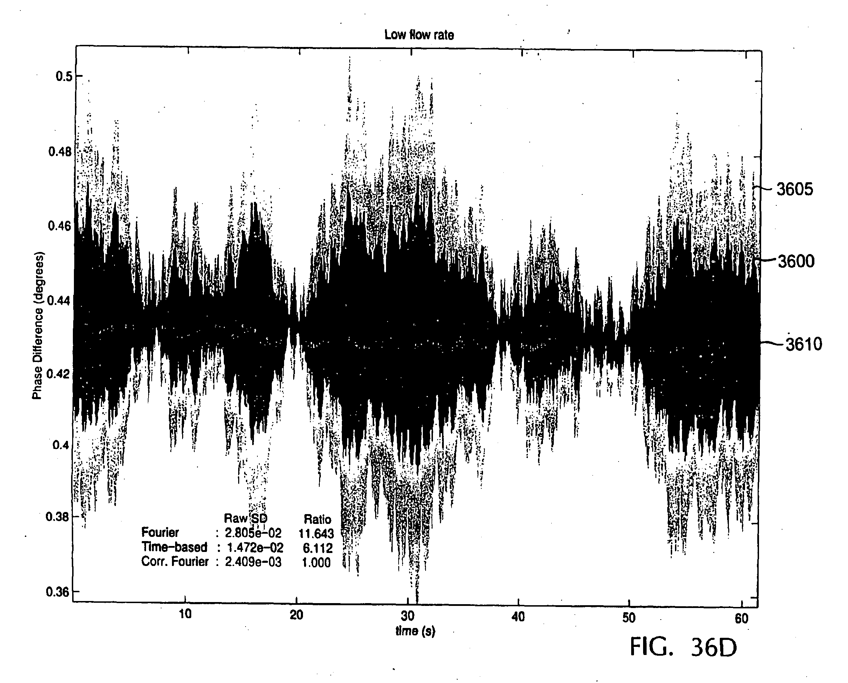

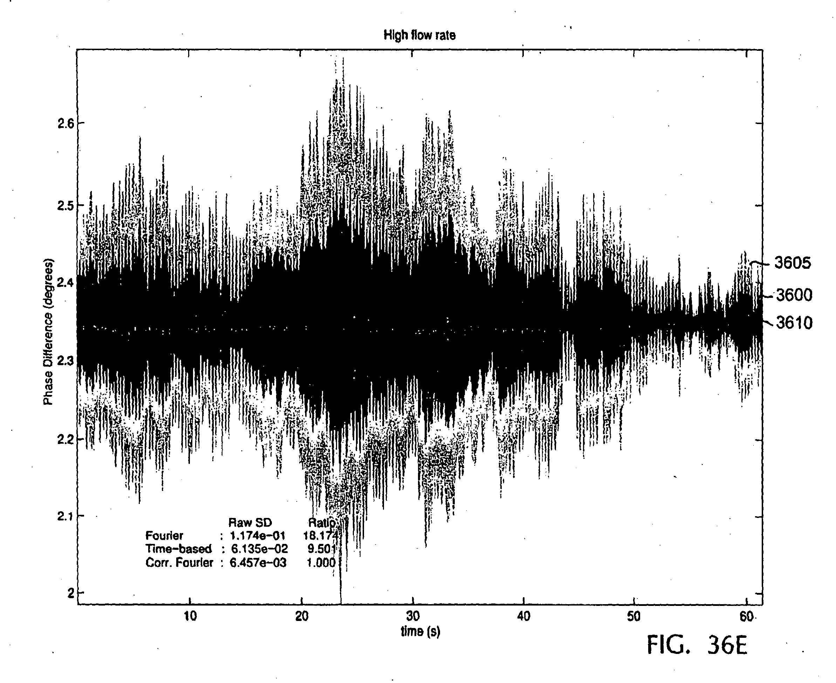

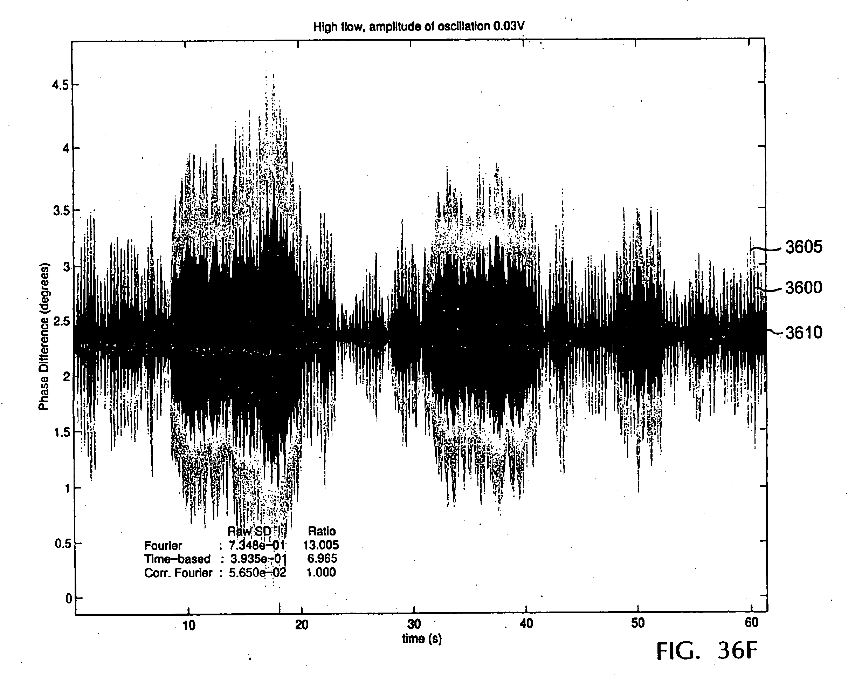

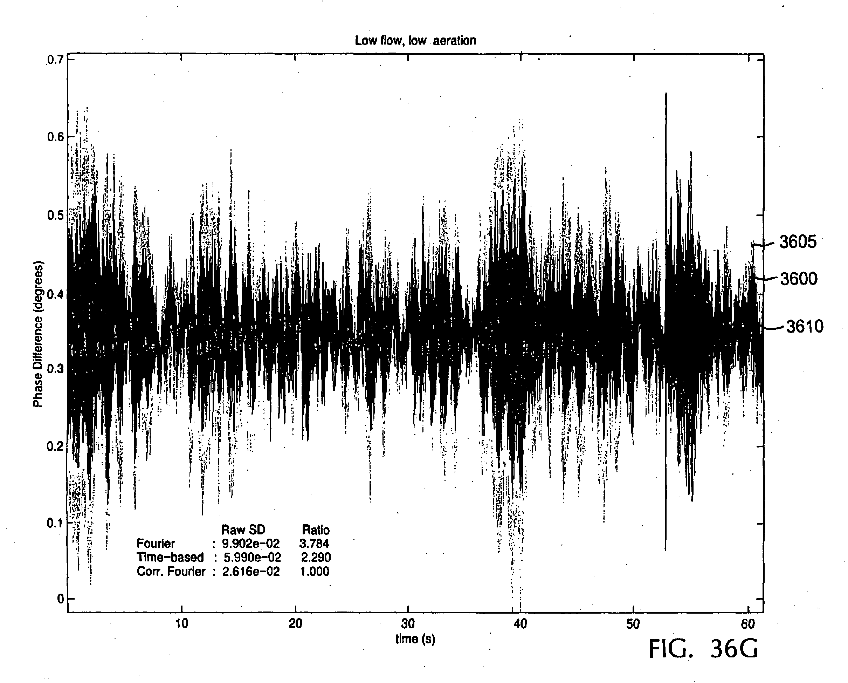

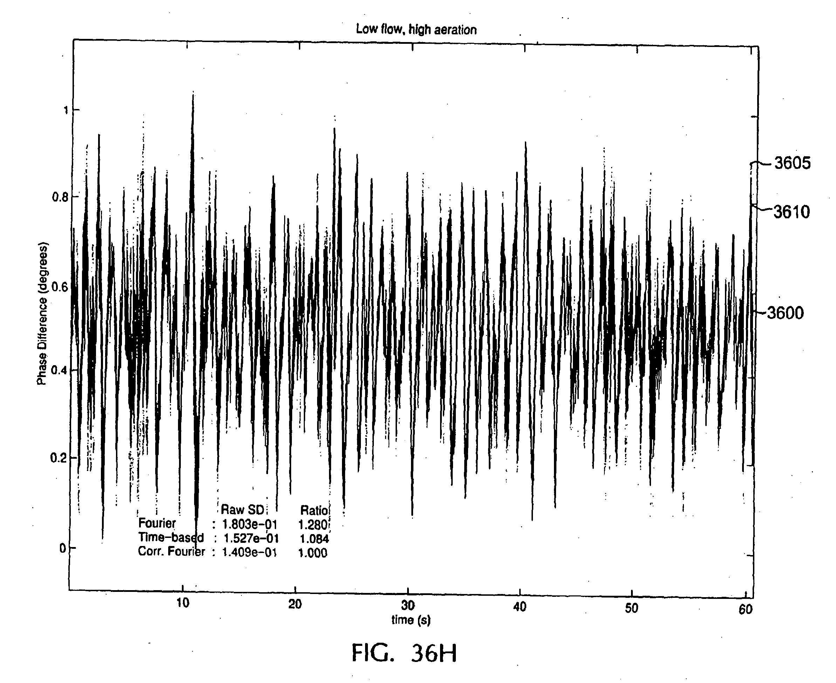

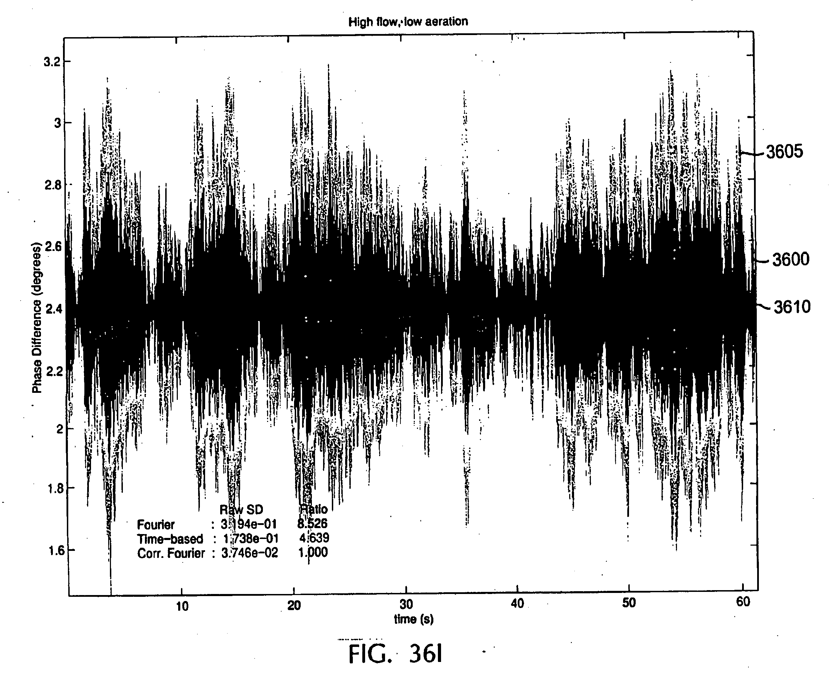

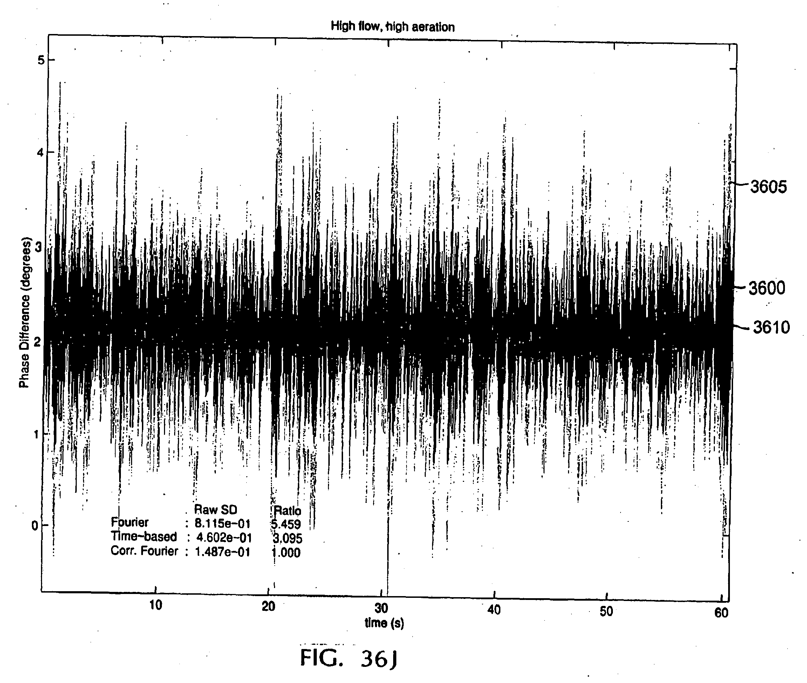

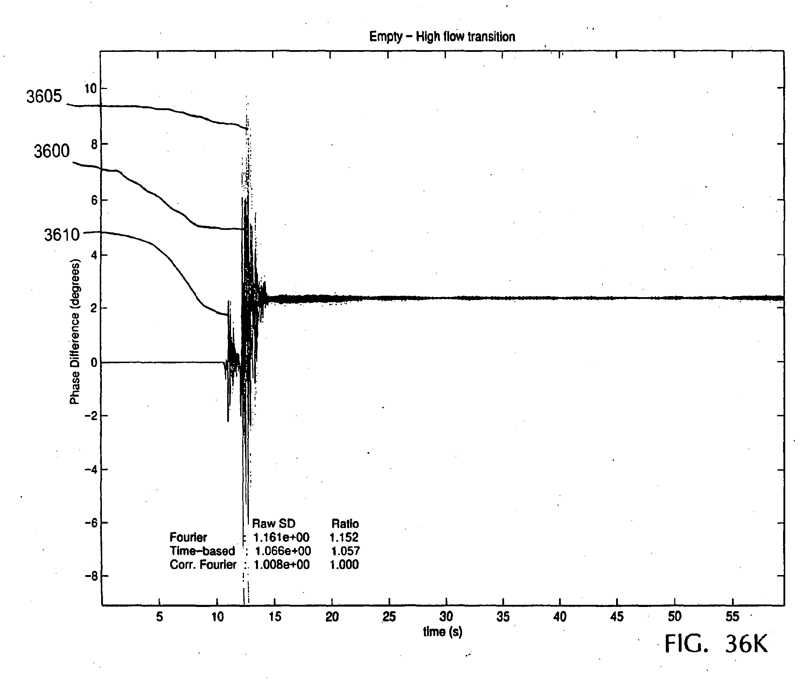

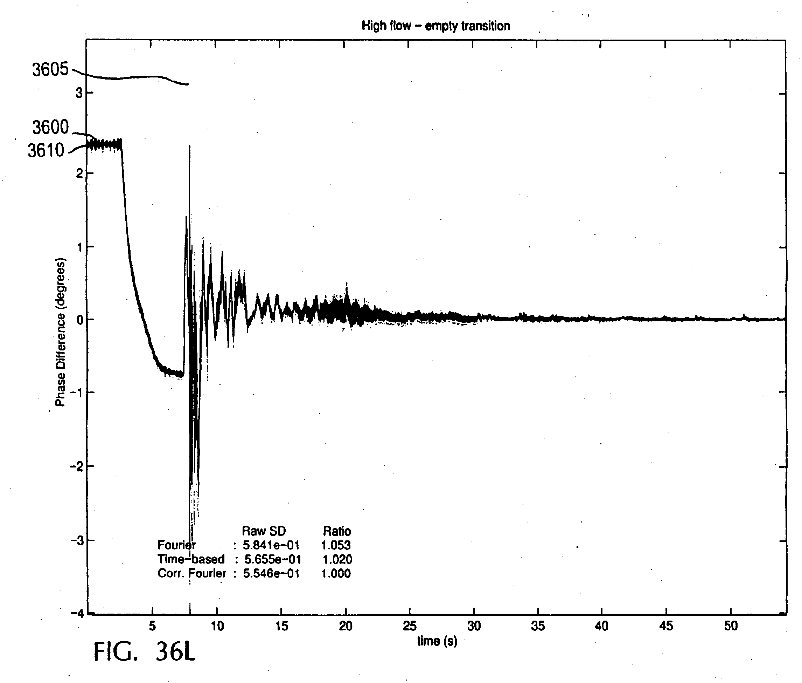

Fig. 36A illustrates measurements with no flow, a full conduit, and no pump noise. Fig. 36B illustrates measurements with no flow, a full conduit, and the pumps on. Fig. 36C illustrates measurements with an empty, wet conduit. Fig. 36D illustrates measurements at a low flow rate. Fig. 36E illustrates measurements at a high flow rate. Fig. 36F illustrates measurements at a high flow rate and an amplitude of oscillation of 0.03V. Fig. 36G illustrates measurements at a low flow rate with low aeration. Fig. 36H illustrates measurements at a low flow rate with high aeration. Fig. 36I illustrates measurements at a high flow rate with low aeration. Fig. 36J illustrates measurements at a high flow rate with high aeration. Fig. 36K illustrates measurements for an empty to high flow rate transition. Fig. 36L illustrates measurements for a high flow rate to empty transition.

3. <u>Flowtube Level Dynamic Modelling</u>

A dynamic model may be incorporated in two basic stages. In the first stage, the model is created using the techniques of system identification. The flowtube is "stimulated" to manifest its dynamics, while the true mass flow and density values are kept constant. The response of the flowtube is measured and used in generating the dynamic model. In the second stage, the model is applied to normal flow data. Predictions of the effects of flowtube dynamics are made for both phase and frequency. The predictions then are subtracted from the observed data to leave the residual phase and frequency, which should be due to the process alone. Each stage is described in more detail below.

a. <u>System Identification</u>

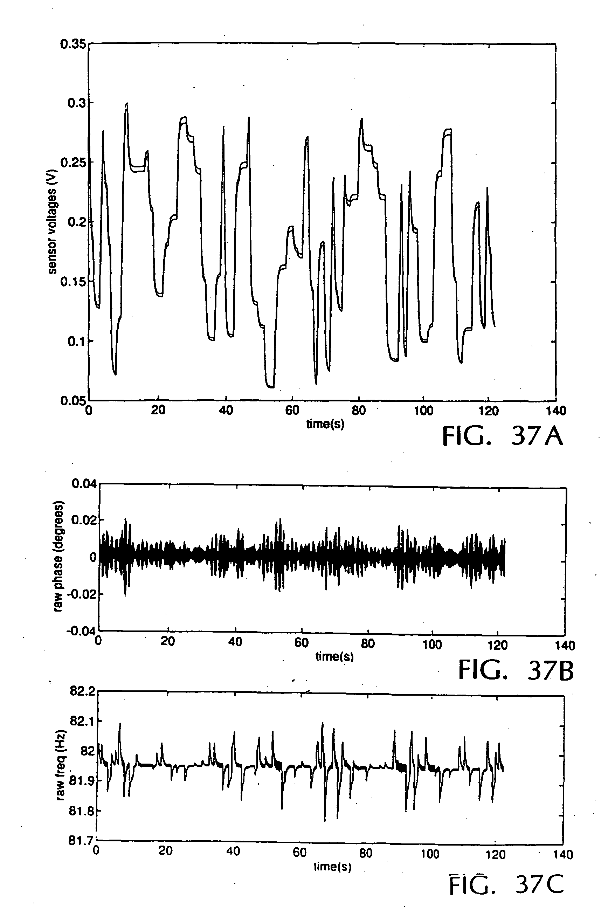

System identification begins with a flowtube full of water, with no flow. The amplitude of oscillation, which normally is kept constant, is allowed to vary by assigning a random setpoint between 0.05 V and 0.3 V, where 0.3 V is the usual value. The resulting sensor voltages are shown in Fig. 37A, while Figs. 37B and 37C show, respectively, the corresponding calculated phase and frequency values. These values are calculated once per cycle. Both phase and frequency show a high degree of "structure." Since the phase and frequency corresponding to mass flow are constant, this structure is likely to be related to flowtube dynamics. Observable variables that will predict this structure when the true phase and frequency are not known to be constant may be expressed as set forth below.

First, as noted above, $\Delta SV(t_k)$ may be expressed as:

$$\Delta SV(t_k) \;=\; \frac{SV(t_{k+1}) - SV(t_{k-1})}{t_{k+1} - t_{k-1}} \cdot \frac{1}{SV(t_k)} \;.$$

This expression may be used to determine $\Delta SV_1$ and $\Delta SV_2$.

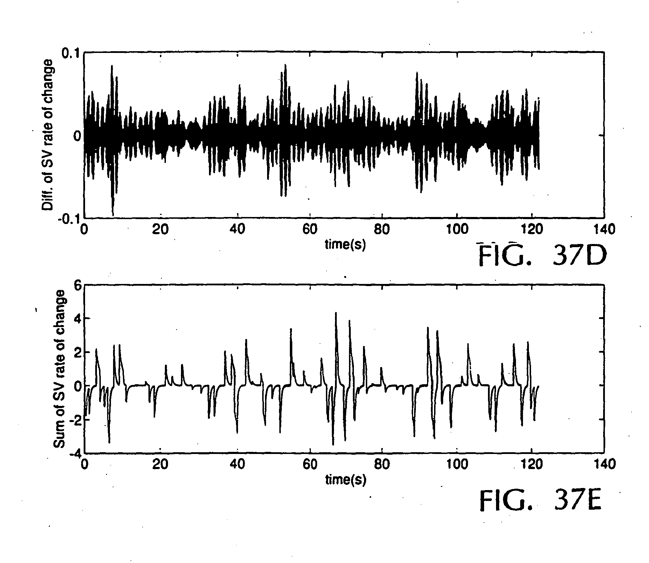

The phase of the flowtube is related to $\Delta^-$, which is defined as $\Delta SV_1 - \Delta SV_2$, while the frequency is related to $\Delta^+$, which is defined as $\Delta SV_1 + \Delta SV_2$. These parameters are illustrated in Figs. 37D and 37E. Comparing Fig. 37B to Fig. 37D and Fig. 37C to Fig. 37E shows the striking relationship between $\Delta^-$ and phase and between $\Delta^+$ and frequency.

Some correction for flowtube dynamics may be obtained by subtracting a multiple of the appropriate prediction function from the phase and/or the frequency. Improved results may be obtained using a model of the form:

$$y(k) + a_1 y(k-1) + \ldots + a_n y(k-n) = b_0 u(k) + b_1 u(k-1) + \ldots + b_m u(k-m),$$

where y(k) is the output (i.e., phase or frequency) and u is the prediction function (i.e., $\Delta^-$ or $\Delta^+$). The technique of system identification suggests values for the orders n and m, and the coefficients $a_i$ and $b_j$, of what are in effect polynomials in time. The value of y(k) can be calculated every cycle and subtracted from the observed phase or frequency to get the residual process value.

It is important to appreciate that, even in the absence of dynamic corrections, the digital flowmeter offers very good precision over a long period of time. For example, when totalizing a batch of 200kg, the device readily achieves a repeatability of less that 0.03%. The purpose of the dynamic modelling is to improve the dynamic precision. Thus, raw and compensated values should have similar mean values, but reductions in "variance" or "standard deviation."

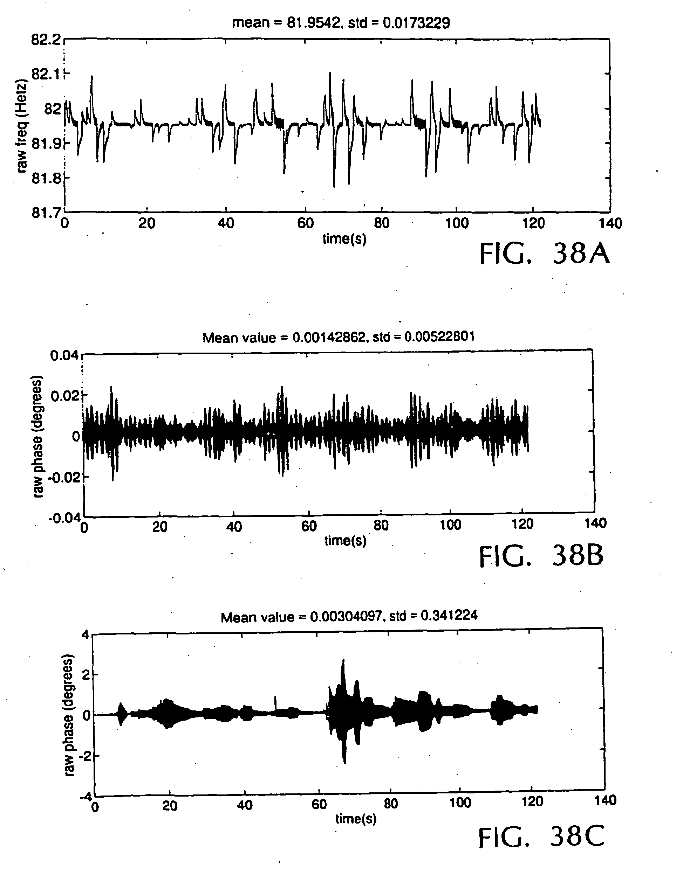

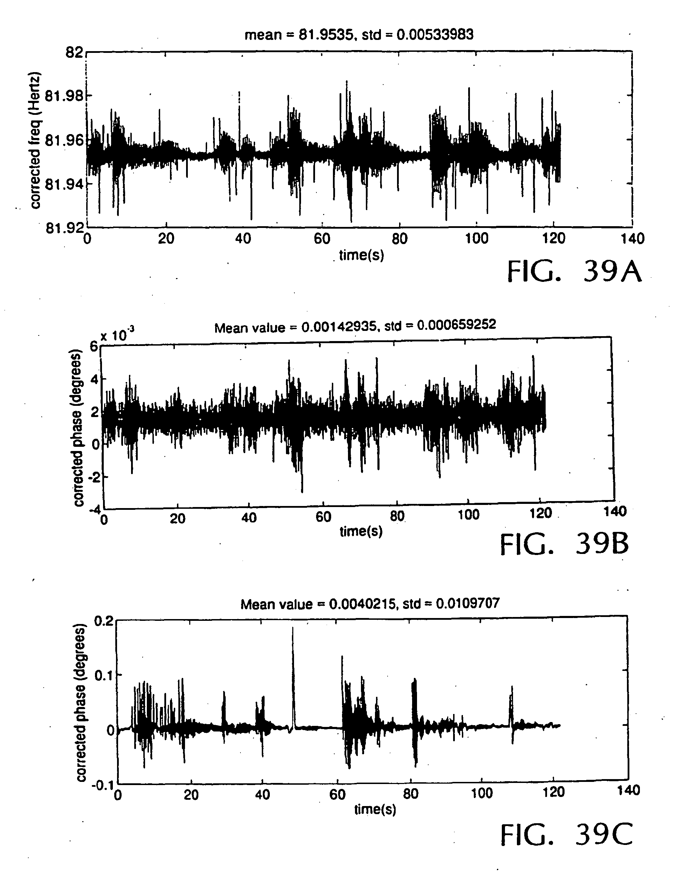

Figs. 38A and 39A show raw and corrected frequency values. The mean values are similar, but the standard deviation has been reduced by a factor of 3.25. Though the gross deviations in frequency have been eliminated, significant "structure" remains in the residual noise. This structure appears to be unrelated to the $\Delta^+$ function. The model used is a simple first order model, where m = n = 1.

Figs. 38B and 39B show the corresponding phase correction. The mean value is minimally affected, while the standard deviation is reduced by a factor of 7.9. The model orders are n = 2 and m = 10. Some structure appears to remain in the residual noise. It is expected that this structure is due to insufficient excitation of the phase dynamics by setpoint changes.

More effective phase identification has been achieved through further simulation of flowtube dynamics by continuous striking of the flowtube during data collection (set point changes are still carried out). Figs. 38C and 39C show the effects of correction under these conditions. As shown, the standard deviation is reduced by a factor of 31. This more effective model is used in the following discussions.

b. Application to Flow Data

The real test of an identified model is the improvements it provides for new data. At the outset, it is useful to note a number of observations. First, the mean phase, averaged over, for example, ten seconds or more, is already quite precise. In the examples shown, phase values are plotted at 82 Hz or thereabouts. The reported standard deviation would be roughly 1/3 of the values shown when averaged to 10Hz, and 1/9 when averages to 1 Hz. For reference, on a one inch flow tube, one degree of phase difference corresponds to about 1 kg/s flow rate.

The expected benefit of the technique is that of providing a much better dynamic response to true process changes, rather than improving average precision. Consequently, in the following examples, where the flow is non-zero, small flow step changes are introduced every ten seconds or so, with the expectation that the corrected phase will show up the step changes more clearly.

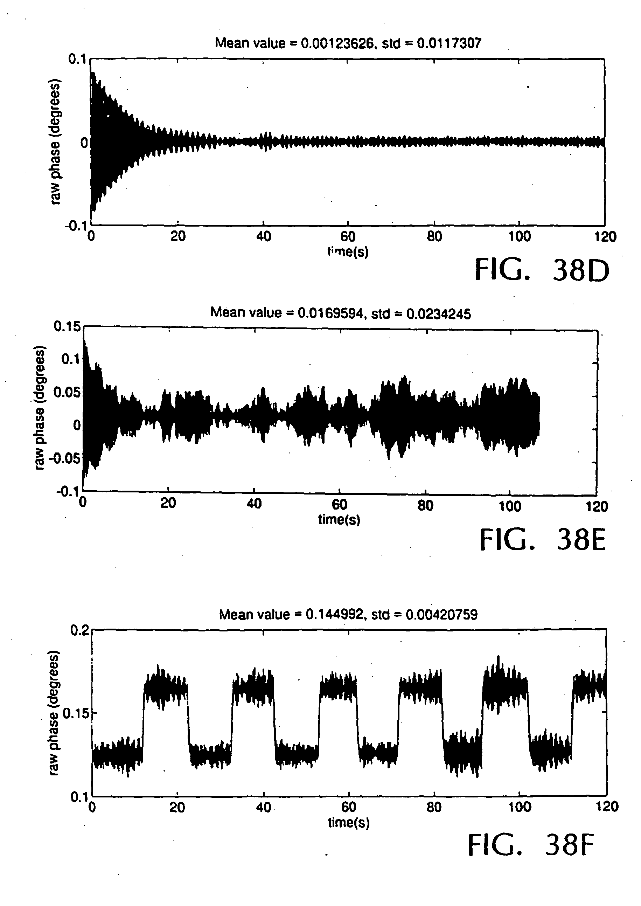

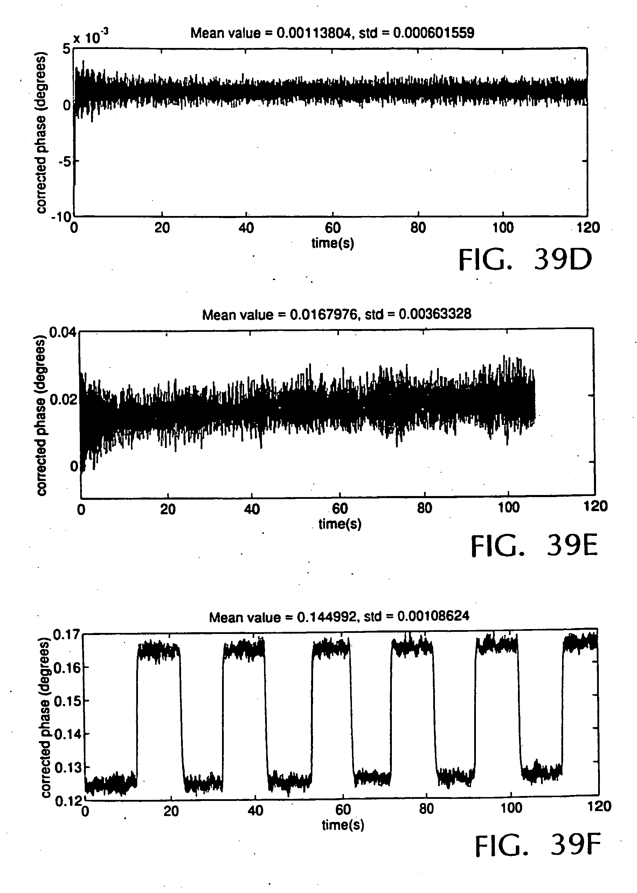

Figs. 38D and 39D show the correction applied to a full flowtube with zero flow, just after startup. The ringdown effect characteristic of startup is clearly evident in the raw data (Fig. 38D), but this is eliminated by the correction (Fig. 39D), leading to a standard deviation reduction of a factor of 23 over the whole data set. Note that the corrected measurement closely resembles white noise, suggesting most flowtube dynamics have been captured.

Figs. 38E and 39E show the resulting correction for a "drained" flowtube. Noise is reduced by a factor of 6.5 or so. Note, however, that there appears to be some residual structure in the noise.

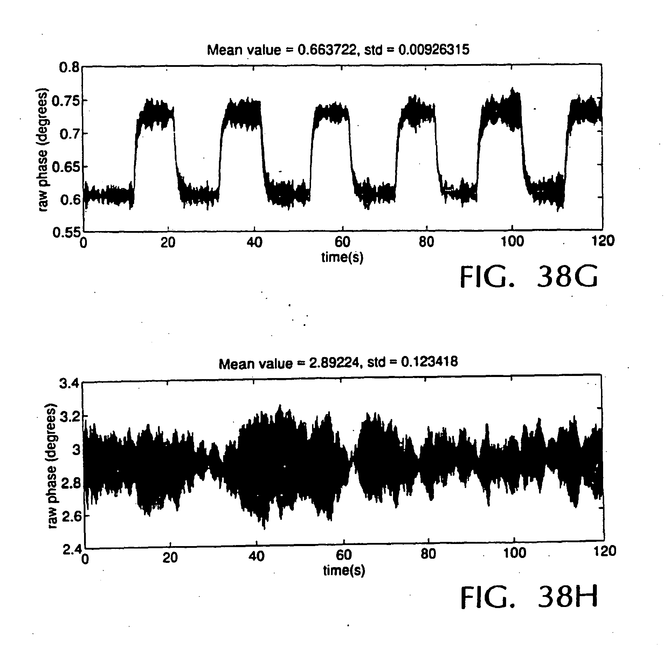

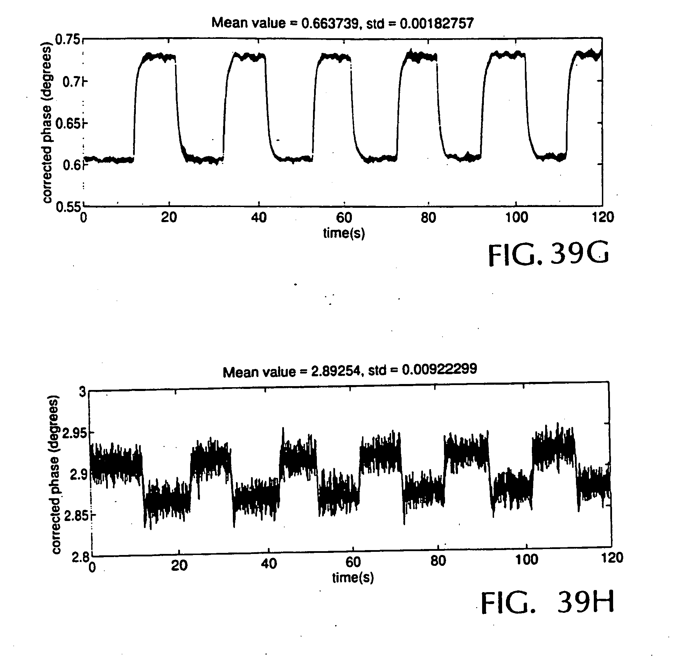

The effects of the technique on low (Figs. 38F and 39F), medium (Figs. 38G and 39G), and high (Figs. 38H and 39H) flow rates are also illustrated, each with step changes in flow every ten seconds. In each case, the pattern is the same: the corrected average flows (Figs. 39F-39H) are identical to the raw average flows (Figs. 38F-38H), but the dynamic noise is reduced considerably. In Fig. 39H, this leads to the emergence of the step changes which previously had been submerged in noise (Fig. 38H).

4. Extensions of Dynamic Monitoring and Compensation Techniques

The previous sections have described a variety of techniques (physical modelling, system identification, heuristics) used to monitor and compensate for different aspects of dynamic behavior (frequency and phase noise caused by amplitude modulation, velocity effect, flowtube dynamics at both the sensor and the flowtube level). By natural extension, similar techniques well-known to practitioners of control and/or instrumentation, including those of artificial intelligence, neural networks, fuzzy logic, and genetic algorithms, as well as classical modelling and identification methods, may be applied to these and other aspects of the dynamic performance of the meter. Specifically, these might include monitoring and compensation for frequency, amplitude and/or phase variation at the sensor level, as well as average frequency and phase difference at the flowtube level, as these variations occur within each measurement interval, as well as the time between measurement intervals (where measurement intervals do not overlap).

This technique is unusual in providing both reduced noise and improved dynamic response to process measurement changes. As such, the technique promises to be highly valuable in the context of flow measurement.

I. Aeration

The digital flowmeter provides improved performance in the presence of aeration in the conduit. Aeration causes energy losses in the conduit that can have a substantial negative impact on the measurements produced by a mass flowmeter and can result in stalling of the conduit. Experiments have shown that the digital flowmeter has substantially improved performance in the presence of aeration relative to traditional, analog flowmeters. This performance improvement may stem from the meter's ability to provide a very wide gain range, to employ negative feedback, to calculate measurements precisely at very low amplitude levels, and to compensate for dynamic effects such as rate of change of amplitude and flowtube dynamics, and also may stem from the meter's use of a precise digital amplitude control algorithm.

The digital flowmeter detects the onset of aeration when the required driver gain rises simultaneously with a drop in apparent fluid density. The digital flowmeter then may directly respond to detected aeration. In general, the meter monitors the presence of aeration by comparing the observed density of the material flowing through the conduit (i.e., the density measurement obtained through normal measurement techniques) to the known, nonaerated density of the material. The controller determines the level of aeration based on any difference between the observed and actual densities. The controller then corrects the mass flow measurement accordingly.

The controller determines the non-aerated density of the material by monitoring the density over time periods in which aeration is not present (i.e., periods in which the density has a stable value). Alternatively, a control system to which the controller is connected may provide the non-aerated density as an initialization parameter.

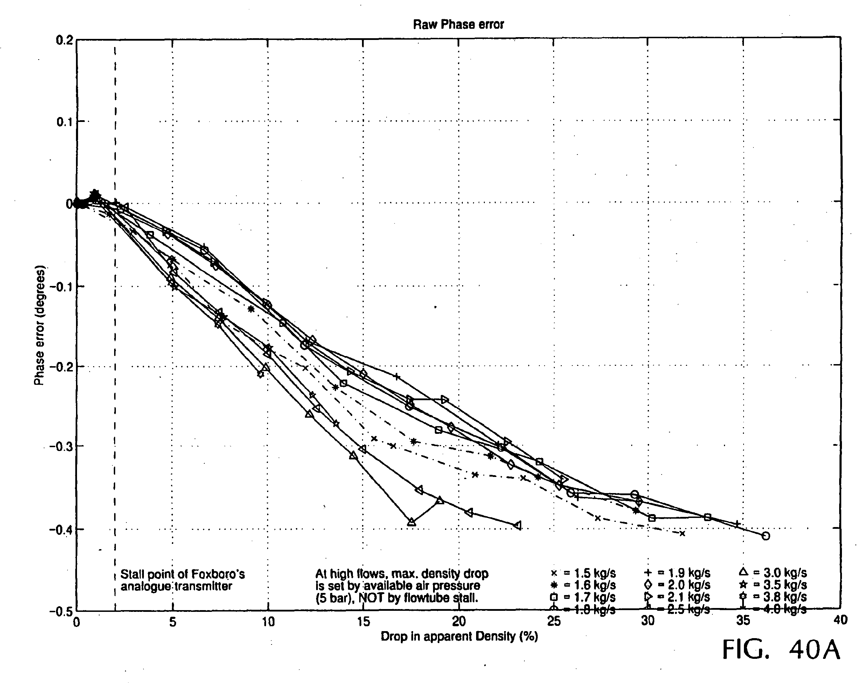

In one implementation, the controller uses three corrections to account for the effects of aeration: bubble effect correction, damping effect correction, and sensor imbalance correction. Figs. 40A-40H illustrate the effects of the correction procedure.

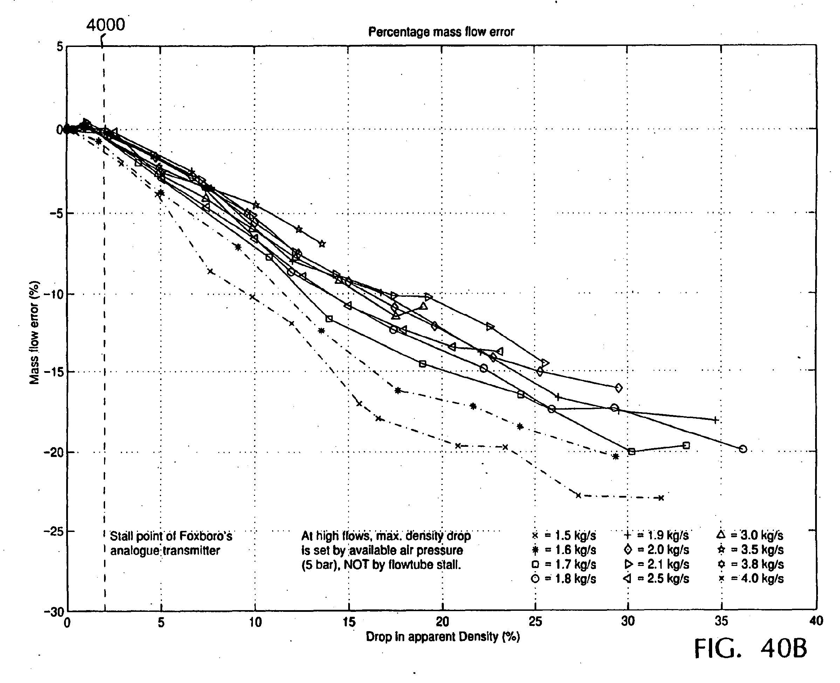

Fig. 40A illustrates the error in the phase measurement as the measured density decreases (i.e., as aeration increases) for different mass flow rates, absent aeration correction. As shown, the phase error is negative and has a magnitude that increases with increasing aeration. Fig. 40B illustrates that the resulting mass flow error is also negative. It also is significant to note that the digital flowmeter operates at high levels of aeration. By contrast, as indicated by the horizontal bar 4000, traditional analog meters tend to stall in the presence of low levels of aeration.

A stall occurs when the flowmeter is unable to provide a sufficiently large driver gain to allow high drive current at low amplitudes of oscillation. If the level of damping requires a higher driver gain than can be delivered by the flowtube in order to maintain oscillation at a certain amplitude, then insufficient drive energy is supplied to the conduit. This results in a drop in amplitude of oscillation, which in turn leads to even less drive energy supplied due to the maximum gain limit. Catastrophic collapse results, and flowtube oscillation is not possible until the damping reduces to a level at which the corresponding driver gain requirement can be supplied by the flowmeter.

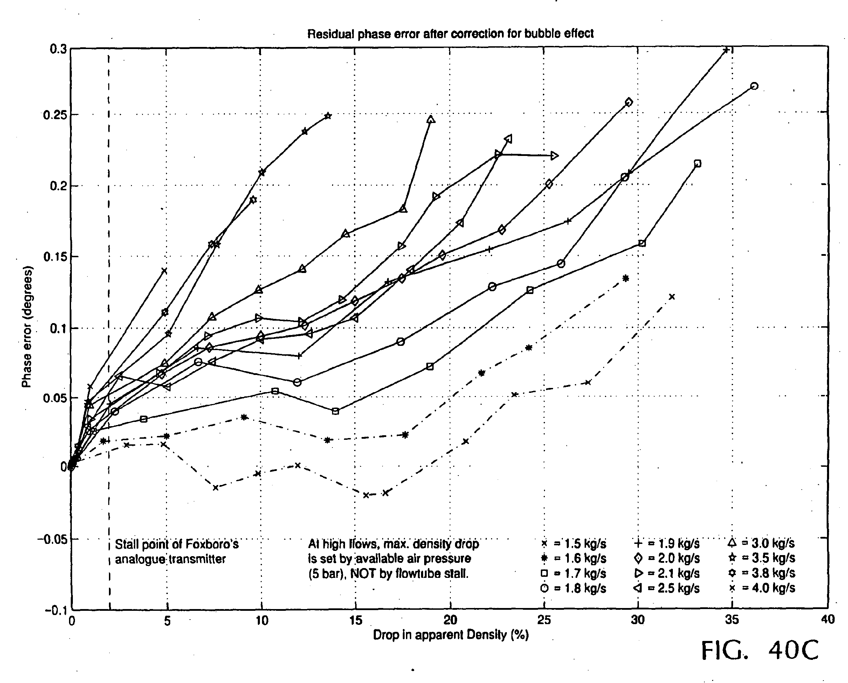

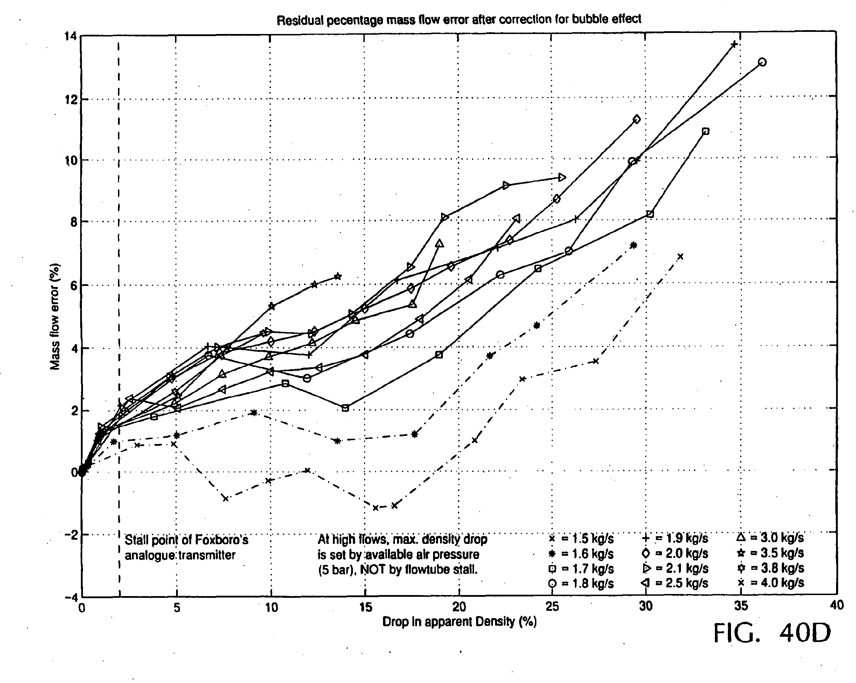

The bubble effect correction is based on the assumption that the mass flow decreases as the level of aeration, also referred to as the void fraction, increases. Without attempting to predict the actual relationship between void fraction and the bubble effect, this correction assumes, with good theoretical justification, that the effect on the observed mass flow will be the same as the effect on the observed density. Since the true fluid density is known, the bubble effect correction corrects the mass flow rate by the same proportion. This correction is a linear adjustment that is the same for all flow rates. Figs. 40C and 40D illustrate, respectively, the residual phase and mass flow errors after correction for the bubble effect. As shown, the residual errors are now positive and substantially smaller in magnitude than the original errors.

The damping factor correction accounts for damping of the conduit motion due to aeration. In general, the damping factor correction is based on the following relationship between the observed phase, $\varphi_{obs}$, and the actual phase, $\varphi_{true}$:

$$\varphi_{obs} = \varphi_{true}\left(1 + \frac{k\lambda^2\varphi_{true}}{f^2}\right),$$

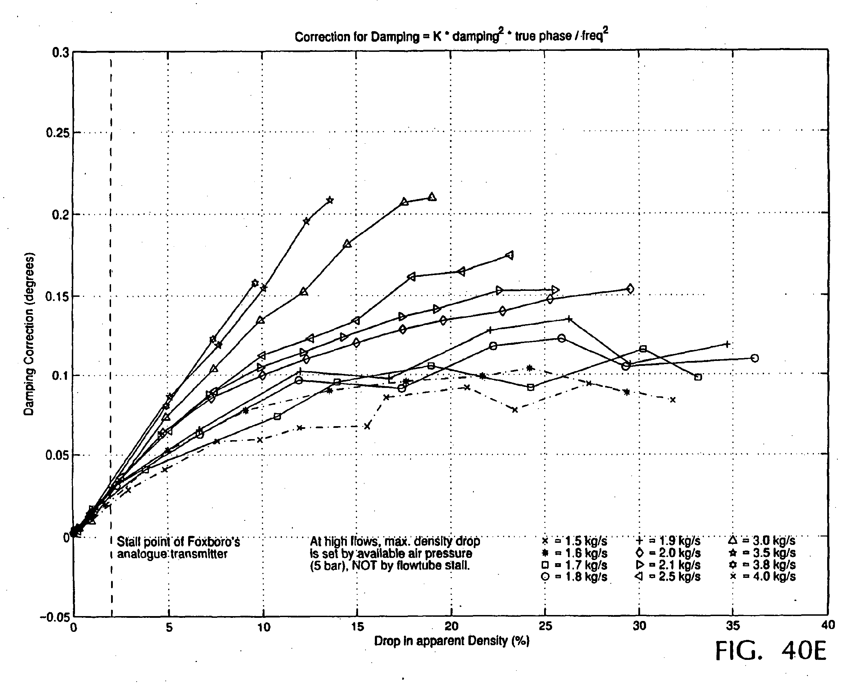

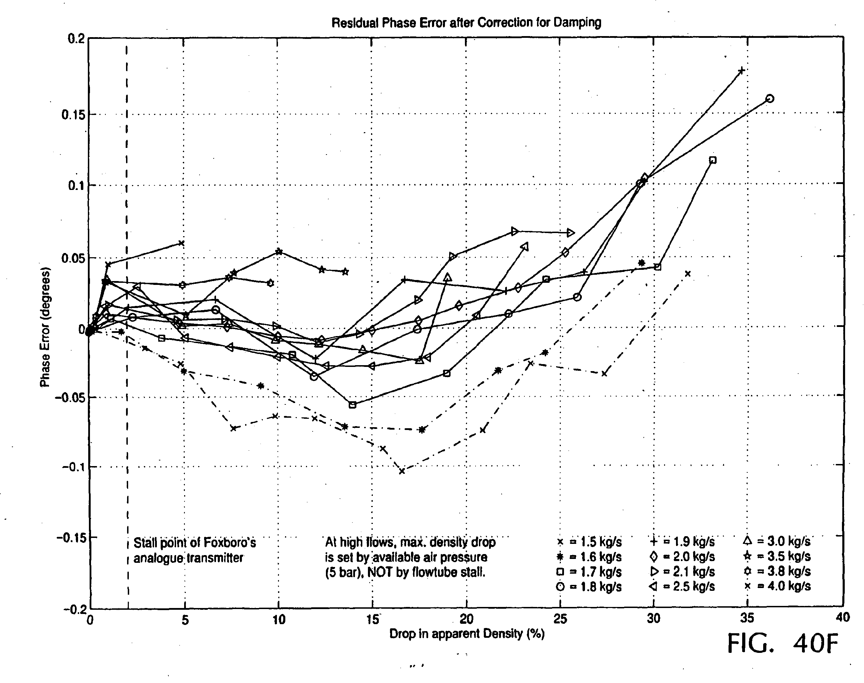

where $\lambda$ is a damping coefficient and $k$ is a constant. Fig. 40E illustrates the damping correction for different mass flow rates and different levels of aeration. Fig. 40F illustrates the residual phase error after correction for damping. As shown, the phase error is reduced substantially relative to the phase error remaining after bubble effect correction.

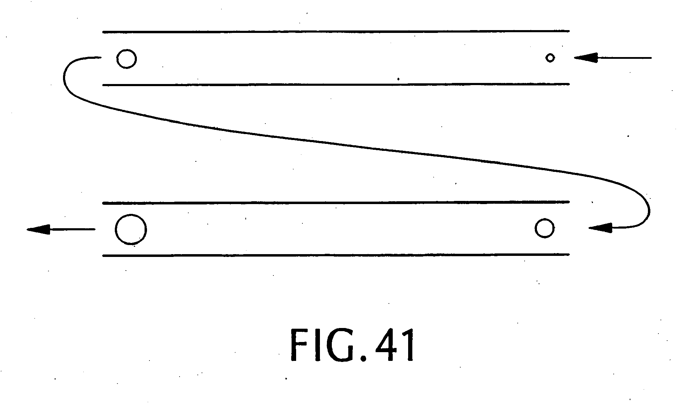

The sensor balance correction is based on density differences between different ends of the conduit. As shown in Fig. 41, a pressure drop between the inlet and the outlet of the conduit results in increasing bubble sizes from the inlet to the outlet. Since material flows serially through the two loops of the conduit, the bubbles at the inlet side of the conduit (i.e., the side adjacent to the first sensor/driver pair) will be smaller than the bubbles at the outlet side of the conduit (i.e., the side adjacent to the second sensor/driver pair). This difference in bubble size results in a difference in mass and density between the two ends of the conduit. This difference is reflected in the sensor signals ($SV_1$ and $SV_2$). Accordingly, the sensor balance correction is based on a ratio of the two sensor signals.

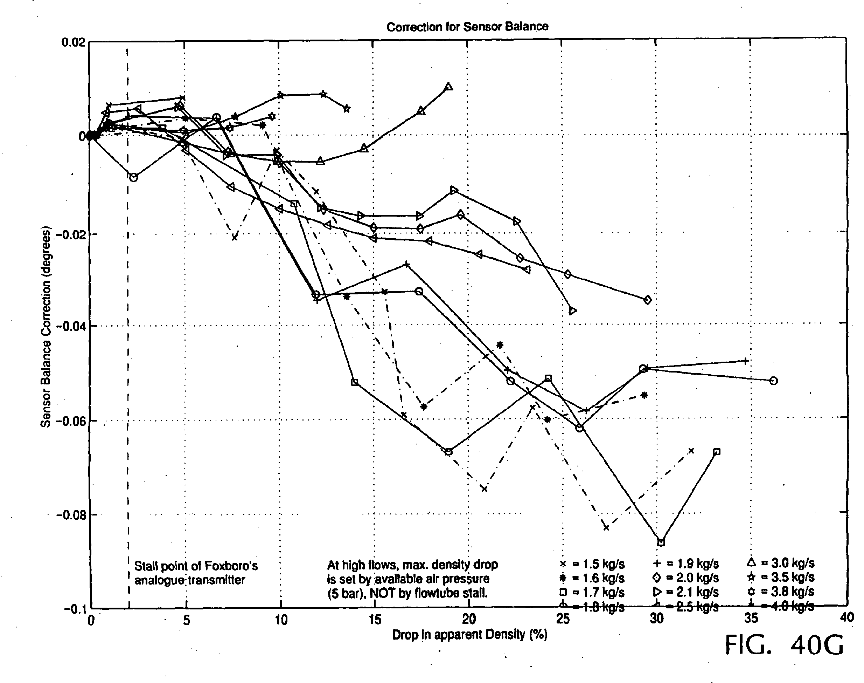

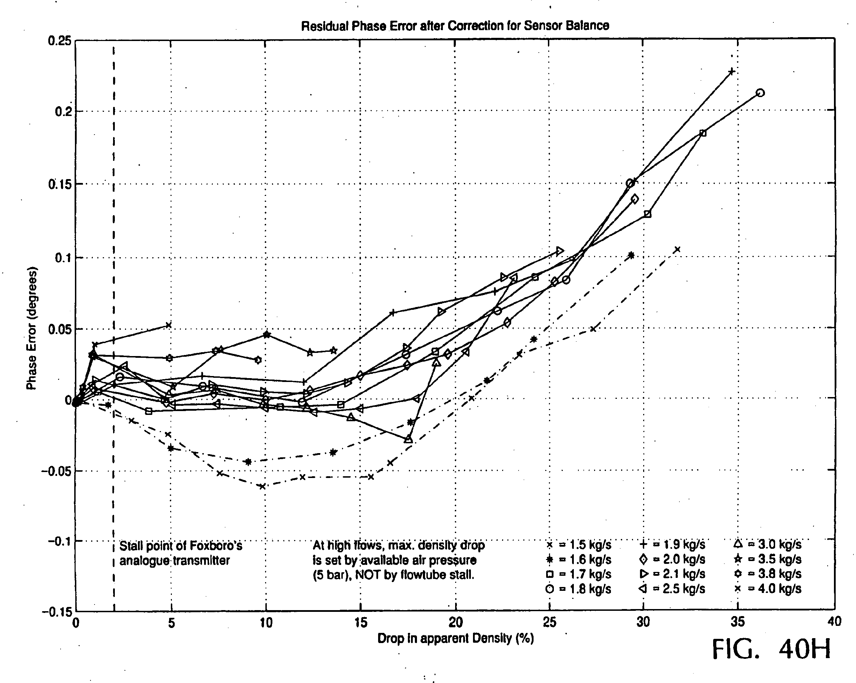

Fig. 40G illustrates the sensor balance correction for different mass flow rates and different levels of aeration. Fig. 40H illustrates the residual phase error after applying the sensor balance correction. At low flow rates and low levels of aeration, the phase error is improved relative to the phase error remaining after damping correction.

Other correction factors also could be used. For example, the phase angle of each sensor signal could be monitored. In general, the average phase angle for a signal should be zero. However, the average phase angle tends to increase with increasing aeration. Accordingly, a correction factor could be generated based on the value of the average phase angle. Another correction factor could be based on the temperature of the conduit.

In general, application of the correction factors tends to keep the mass flow errors at one percent or less. Moreover, these correction factors appear to be applicable over a wide range of flows and aeration levels.

J. <u>Setpoint Adjustment</u>

The digital flowmeter provides improved control of the setpoint for the amplitude of oscillation of the conduit. In an analog meter, feedback control is used to maintain the amplitude of oscillation of the conduit at a fixed level corresponding to a desired peak sensor voltage (e.g., 0.3 V). A stable amplitude of oscillation leads to reduced variance in the frequency and phase measurements.

In general, a large amplitude of oscillation is desirable, since such a large amplitude provides a large Coriolis signal for measurement purposes. A large amplitude of oscillation also results in storage of a higher level of energy in the conduit, which provides greater robustness to external vibrations.

Circumstances may arise in which it is not possible to maintain the large amplitude of oscillation due to limitations in the current that can be supplied to the drivers. For example, in one implementation of an analog transmitter, the current is limited to 100 mA for safety purposes. This is typically 5-10 times the current needed to maintain the desired amplitude of oscillation. However, if the process fluid provides significant additional damping (e.g., via two-phase flow), then the optimal amplitude may no longer be sustainable.

Similarly, a low-power flowmeter, such as the two-wire meter described below, may have much less power available to drive the conduit. In addition, the power level may vary when the conduit is driven by capacitive discharge.

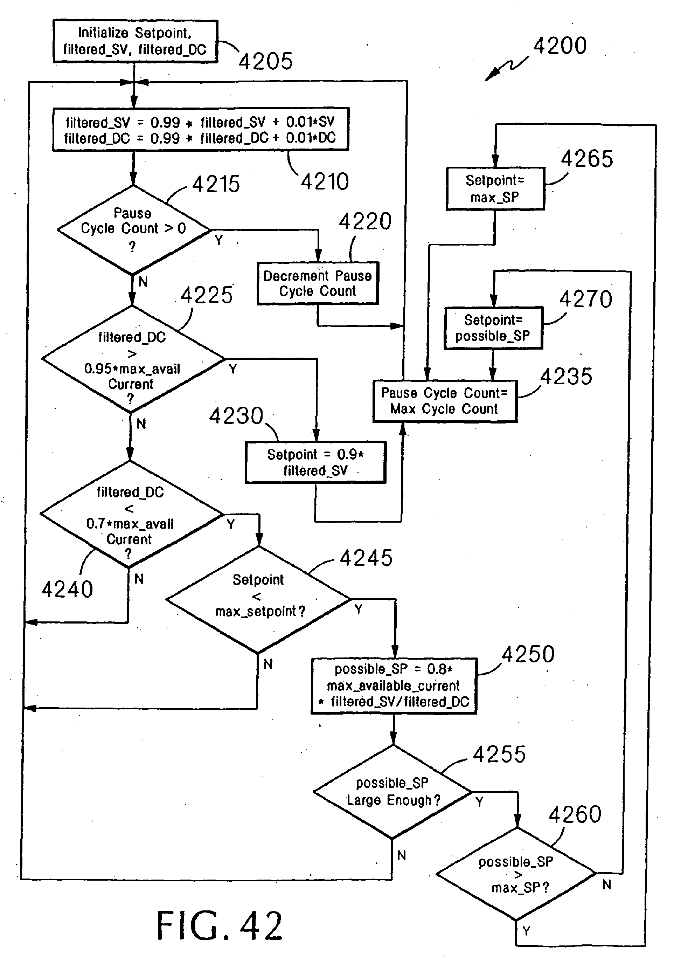

Referring to Fig. 42, a control procedure 4200 implemented by the controller of the digital flowmeter may be used to select the highest sustainable setpoint given a maximum available current level. In general, the procedure is performed each time that a desired drive current output is selected, which typically is once per cycle, or once every half-cycle if interleaved cycles are used.

The controller starts by setting the setpoint to a default value (e.g., 0.3 V) and initializing filtered representations of the sensor voltage (filtered_SV) and the drive current (filtered_DC). Each time that the procedure is performed, the controller updates the filtered values based on current values for the sensor voltage (SV) and drive current (DC) (step 4210). For example, the controller may generate a new value for filtered_SV as the sum of ninety nine percent of filtered_SV and one percent of SV.

Next, the controller determines whether the procedure has been paused to provide time for prior setpoint adjustments to take effect (step 4215). Pausing of the procedure is indicated by a pause cycle count having a value greater than zero. If the procedure is paused, the controller performs no further actions for the cycle and decrements the pause cycle count (step 4220).

If the procedure has not been paused, the controller determines whether the filtered drive current exceeds a threshold level (step 4225). In one implementation, the threshold level is ninety five percent of the maximum available current. If the current exceeds the threshold, the controller reduces the setpoint (step 4230). To allow time for the meter to settle after the setpoint change, the controller then implements a pause of the procedure by setting the pause cycle count equal to an appropriate value (e.g., 100) (step 4235).

If the procedure has not been paused, the controller determines whether the filtered drive current is less than a threshold level (step 4240) and the setpoint is less than a maximum permitted setpoint (step 4245). In one implementation, the threshold level equals seventy percent of the maximum available current. If both conditions are met, the controller determines a possible new setpoint (step 4250). In one implementation, the controller determines the new setpoint as eighty percent of the maximum available current multiplied by the ratio of filtered_SV to filtered_DC. To avoid small changes in the setpoint (i.e., chattering), the controller then determines whether the possible new setpoint exceeds the current setpoint by a sufficient amount (step 4255). In one implementation, the possible new setpoint must exceed the current setpoint by 0.02 V and by ten percent.

If the possible new setpoint is sufficiently large, the controller determines if it is greater than the maximum permitted setpoint (step 4260). If so, the controller sets the setpoint equal to the maximum permitted setpoint (step 4265). Otherwise, the controller sets the setpoint equal to the possible new setpoint (step 4270). The controller then implements a pause of the procedure by setting the pause cycle count equal to an appropriate value (step 4235).

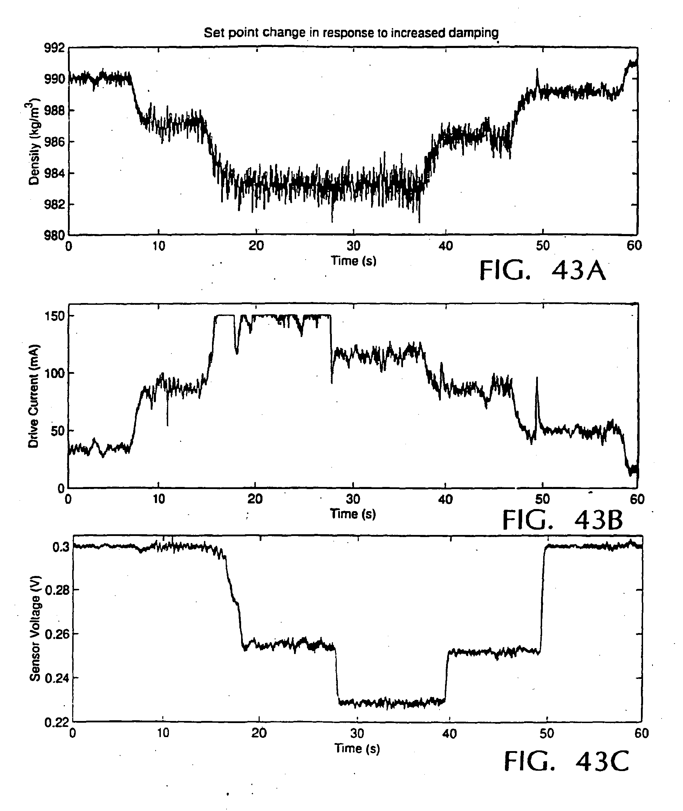

Figs. 43A-43C illustrate operation of the setpoint adjustment procedure. As shown in Fig. 43C, the system starts with a setpoint of 0.3 V. At about eight seconds of operation, aeration results in a drop in the apparent density of the material in the conduit (Fig. 43A). Increased damping accompanying the aeration results in an increase in the drive current (Fig. 43B) and increased noise in the sensor voltage (Fig. 43C). No changes are made at this time, since the meter is able to maintain the desired setpoint.

At about fifteen seconds of operation, aeration increases and the apparent density decreases further (Fig. 43A). At this level of aeration, the driver current (Fig. 43B) reaches a maximum value that is insufficient to maintain the 0.3 V setpoint. Accordingly, the sensor voltage drops to 0.26 V (Fig. 43C), the voltage level that the maximum driver current is able to maintain. In response to this condition, the controller adjusts the setpoint (at about 28 seconds of operation) to a level (0.23 V) that does not require generation of the maximum driver current.

At about 38 seconds of operation, the level of aeration decreases and the apparent density increases (Fig. 43A). This results in a decrease in the drive current (Fig. 43B). At 40 seconds of operation, the controller responds to this condition by increasing the setpoint (Fig. 43C). The level of aeration decreases and the apparent density increases again at about 48 seconds of operation, and the controller responds by increasing the setpoint to 0.3 V.

K. Performance Results

The digital flowmeter has shown remarkable performance improvements relative to traditional analog flowmeters. In one experiment, the ability of the two types of meters to accurately measure a batch of material was examined. In each case, the batch was fed through the appropriate flowmeter and into a, tank, where the batch was then weighed. For 545 kg and 1090 kg (1200 and 2400 pound) batches, the analog meter provided an average offset of 230 kg (500 pounds), with a repeatability of 90 kg (200 pounds). By contrast, the digital meter provided an average offset of 18 kg (40 pounds), with a repeatabilty of 0.9 kg (two pounds), which clearly is a substantial improvement.

In each case, the conduit and surrounding pipework were empty at the start of the batch. This is important in many batching applications where it is not practical to start the batch with the conduit full. The batches were finished with the flowtube full. Some positive offset is expected because the flowmeter is measuring the material needed to fill the pipe before the weighing tank starts to be filled. Delays in starting up, or offsets caused by aerated flow or low amplitudes of oscillation, are likely to introduce negative offsets. For real batching applications, the most important issue is the repeatability of the measurement.

The results show that with the analog flowmeter there are large negative offsets and repeatability of only 90 kg (200 pounds). This is attributable to the length of time taken to startup after the onset of flow (during which no flow is metered), and measurement errors until full amplitude of oscillation is achieved. By comparison, the digital flowmeter achieves a positive offset, which is attributable to filling up of the empty pipe, and a repeatability is two pounds.

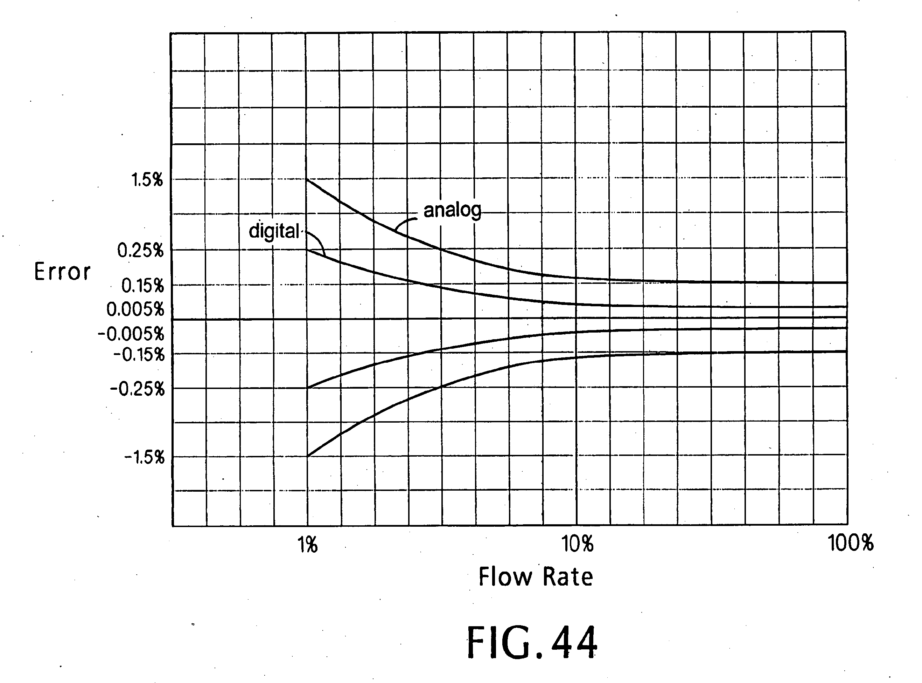

Another experiment compared the general measurement accuracy of the two types of meters. Fig. 44 illustrates the accuracy and corresponding uncertainty of the measurements produced by the two types of meters at different percentages of the meters' maximum recommended flow rate. At high flow rates (i.e., at rates of 25% or more of the maximum rate), the analog meter produces measurements that correspond to actual values to within 0.15% or less, compared to 0.005% or less for the digital meter. At lower rates, the offset of the analog meter is on the order of 1.5%, compared to 0.25% for the digital meter.

L. Self-Validating Meter

The digital flowmeter may used in a control system that includes self-validating sensors. To this end, the digital flowmeter may be implemented as a self-validating meter. Self-validating meters and other sensors are described in U.S. Patent No. 5,570,300, entitled "SELF-VALIDATING SENSORS."

In general, a self-validating meter provides, based on all information available to the meter, a best estimate of the value of a parameter (e.g., mass flow) being monitored. Because the best estimate is based, in part, on nonmeasurement data, the best estimate does not always conform to the value indicated by the current, possibly faulty, measurement data. A self-validating meter also provides information about the uncertainty and reliability of the best estimate, as well as information about the operational status of the sensor. Uncertainty information is derived from known uncertainty analyses and is provided even in the absence of faults.

In general, a self-validating meter provides four basic parameters: a validated measurement value (VMV), a validated uncertainty (VU), an indication (MV status) of the status under which the measurement was generated, and a device status. The VMV is the meter's best estimate of the value of a measured parameter. The VU and the MV status are associated with the VMV. The meter produces a separate VMV, VU and MV status for each measurement. The device status indicates the operational status of the meter.

The meter also may provide other information. For example, upon a request from a control system, the meter may provide detailed diagnostic information about the status of the meter. Also, when a measurement has exceeded, or is about to exceed, a predetermined limit, the meter can send an alarm signal to the control system. Different alarm levels can be used to indicate the severity with which the measurement has deviated from the predetermined value.

VMV and VU are numeric values. For example, VMV could be a temperature measurement valued at 200 degrees and VU, the uncertainty of VMV, could be 9 degrees. In this case, there is a high probability (typically 95%) that the actual temperature being measured falls within an envelope around VMV and designated by VU (i.e., from 191 degrees to 209 degrees).

The controller generates VMV based on underlying data from the sensors. First, the controller derives a raw measurement value (RMV) that is based on the signals from the sensors. In general, when the controller detects no abnormalities, the controller has nominal confidence in the RMV and sets the VMV equal to the RMV. When the controller detects an abnormality in the sensor, the controller does not set the VMV equal to the RMV. Instead, the controller sets the VMV equal to a value that the controller considers to be a better estimate than the RMV of the actual parameter.

The controller generates the VU based on a raw uncertainty signal (RU) that is the result of a dynamic uncertainty analysis of the RMV. The controller performs this uncertainty analysis during each sampling period. Uncertainty analysis, originally described in "Describing Uncertainties in Single Sample Experiments," S.J. Kline & F.A. McClintock, Mech. Eng., 75, 3-8 (1953), has been widely applied and has achieved the status of an international standard for calibration. Essentially, an uncertainty analysis provides an indication of the "quality" of a measurement. Every measurement has an associated error, which, of course, is unknown. However, a reasonable limit on that error can often be expressed by a single uncertainty number (ANSI/ASME PTC 19.1-1985 Part 1, Measurement Uncertainty: Instruments and Apparatus).

As described by Kline & McClintock, for any observed measurement $M$, the uncertainty in $M$, $w_M$, can be defined as follows:

$$M_{true} \in [M - w_M, \ M + w_M]$$

where $M$ is true ($M_{true}$) with a certain level of confidence (typically 95%). This uncertainty is readily expressed in a relative form as a proportion of the measurement (i.e. $w_M/M$).

In general, the VU has a non-zero value even under ideal conditions (i.e., a faultless sensor operating in a controlled, laboratory environment). This is because the measurement produced by a sensor is never completely certain and there is always some potential for error. As with the VMV, when the controller detects no abnormalities, the controller sets the VU equal to the RU. When the controller detects a fault that only partially affects the reliability of the RMV, the controller typically performs a new uncertainty analysis that accounts for effects of the fault and sets the VU equal to the results of this analysis. The controller sets the VU to a value based on past performance when the controller determines that the RMV bears no relation to the actual measured value.

To ensure that the control system uses the VMV and the VU properly, the MV status provides information about how they were calculated. The controller produces the VMV and the VU under all conditions--even when the sensors are inoperative. The control system needs to know whether VMV and VU are based on "live" or historical data. For example, if the control system were using VMV and VU in feedback control and the sensors were inoperative, the control system would need to know that VMV and VU were based on past performance.

The MV status is based on the expected persistence of any abnormal condition and on the confidence of the controller in the RMV. The four primary states for MV status are generated according to Table 1.

**Table 1**

| Expected Persistence | Confidence in RMV | MV Status |
|---|---|---|
| not applicable | nominal | CLEAR |
| not applicable | reduced | BLURRED |
| short | zero | DAZZLED |
| long | zero | BLIND |

A CLEAR MV status occurs when RMV is within a normal range for given process conditions. A DAZZLED MV status indicates that RMV is quite abnormal, but the abnormality is expected to be of short duration. Typically, the controller sets the MV status to DAZZLED when there is a sudden change in the signal from one of the sensors and the controller is unable to clearly establish whether this change is due to an as yet undiagnosed sensor fault or to an abrupt change in the variable being measured. A BLURRED MV status indicates that the RMV is abnormal but reasonably related to the parameter being measured. For example, the controller may set the MV status to BLURRED when the RMV is a noisy signal. A BLIND MV status indicates that the RMV is completely unreliable and that the fault is expected to persist.

Two additional states for the MV status are UNVALIDATED and SECURE. The MV status is UNVALIDATED when the controller is not performing validation of VMV. MV status is SECURE when VMV is generated from redundant measurements in which the controller has nominal confidence.

The device status is a generic, discrete value summarizing the health of the meter. It is used primarily by fault detection and maintenance routines of the control system. Typically, the device status 32 is in one of six states, each of which indicates a different operational status for the meter. These states are: GOOD, TESTING, SUSPECT, IMPAIRED, BAD, or CRITICAL. A GOOD device status means that the meter is in nominal condition. A TESTING device status means that the meter is performing a self check, and that this self check may be responsible for any temporary reduction in measurement quality. A SUSPECT device status means that the meter has produced an abnormal response, but the controller has no detailed fault diagnosis. An IMPAIRED device status means that the meter is suffering from a diagnosed fault that has a minor impact on performance. A BAD device status means that the meter has seriously malfunctioned and maintenance is required. Finally, a CRITICAL device status means that the meter has malfunctioned to the extent that the meter may cause (or have caused) a hazard such as a leak, fire, or explosion.

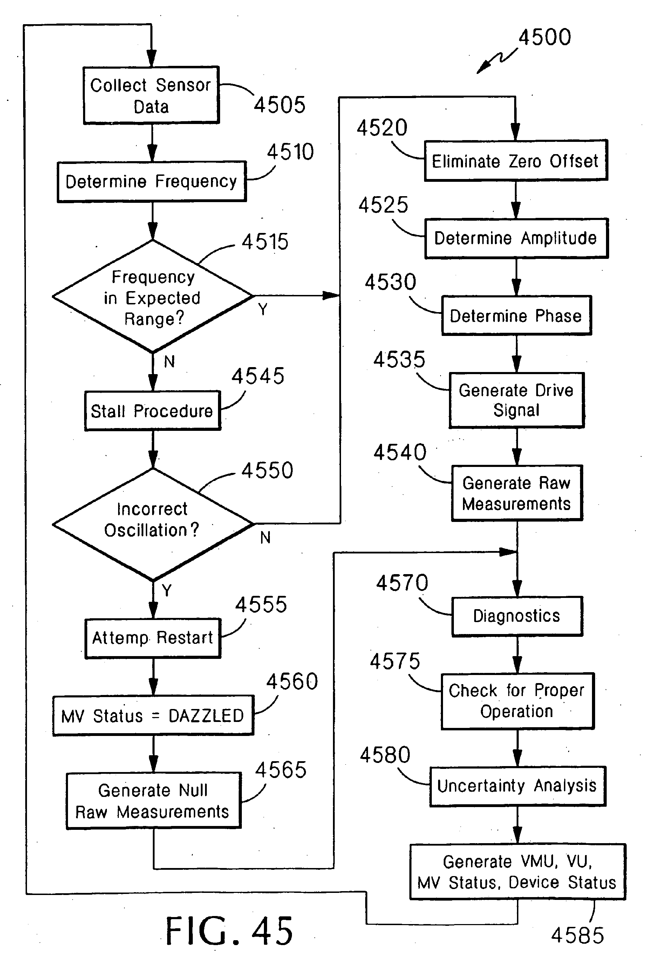

Fig. 45 illustrates a procedure 4500 by which the controller of a self-validating meter processes digitized sensor signals to generate drive signals and a validated mass flow measurement with an accompanying uncertainty and measurement status. Initially, the controller collects data from the sensors (step 4505). Using this data, the controller determines the frequency of the sensor signals (step 4510). If the frequency falls within an expected range (step 4515), the controller eliminates zero offset from the sensor signals (step 4520), and determines the amplitude (step 4525) and phase (step 4530) of the sensor signals. The controller uses these calculated values to generate the drive signal (step 4535) and to generate a raw mass flow measurement and other measurements (step 4540).

If the frequency does not fall within an expected range (step 4515), then the controller implements a stall procedure (step 4545) to determine whether the conduit has stalled and to respond accordingly. In the stall procedure, the controller maximizes the driver gain and performs a broader search for zero crossings to determine whether the conduit is oscillating at all.

If the conduit is not oscillating correctly (i.e., if it is not oscillating, or if it is oscillating at an unacceptably high frequency (e.g., at a high harmonic of the resonant frequency)) (step 4550), the controller attempts to restart normal oscillation (step 4555) of the conduit by, for example, injecting a square wave at the drivers. After attempting to restart oscillation, the controller sets the MV status to DAZZLED (step 4560) and generates null raw measurement values (step 4565). If the conduit is oscillating correctly (step 4550), the controller eliminates zero offset (step 4520) and proceeds as discussed above.

After generating raw measurement values (steps 4540 or 4565), the controller performs diagnostics (step 4570) to determine whether the meter is operating correctly (step 4575). (Note that the controller does not necessarily perform these diagnostics during every cycle.)

Next, the controller performs an uncertainty analysis (step 4580) to generate a raw uncertainty value. Using the raw measurements, the results of the diagnostics, and other information, the controller generates the VMV, the VU, the MV status, and the device status (step 4585). Thereafter, the controller collects a new set of data and repeats the procedure. The steps of the procedure 4500 may be performed serially or in parallel, and may be performed in varying order.

In another example, when aeration is detected, the mass flow corrections are applied as described above, the MV status becomes blurred, and the uncertainty is increased to reflect the probable error of the correction technique. For example, for a flowtube operating at 50% flowrate, under normal operating conditions, the uncertainty might be of the order of 0.1 - 0.2% of flowrate. If aeration occurs and is corrected for using the techniques described above, the uncertainty might be increased to perhaps 2% of reading. Uncertainty values should decrease as understanding of the effects of aeration improves and the ability to compensate for aeration gets better. In batch situations, where flow rate uncertainty is variable (e.g. high at start/end if batching from/to empty, or during temporary incidents of aeration or cavitation), the uncertainty of the batch total will reflect the weighted significance of the periods of high uncertainty against the rest of the batch with nominal low uncertainty. This is a highly useful quality metric in fiscal and other metering applications.

M. <u>Two Wire Flowmeter</u>

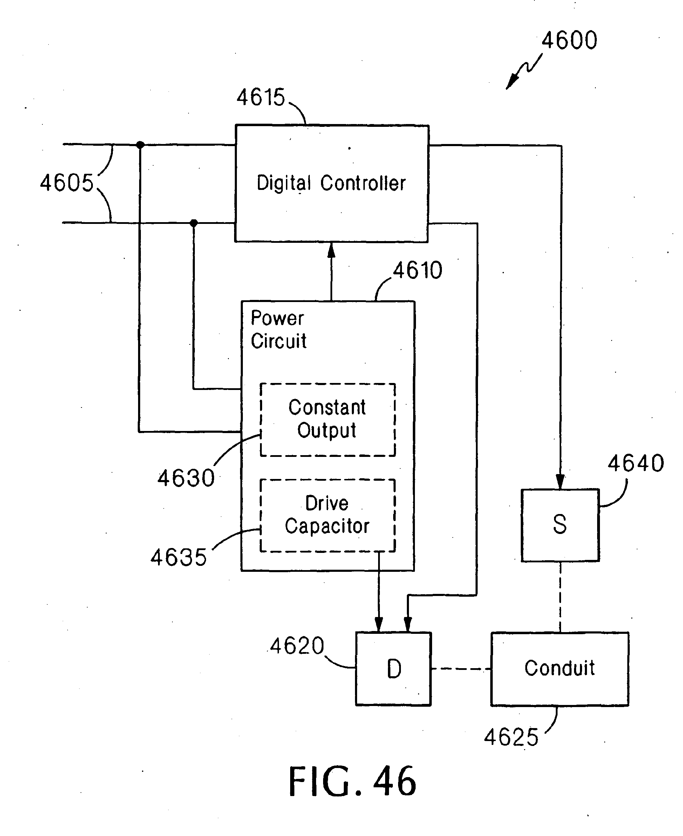

Other embodiments are also contemplated. For example, as shown in Fig. 46, the techniques described above may be used to implement a "two-wire" Coriolis flowmeter 4600 that performs bidirectional communications on a pair of wires 4605. A power circuit 4610 receives power for operating a digital controller 4615 and for powering the driver(s) 4620 to vibrate the conduit 4625. For example, the power circuit may include a constant output circuit 4630 that provides operating power to the controller and a drive capacitor 4635 that is charged using excess power. The power circuit may receive power from the wires 4605 or from a second pair of wires. The digital controller receives signals from one or more sensors 4640.

When the drive capacitor is suitably charged, the controller 4615 discharges the capacitor 4635 to drive the conduit 4625. For example, the controller may drive the conduit once during every 10 cycles. The controller 4615 receives and analyzes signals from the sensors 4640 to produce a mass flow measurement that the controller then transmits on the wires 4605.

Other embodiments are within the scope of the following claims.

**Claims**

**1.** A digital flowmeter (100) comprising:

a vibratable conduit (120);
a driver (115, 46, 46a) connected to the conduit and operable to impart motion to the conduit;
a sensor (120, 48, 48a) connected to the conduit and operable to sense the motion of the conduit; and
a control and measurement system (105) connected between the driver and the sensor, wherein the control and measurement system is operable to:

receive (605) a sensor signal from the sensor,
generate (630) a drive signal based on the sensor signal,
supply the drive signal to the driver, and generate (635) a measurement of a property of material flowing through the conduit based on the signal from the sensor;

**characterised in that** the control and measurement system generates the drive signal using digital signal processing, and
wherein the control and measurement system uses digital processing to adjust a phase of the drive signal to compensate for a time delay associated with the sensor and components connected between the sensor and the driver.

2. The digital flowmeter of claim 1, further comprising a second sensor (120, 48b) connected to the conduit (120) and operable to sense the motion of the conduit, wherein the control and measurement system (105) is connected to the second sensor to:

receive (605) a second sensor signal from the second sensor,
generate (630) the drive signal based on the first and second sensor signals using digital signal processing, and
generate (635) the measurement of the property of material flowing through the conduit based on the first and second sensor signals.

3. The digital flowmeter of claim 2, further comprising a second driver (115), wherein the control and measurement system (105) generates different drive signals for the two drivers.

4. The digital flowmeter of claim 3, wherein the control and measurement system (105) generates drive signals having different frequencies.

5. The digital flowmeter of claim 4, wherein the control and measurement system (105) generates drive signals having different amplitudes.

6. The digital flowmeter of claim 1, further comprising circuitry for measuring current supplied to the driver (115).

7. The digital flowmeter of claim 6, wherein the circuitry comprises a resistor (520) in series with the driver (115) and an analog-to-digital converter (530) in parallel with the resistor to measure a voltage across the resistor, to convert the measured voltage to a digital value, and to supply the digital value to the control and measurement system (105).

8. The digital flowmeter of claim 1, further comprising a first pressure sensor (540) connected to measure a first pressure at an inlet (545) to the conduit (120) and a second pressure sensor (540) connected to measure a second pressure at an outlet (550) of the conduit.

9. The digital flowmeter of claim 8, further comprising analog-to-digital converters connected to convert signals produced by the first pressure sensor (540) and the second pressure sensor (540) to digital values and to supply the digital values to the control and measurement system (105).

10. The digital flowmeter of claim 8, further comprising a first temperature (125, 535) sensor connected to measure a first temperature at an inlet (545) to the conduit (120) and a second temperature sensor (125, 535) connected to measure a second temperature at an outlet (550) of the conduit.

11. The digital flowmeter of claim 2, wherein the control and measurement system (105) generates the measurement of the property by:

estimating a frequency of the first sensor signal;
calculating a phase difference using the first sensor signal; and

generating the measurement using the calculated phase difference.

12. The digital flowmeter of claim 11, wherein the control and measurement system (105) compensates for amplitude differences in the sensor signals by adjusting the amplitude of one of the sensor signals.

13. The digital flowmeter of claim 12, wherein the control and measurement system (105) compensates for amplitude differences in the sensor signals by multiplying the amplitude of one of the sensor signals by a ratio of the amplitude of the other sensor signal to the amplitude of the one sensor signal.

14. The digital flowmeter of claim 1, wherein the sensor signal is generally periodic and the control and measurement system (105) processes the sensor signal in sets, wherein each set includes data for a complete cycle of the periodic sensor signal.

15. The digital flowmeter of claim 14, wherein consecutive sets include data for overlapping cycles of the periodic sensor signal.

16. The digital flowmeter of claim 14, wherein the control and measurement system (105) estimates an end point of a cycle using a frequency of a previous cycle.

17. The digital flowmeter of claim 14, wherein the control and measurement system (105) analyzes data for a cycle to determine whether the cycle merits further processing.

18. The digital flowmeter of claim 17, wherein the control and measurement system (105) determines that a cycle does not merit further processing when data for the cycle does not conform to expected behavior for the data, where the expected behavior is based on one or more parameters of a previous cycle.

19. The digital flowmeter of claim 18, wherein the control and measurement system (105) determines that a cycle does not merit further processing when a frequency for the cycle differs from a frequency for the previous cycle by more than a threshold amount.

20. The digital flowmeter of claim 19, wherein the control and measurement system (105) determines whether the frequency for the cycle differs from the frequency for the previous cycle by comparing values at certain points in the cycle to values that would occur if the frequency for the cycle equalled the frequency for the previous cycle.

21. The digital flowmeter of claim 1, wherein the control and measurement system (105) determines a frequency of the sensor signal by detecting zero-crossings of the sensor signal and counting samples between zero crossings.

22. The digital flowmeter of claim 1, wherein the control and measurement system (105) determines a frequency of the sensor signal using an iterative curve fitting technique.

23. The digital flowmeter of claim 1, wherein the control and measurement system (105) determines an amplitude of the sensor signal using Fourier analysis and uses the determined amplitude in generating the drive signal.

24. The digital flowmeter of claim 11, wherein the control and measurement system (105) determines a phase offset for each sensor signal and determines the phase difference by comparing the phase offsets.

25. The digital flowmeter of claim 11, wherein the control and measurement system (105) determines the phase difference using Fourier analysis.

26. The digital flowmeter of claim 11, wherein the control and measurement system (105) determines a frequency, amplitude and phase offset for each sensor signal, and scales the phase offsets to an average of the frequencies of the sensor signals.

27. The digital flowmeter of claim 11, wherein the control and measurement system (105) calculates the phase difference using multiple approaches and selects a result of one of the approaches as the calculated phase difference.

28. The digital flowmeter of claim 2, wherein the control and measurement system (105) combines the sensor signals to produce a combined signal and to generate the drive signal based on the combined signal.

29. The digital flowmeter of claim 28, wherein the control and measurement system (105) generates the drive signal by applying a gain to the combined signal.

30. The digital flowmeter of claim 29, wherein the control and measurement system (105) generates the drive signal by applying a large gain to the combined signal to initiate motion of the conduit (120) and generating a periodic signal having a phase and frequency based on a phase and frequency of a sensor signal as the drive signal after motion has been initiated.

31. The digital flowmeter of claim 28, wherein the control and measurement system (105) combines the sensor signals by summing the sensor signals.

32. The digital flowmeter of claim 31, wherein the control and measurement system (105) modifies an amplitude of one of the sensor signals using a ratio of an amplitude of the other sensor signal to the amplitude of the one sensor signal prior to summing the sensor signals.

33. The digital flowmeter of claim 1, wherein the control and measurement system (105) initiates motion of the conduit (120) by using a first mode of signal generation to generate the drive signal, and sustains motion of the conduit using a second mode of signal generation to generate the drive signal.

34. The digital flowmeter of claim 33, wherein the first mode of signal generation comprises synthesis of a periodic signal having a desired property and the second mode of signal generation comprises using a feedback loop including the sensor signal.

35. The digital flowmeter of claim 34, wherein the desired property comprises a desired initial frequency of conduit vibration.

36. The digital flowmeter of claim 33, wherein the first mode of signal generation comprises using a feedback loop including the sensor signal and the second mode of signal generation comprises synthesis of a periodic signal having a desired property.

37. The digital flowmeter of claim 36, wherein the desired property comprises a frequency and a phase corresponding to a frequency and a phase of the sensor signal.

38. The digital flowmeter of claim 1, wherein the control and measurement system (105) generates an adaptable, periodic drive signal.

39. The digital flowmeter of claim 3 8, further comprising positive and negative direct current sources connected between the control and measurement system (105) and the driver (115), wherein the control and measurement system generates the drive signal by switching the current sources on and off at intervals having a phase and frequency based on the sensor signal.

40. The digital flowmeter of claim 38, wherein the control and measurement system (105) generates the drive signal by synthesizing a sine wave having a property corresponding to a property of the sensor signal.

41. The digital flowmeter of claim 40, wherein the control and measurement system (105) generates the drive signal by synthesizing a sine wave having a phase and a frequency corresponding to a phase and a frequency of the sensor signal.

42. The digital flowmeter of claim 1, wherein the control and measurement system (105) digitally generates a gain for use in generating the drive signal based on one or more properties of the sensor signal.

43. The digital flowmeter of claim 42, wherein the control and measurement system (105) digitally generates the gain based on an amplitude of the sensor signal.

44. The digital flowmeter of claim 42, wherein the control and measurement system (105) digitally implements a PI control algorithm to regulate the amplitude of conduit oscillation.

45. The digital flowmeter of claim 1, wherein the driver (115) is operable to impart an oscillating motion to the conduit (120).

**46.** The digital flowmeter of claim 45, wherein the control and measurement system (105) digitally generates the drive signal based on the sensor signal so as to maintain an amplitude of oscillation of the conduit at a user-controlled value.

**47.** The digital flowmeter of claim 46, wherein the control and measurement system (105) generates a negative drive signal that causes the driver (115) to resist motion of the conduit when the amplitude of oscillation exceeds the user-controlled value and a positive drive signal that causes the driver to impart motion to the conduit when the amplitude of oscillation is less than the user-controlled value.

**48.** The digital flowmeter of claim 1, wherein the control and measurement system (105) comprises a controller to generate a gain signal based on the sensor signal and a multiplying digital-to-analog converter connected to the controller to receive the gain signal and to generate the drive signal based on the gain signal.

**49.** The digital flowmeter of claim 1, further comprising a second sensor (120, 48b) connected to the conduit (120) and operable to sense the motion of the conduit, wherein the control and measurement system (105) comprises:

a controller (505) to generate the measurement, a first analog-to-digital converter (530) connected between the first sensor (120, 48a) and the controller to provide a first digital sensor signal to the controller, and
a second analog-to-digital converter (530) connected between the second sensor and the controller to provide a second digital sensor signal to the controller.

**50.** The digital flowmeter of claim 49, wherein the controller (505) combines the digital sensor signals to produce a combined signal and generates a gain signal based on the first and second digital sensor signals, and the control and measurement system further comprises a multiplying digital-to-analog converter connected to receive the combined signal and the gain signal from the controller to generate the drive signal as a product of the combined signal and the gain signal.

**51.** The digital flowmeter of claim 1, wherein the control and measurement system (105) selectively applies a negative gain to the sensor signal to reduce motion of the conduit.

**52.** The digital flowmeter of claim 1, wherein the control and measurement system (105) compensates for zero offset in the sensor signal.

**53.** The digital flowmeter of claim 52, wherein
the zero offset includes a component attributable to gain variation and a component attributable to gain nonlinearity, and
the control and measurement system (105) separately compensates for the two components.

**54.** The digital flowmeter of claim 52, wherein the control and measurement system (105) compensates for zero offset by generating one or more correction factors and modifying the sensor signal using the correction factors.

**55.** The digital flowmeter of claim 2, wherein the control and measurement system (105):

calculates a phase offset for the first sensor signal; and
calculates a phase offset for the second sensor signal.

**56.** The digital flowmeter of claim 55, wherein a phase offset is defined as a difference between a zero-crossing point of a sensor signal and a point of zero phase for a component of the sensor signal corresponding to a fundamental frequency of the sensor signal.

**57.** The digital flowmeter of claim 56, wherein the control and measurement system (105) combines the calculated phase offsets to produce a phase difference.

**58.** The digital flowmeter of claim 2, wherein the control and measurement system (105) generates the measurement of the property by:

estimating a frequency of the first sensor signal;
estimating a frequency of the second sensor signal, the frequency of the second sensor signal being different from the frequency of the first sensor signal; and

calculating a phase difference between the sensor signals using the estimated frequencies.

59. The digital flowmeter of claim 1, wherein the sensor (120, 48) comprises a velocity sensor and the control and measurement system (105):

estimates a frequency, amplitude, and phase of the sensor signal; and
corrects the estimated frequency, amplitude, and phase to account for performance differences between a velocity sensor and an absolute position sensor.

60. The digital flowmeter of claim 1, wherein the control and measurement system (105):

estimates a first parameter of the sensor signal;
determines a rate of change of a second parameter; and
corrects the estimated first parameter based on the determined rate of change.

61. The digital flowmeter of claim 60, wherein the first parameter comprises a frequency of the sensor signal.

62. The digital flowmeter of claim 61, wherein the second parameter comprises a frequency of oscillation of the conduit (120).

63. The digital flowmeter of claim 61, wherein the second parameter comprises an amplitude of oscillation of the conduit (120).

64. The digital flowmeter of claim 60, wherein the first parameter comprises an amplitude of the sensor signal.

65. The digital flowmeter of claim 63, wherein the second parameter comprises a frequency of oscillation of the conduit (120).

66. The digital flowmeter of claim 64, wherein the second parameter comprises an amplitude of oscillation of the conduit (120).

67. The digital flowmeter of claim 60, wherein the first parameter comprises a phase of the sensor signal.

68. The digital flowmeter of claim 67, wherein the second parameter comprises a frequency of oscillation of the conduit (120).

69. The digital flowmeter of claim 67, wherein the second parameter comprises an amplitude of oscillation of the conduit (120).

70. The digital flowmeter of claim 2, wherein the control and measurement system (105):

estimates a first parameter of the first sensor signal;
determines a rate of change of a second parameter of the first sensor signal;
corrects the estimated first parameter of the first sensor signal based on the determined rate of change of the second parameter of the first sensor signal;
estimates a first parameter of the second sensor signal;
determines a rate of change of a second parameter of the second sensor signal; and
corrects the estimated first parameter of the second sensor signal based on the determined rate of change of the second parameter of the second sensor signal;
wherein the control and measurement system performs the estimating, determining, and correcting for each sensor signal independently of the estimating, determining, and correcting for the other sensor signal.

71. The digital flowmeter of claim 70, wherein the first parameter comprises a frequency of the sensor signal.

72. The digital flowmeter of claim 71, wherein the second parameter comprises a frequency of oscillation of the conduit (120).

73. The digital flowmeter of claim 71, wherein the second parameter comprises an amplitude of oscillation of the conduit (120).

74. The digital flowmeter of claim 70, wherein the first parameter comprises an amplitude of the sensor signal.

75. The digital flowmeter of claim 73, wherein the second parameter comprises a frequency of oscillation of the conduit (120).

76. The digital flowmeter of claim 74, wherein the second parameter comprises an amplitude of oscillation of the conduit (120).

77. The digital flowmeter of claim 70, wherein the first parameter comprises a phase of the sensor signal.

78. The digital flowmeter of claim 77, wherein the second parameter comprises a frequency of oscillation of the conduit (120).

79. The digital flowmeter of claim 77, wherein the second parameter comprises an amplitude of oscillation of the conduit (120).

80. The digital flowmeter of claim 1, wherein the digital flowmeter comprises a mass flowmeter and the property of material flowing through the conduit comprises a mass flow rate.

81. The digital flowmeter of claim 80, wherein the control and measurement system (105) accounts for effects of aeration in the conduit by:

determining an initial mass flow rate,
determining an apparent density of material flowing through the conduit (120),
comparing the apparent density to a known density of the material to determine a density difference, and
adjusting the initial mass flow rate based on the density difference to produce an adjusted mass flow rate.

82. The digital flowmeter of claim 81, wherein the control and measurement system (105) accounts for effects of aeration in the conduit by adjusting the adjusted mass flow rate to account for effects of damping.

83. The digital flowmeter of claim 81, further comprising a second sensor (120) connected to the conduit (120) and operable to sense the motion of the conduit, wherein the control and measurement system (105) is connected to the second sensor to:

receive a second sensor signal from the second sensor, and
account for effects of aeration in the conduit by adjusting the adjusted.mass flow rate based on differences between amplitudes of the first and second sensor signals.

84. The digital flowmeter of claim 1, wherein the digital flowmeter comprises a densitometer and the property of material flowing through the conduit (120) comprises a density of the material.

85. The digital flowmeter of claim 1, wherein the sensor signal comprises an analog signal and the control and measurement system (105) comprises an analog-to-digital converter to convert the analog signal to a digital signal.

86. The digital flowmeter of claim 1, wherein the vibratable conduit (120) comprises two planar loops (18, 20).

87. The digital flowmeter of claim 86, wherein the sensor (120, 48, 48a) and driver are connected between the loops (18, 20).

88. The digital flowmeter of claim 87, further comprising a second sensor (120, 48b) and a second driver, wherein the first driver (115, 46a) and sensor (120, 48a) are connected between a first end of the loops, and the second driver (115, 46b) and sensor (120, 48b) are connected between a second end of the loops, the second end being located opposite the first end.

89. The digital flowmeter of claim 1, further comprising a power circuit (4610) to receive power on only a single pair of wires (4605), the power circuit providing power to the control and measurement system (4615) and to the driver (4620), wherein the control and measurement system is operable to transmit the measurement of the property of material flowing through the conduit on the single pair of wires.

90. The digital flowmeter of claim 89, wherein the power circuit (4610) comprises a constant output circuit (4630) that provides power to the control and measurement system (4615) and drive capacitor (4635) that is charged by excess power from the two wires (4605).

91. The digital flowmeter of claim 90, wherein the control and measurement system (4615) is operable to discharge the drive capacitor (4635) to power the driver (4620).

92. The digital flowmeter of claim 91, wherein the control and measurement system (4615) monitors a charge level of the drive capacitor (4635) and discharges the drive capacitor after a charge level of the capacitor reaches a threshold level,

93. The digital flowmeter of claim 92, wherein the control and measurement system (4615) discharges the drive capacitor (4635) periodically.

94. The digital flowmeter of claim 89, wherein the control and measurement system (4615) performs bidirectional communications on the pair of wires (4605).

95. The digital flowmeter of claim 1, wherein the sensor signal comprises a periodic signal and the control and measurement system (105):

collects a first data set for a period of the periodic signal;
processes the first data set to generate the drive signal and the measurement; and
collects a second data set for a subsequent period of the sensor signal simultaneously with processing the first data set.

96. The digital flowmeter of claim 95, wherein the period corresponding to the first data set overlaps the period corresponding to the second data set.

97. The digital flowmeter of claim 1, wherein the control and measurement system (105):

controls the drive signal to maintain an amplitude of the sensor signal at a fixed setpoint;
reduces the fixed setpoint when the drive signal exceeds a first threshold level; and
increases the fixed setpoint when the drive signal is less than a second threshold level and the fixed setpoint is less than a maximum permitted value for the setpoint.

98. The digital flowmeter of claim 97, wherein the first threshold level is 95% or less of a maximum permitted drive signal.

99. The digital flowmeter of claim 1, wherein the control and measurement system (105) performs an uncertainty analysis on the measurement.

100. The digital flowmeter of claim 99, further comprising a connection to a control system, wherein the control and measurement system (105) transmits the measurement and results of the uncertainty analysis to the control system.

101. The digital flowmeter of claim 1, wherein the control and measurement system (105) is operable to:

collect data corresponding to a current cycle of the sensor signal,
process the data for the current cycle to generate the drive signal and the measurement of a property of material flowing through the conduit,
supply the drive signal to the driver (115, 46, 46a), and
collect data corresponding to a subsequent cycle of the sensor signal simultaneously with processing the data for the current cycle.

102. A method of generating a measurement of a property of material flowing through a conduit (120), the method comprising:

sensing motion of the conduit using a sensor (120, 48, 48a);
generating a measurement of a property of a material flowing through the conduit based on the sensed motion;
using digital signal processing to generate a drive signal for a driver (115, 46, 46a) for imparting motion in the conduit based on sensed motion of the conduit;
adjusting a phase of the drive signal to compensate for a time delay associated with the sensor and components connected between the sensor and the driver; and
imparting motion to the conduit using the drive signal.

**103.** The method of claim 102, wherein:

sensing motion of the conduit (120) comprises sensing motion at two locations,
the measurement is generated based on the motion at the two locations, and
the drive signal is generated based on the motion sensed at the two locations.

**104.** The method of claim 103, further comprising using digital signal processing to generate a second drive signal for imparting motion in the conduit (120) based on sensed motion of the conduit, wherein imparting motion to the conduit comprises using the first drive signal to impart motion at a first location and using the second drive signal to impart motion at a second location.

**Patentansprüche**

**1.** Digitaler Durchflussmesser (100), der aufweist:

eine schwingungsfähige Rohrleitung (120);
einen Treiber (115, 46, 46a), der mit der Rohrleitung verbunden ist und betreibbar ist, um der Rohrleitung eine Bewegung zu verleihen;
einen Sensor (120, 48, 48a), der mit der Rohrleitung verbunden ist und betreibbar ist, um die Bewegung der Rohrleitung zu erfassen; und
ein Steuer- und Messsystem (105), das zwischen den Treiber und den Sensor geschaltet ist, wobei das Steuer- und Messsystem betreibbar ist, um:

ein Sensorsignal vom Sensor zu empfangen (605),
ein Antriebssignal auf der Basis des Sensorsignals zu erzeugen (630),
das Antriebssignal dem Treiber zuzuführen und einen Messwert einer Eigenschaft von Material, das durch die Rohrleitung strömt, auf der Basis des Signals vom Sensor zu erzeugen (635);

**dadurch gekennzeichnet, dass** das Steuer- und Messsystem das Antriebssignal unter Verwendung einer Digitalsignalverarbeitung erzeugt, und
wobei das Steuer- und Messsystem eine digitale Verarbeitung verwendet, um eine Phase des Antriebssignals einzustellen, um eine Zeitverzögerung zu kompensieren, die mit dem Sensor und den Komponenten, die zwischen den Sensor und den Treiber geschaltet sind, assoziiert ist.

**2.** Digitaler Durchflussmesser nach Anspruch 1, der des Weiteren einen zweiten Sensor (120, 48b) aufweist, der mit der Rohrleitung (120) verbunden ist und betreibbar ist, um die Bewegung der Rohrleitung zu erfassen, wobei das Steuer- und Messsystem (105) mit dem zweiten Sensor verbunden ist, um:

ein zweites Sensorsignal vom zweiten Sensor zu empfangen (605),
das Antriebssignal auf der Basis des ersten und des zweiten Sensorsignals unter Verwendung einer Digitalsignalverarbeitung zu erzeugen (630), und
den Messwert der Eigenschaft des Materials, das durch die Rohrleitung strömt, auf der Basis des ersten und des zweiten Sensorsignals zu erzeugen (635).

**3.** Digitaler Durchflussmesser nach Anspruch 2, der des Weiteren einen zweiten Treiber (115) aufweist, wobei das Steuer- und Messsystem (105) verschiedene Antriebssignale für die zwei Treiber erzeugt.

**4.** Digitaler Durchflussmesser nach Anspruch 3, wobei das Steuer- und Messsystem (105) Antriebssignale mit verschiedenen Frequenzen erzeugt.

**5.** Digitaler Durchflussmesser nach Anspruch 4, wobei das Steuer- und Messsystem (105) Antriebssignale mit verschiedenen Amplituden erzeugt.

**6.** Digitaler Durchflussmesser nach Anspruch 1, der des Weiteren eine Schaltungsanordnung zum Messen des dem Treiber (115) zugeführten Stroms aufweist.

**7.** Digitaler Durchflussmesser nach Anspruch 6, wobei die Schaltungsanordnung einen Widerstand (520) in Reihe mit dem Treiber (115) und einen Analog-Digital-Umsetzer (530) parallel zum Widerstand aufweist, um eine Spannung über dem Widerstand zu messen, um die gemessene Spannung in einen digitalen Wert umzusetzen und um den digitalen Wert zum Steuer- und Messsystem (105) zu liefern.

**8.** Digitaler Durchflussmesser nach Anspruch 1, der des Weiteren einen ersten Drucksensor (540), der zum Messen eines ersten Drucks an einem Einlass (545) in die Rohrleitung (120) verbunden ist, und einen zweiten Drucksensor (540), der zum Messen eines zweiten Drucks an einem Auslass (550) der Rohrleitung verbunden ist, aufweist.

**9.** Digitaler Durchflussmesser nach Anspruch 8, der des Weiteren Analog-Digital-Umsetzer aufweist, die zum Umsetzen von Signalen, die durch den ersten Drucksensor (540) und den zweiten Drucksensor (540) erzeugt werden, in digitale Werte und zum Liefern der digitalen Werte zum Steuer- und Messsystem (105) verbunden sind.

**10.** Digitaler Durchflussmesser nach Anspruch 8, der des Weiteren einen ersten Temperatursensor (125, 535), der zum Messen einer ersten Temperatur an einem Einlass (545) in die Rohrleitung (120) verbunden ist, und einen zweiten Temperatursensor (125, 535), der zum Messen einer zweiten Temperatur an einem Auslass (550) der Rohrleitung verbunden ist, aufweist.

**11.** Digitaler Durchflussmesser nach Anspruch 2, wobei das Steuer- und Messsystem (105) den Messwert der Eigenschaft erzeugt durch:

Abschätzen einer Frequenz des ersten Sensorsignals;
Berechnen einer Phasendifferenz unter Verwendung des ersten Sensorsignals; und
Erzeugen des Messwerts unter Verwendung der berechneten Phasendifferenz.

**12.** Digitaler Durchflussmesser nach Anspruch 11, wobei das Steuer- und Messsystem (105) Amplitudendifferenzen in den Sensorsignalen durch Einstellen der Amplitude von einem der Sensorsignale kompensiert.

**13.** Digitaler Durchflussmesser nach Anspruch 12, wobei das Steuer- und Messsystem (105) Amplitudendifferenzen in den Sensorsignalen durch Multiplizieren der Amplitude von einem der Sensorsignale mit einem Verhältnis der Amplitude des anderen Sensorsignals zur Amplitude des einen Sensorsignals kompensiert.

**14.** Digitaler Durchflussmesser nach Anspruch 1, wobei das Sensorsignal im Allgemeinen periodisch ist und das Steuer- und Messsystem (105) das Sensorsignal in Sätzen verarbeitet, wobei jeder Satz Daten für einen vollständigen Zyklus des periodischen Sensorsignals aufweist.

**15.** Digitaler Durchflussmesser nach Anspruch 14, wobei aufeinander folgende Sätze Daten für überlappende Zyklen des periodischen Sensorsignals aufweisen.

**16.** Digitaler Durchflussmesser nach Anspruch 14, wobei das Steuer- und Messsystem (105) einen Endpunkt eines Zyklus unter Verwendung einer Frequenz eines vorherigen Zyklus abschätzt.

**17.** Digitaler Durchflussmesser nach Anspruch 14, wobei das Steuer- und Messsystem (105) Daten für einen Zyklus analysiert, um festzustellen, ob der Zyklus eine weitere Verarbeitung wert ist.

**18.** Digitaler Durchflussmesser nach Anspruch 17, wobei das Steuer- und Messsystem (105) feststellt, dass ein Zyklus keine weitere Verarbeitung wert ist, wenn Daten für den Zyklus nicht dem erwarteten Verhalten für die Daten entsprechen, wobei das erwartete Verhalten auf einem oder mehreren Parametern eines vorherigen Zyklus basiert.

**19.** Digitaler Durchflussmesser nach Anspruch 18, wobei das Steuer- und Messsystem (105) feststellt, dass ein Zyklus keine weitere Verarbeitung wert ist, wenn sich eine Frequenz für den Zyklus von einer Frequenz für den vorherigen Zyklus um mehr als einen Schwellenbetrag unterscheidet.

**20.** Digitaler Durchflussmesser nach Anspruch 19, wobei das Steuer- und Messsystem (105) durch Vergleichen von Werten an bestimmten Punkten im Zyklus mit Werten, die auftreten würden, wenn die Frequenz für den Zyklus gleich der Frequenz für den vorherigen Zyklus wäre, feststellt, ob sich die Frequenz für den Zyklus von der Frequenz für den vorherigen Zyklus unterscheidet.

**21.** Digitaler Durchflussmesser nach Anspruch 1, wobei das Steuer- und Messsystem (105) eine Frequenz des Sensorsignals durch Detektieren von Nulldurchgängen des Sensorsignals und Zählen von Abtastwerten zwischen den Nulldurchgängen bestimmt.

**22.** Digitaler Durchflussmesser nach Anspruch 1, wobei das Steuer- und Messsystem (105) eine Frequenz des Sensorsignals unter Verwendung eines iterativen Kurvenanpassungsverfahrens bestimmt.

**23.** Digitaler Durchflussmesser nach Anspruch 1, wobei das Steuer- und Messsystem (105) eine Amplitude des Sensorsignals unter Verwendung von Fourier-Analyse bestimmt und die bestimmte Amplitude beim Erzeugen des Antriebssignals verwendet.

**24.** Digitaler Durchflussmesser nach Anspruch 11, wobei das Steuer- und Messsystem (105) einen Phasenversatz für jedes Sensorsignal bestimmt und die Phasendifferenz durch Vergleichen der Phasenversätze bestimmt.

**25.** Digitaler Durchflussmesser nach Anspruch 11, wobei das Steuer- und Messsystem (105) die Phasendifferenz unter Verwendung von Fourier-Analyse bestimmt.

**26.** Digitaler Durchflussmesser nach Anspruch 11, wobei das Steuer- und Messsystem (105) eine Frequenz, eine Amplitude und einen Phasenversatz für jedes Sensorsignal bestimmt und die Phasenversätze mit einem Mittelwert der Frequenzen der Sensorsignale skaliert.

**27.** Digitaler Durchflussmesser nach Anspruch 11, wobei das Steuer- und Messsystem (105) eine Phasendifferenz unter Verwendung von mehreren Methoden berechnet und ein Ergebnis von einer der Methoden als berechnete Phasendifferenz auswählt.

**28.** Digitaler Durchflussmesser nach Anspruch 2, wobei das Steuer- und Messsystem (105) die Sensorsignale kombiniert, um ein kombiniertes Signal zu erzeugen und das Antriebssignal auf der Basis des kombinierten Signals zu erzeugen.

**29.** Digitaler Durchflussmesser nach Anspruch 28, wobei das Steuer- und Messsystem (105) das Antriebssignal durch Anwenden einer Verstärkung auf das kombinierte Signal erzeugt.

**30.** Digitaler Durchflussmesser nach Anspruch 29, wobei das Steuer- und Messsystem (105) das Antriebssignal durch Anwenden einer großen Verstärkung auf das kombinierte Signal, um eine Bewegung der Rohrleitung (120) einzuleiten, und Erzeugen eines periodischen Signals mit einer Phase und einer Frequenz auf der Basis einer Phase und Frequenz eines Sensorsignals als Antriebssignal, nachdem die Bewegung eingeleitet wurde, erzeugt.

**31.** Digitaler Durchflussmesser nach Anspruch 28, wobei das Steuer- und Messsystem (105) die Sensorsignale durch Summieren der Sensorsignale kombiniert.

**32.** Digitaler Durchflussmesser nach Anspruch 31, wobei das Steuer- und Messsystem (105) eine Amplitude von einem der Sensorsignale unter Verwendung eines Verhältnisses einer Amplitude des anderen Sensorsignals zur Amplitude des einen Sensorsignals vor dem Summieren der Sensorsignale modifiziert.

**33.** Digitaler Durchflussmesser nach Anspruch 1, wobei das Steuer- und Messsystem (105) die Bewegung der Rohrleitung (120) unter Verwendung eines ersten Modus einer Signalerzeugung zum Erzeugen des Antriebssignals einleitet und die Bewegung der Rohrleitung unter Verwendung eines zweiten Modus einer Signalerzeugung zum Erzeugen des Antriebssignals aufrechterhält.

**34.** Digitaler Durchflussmesser nach Anspruch 33, wobei der erste Modus der Signalerzeugung die Synthese eines periodischen Signals mit einer gewünschten Eigenschaft aufweist und der zweite Modus der Signalerzeugung die Verwendung einer Rückkopplungsschleife mit dem Sensorsignal aufweist.

35. Digitaler Durchflussmesser nach Anspruch 34, wobei die gewünschte Eigenschaft eine gewünschte anfängliche Frequenz der Rohrleitungsschwingung ist.

36. Digitaler Durchflussmesser nach Anspruch 33, wobei der erste Modus der Signalerzeugung die Verwendung einer Rückkopplungsschleife mit dem Sensorsignal aufweist und der zweite Modus der Signalerzeugung eine Synthese eines periodischen Signals mit einer gewünschten Eigenschaft aufweist.

37. Digitaler Durchflussmesser nach Anspruch 36, wobei die gewünschte Eigenschaft eine Frequenz und eine Phase, die einer Frequenz und einer Phase des Sensorsignals entsprechen, ist.

38. Digitaler Durchflussmesser nach Anspruch 1, wobei das Steuer- und Messsystem (105) ein anpassungsfähiges, periodisches Antriebssignal erzeugt.

39. Digitaler Durchflussmesser nach Anspruch 38, der des Weiteren eine positive und eine negative Gleichstromquelle aufweist, die zwischen das Steuer- und Messsystem (105) und den Treiber (115) geschaltet sind, wobei das Steuer- und Messsystem das Antriebssignal durch Ein- und Ausschalten der Stromquellen in Intervallen mit einer Phase und Frequenz auf der Basis des Sensorsignals erzeugt.

40. Digitaler Durchflussmesser nach Anspruch 38, wobei das Steuer- und Messsystem (105) das Antriebssignal durch Synthetisieren einer Sinuswelle mit einer Eigenschaft, die einer Eigenschaft des Sensorsignals entspricht, erzeugt.

41. Digitaler Durchflussmesser nach Anspruch 40, wobei das Steuer- und Messsystem (105) das Antriebssignal durch Synthetisieren einer Sinuswelle mit einer Phase und einer Frequenz, die einer Phase und einer Frequenz des Sensorsignals entsprechen, erzeugt.

42. Digitaler Durchflussmesser nach Anspruch 1, wobei das Steuer- und Messsystem (105) eine Verstärkung zur Verwendung beim Erzeugen des Antriebssignals auf der Basis von einer oder mehreren Eigenschaften des Sensorsignals digital erzeugt.

43. Digitaler Durchflussmesser nach Anspruch 42, wobei das Steuer- und Messsystem (105) die Verstärkung auf der Basis einer Amplitude des Sensorsignals digital erzeugt.

44. Digitaler Durchflussmesser nach Anspruch 42, wobei das Steuer- und Messsystem (105) einen PI-Regelalgorithmus digital implementiert, um die Amplitude der Rohrleitungsschwingung zu regeln.

45. Digitaler Durchflussmesser nach Anspruch 1, wobei der Treiber (115) betreibbar ist, um der Rohrleitung (120) eine Schwingungsbewegung zu verleihen.

46. Digitaler Durchflussmesser nach Anspruch 45, wobei das Steuer- und Messsystem (105) das Antriebssignal auf der Basis des Sensorsignals digital erzeugt, um eine Schwingungsamplitude der Rohrleitung auf einem vom Benutzer gesteuerten Wert zu halten.

47. Digitaler Durchflussmesser nach Anspruch 46, wobei das Steuer- und Messsystem (105) ein negatives Antriebssignal, das bewirkt, dass der Treiber (115) einer Bewegung der Rohrleitung Widerstand leistet, wenn die Schwingungsamplitude den vom Benutzer gesteuerten Wert übersteigt, und ein positives Antriebssignal, das bewirkt, dass der Treiber der Rohrleitung eine Bewegung verleiht, wenn die Schwingungsamplitude geringer ist als der vom Benutzer gesteuerte Wert, erzeugt.

48. Digitaler Durchflussmesser nach Anspruch 1, wobei das Steuer- und Messsystem (105) eine Steuereinheit, um ein Verstärkungssignal auf der Basis des Sensorsignals zu erzeugen, und einen multiplizierenden Digital-Analog-Umsetzer, der mit der Steuereinheit verbunden ist, um das Verstärkungssignal zu empfangen und das Antriebssignal auf der Basis des Verstärkungssignals zu erzeugen, aufweist.

49. Digitaler Durchflussmesser nach Anspruch 1, der des Weiteren einen zweiten Sensor (120, 48b) aufweist, der mit der Rohrleitung (120) verbunden ist und betreibbar ist, um die Bewegung der Rohrleitung zu erfassen, wobei das Steuer- und Messsystem (105) aufweist:

    eine Steuereinheit (505), um den Messwert zu erzeugen,

einen ersten Analog-Digital-Umsetzer (530), der zwischen den ersten Sensor (120, 48a) und die Steuereinheit geschaltet ist, um ein erstes digitales Sensorsignal zur Steuereinheit zu liefern, und

einen zweiten Analog-Digital-Umsetzer (530), der zwischen den zweiten Sensor und die Steuereinheit geschaltet ist, um ein zweites digitales Sensorsignal zur Steuereinheit zu liefern.

50. Digitaler Durchflussmesser nach Anspruch 49, wobei die Steuereinheit (505) die digitalen Sensorsignale kombiniert, um ein kombiniertes Signal zu erzeugen, und ein Verstärkungssignal auf der Basis des ersten und des zweiten digitalen Sensorsignals erzeugt, und das Steuer- und Messsystem des Weiteren einen multiplizierenden Digital-Analog-Umsetzer aufweist, der zum Empfangen des kombinierten Signals und des Verstärkungssignals von der Steuereinheit verbunden ist, um das Antriebssignal als Produkt des kombinierten Signals und des Verstärkungssignals zu erzeugen.

51. Digitaler Durchflussmesser nach Anspruch 1, wobei das Steuer- und Messsystem (105) selektiv eine negative Verstärkung auf das Sensorsignal anwendet, um die Bewegung der Rohrleitung zu verringern.

52. Digitaler Durchflussmesser nach Anspruch 1, wobei das Steuer- und Messsystem (105) einen Nullpunktversatz im Sensorsignal kompensiert.

53. Digitaler Durchflussmesser nach Anspruch 52, wobei
der Nullpunktversatz eine Komponente, die einer Verstärkungsvariation zuzuschreiben ist, und eine Komponente, die einer Verstärkungsnichtlinearität zuzuschreiben ist, aufweist, und
das Steuer- und Messsystem (105) die zwei Komponenten separat kompensiert.

54. Digitaler Durchflussmesser nach Anspruch 52, wobei das Steuer- und Messsystem (105) einen Nullpunktversatz durch Erzeugen von einem oder mehreren Korrekturfaktoren und Modifizieren des Sensorsignals unter Verwendung der Korrekturfaktoren kompensiert.

55. Digitaler Durchflussmesser nach Anspruch 2, wobei das Steuer- und Messsystem (105):

einen Phasenversatz für das erste Sensorsignal berechnet; und
einen Phasenversatz für das zweite Sensorsignal berechnet.

56. Digitaler Durchflussmesser nach Anspruch 55, wobei ein Phasenversatz als Differenz zwischen einem Nulldurchgangspunkt eines Sensorsignals und einem Punkt einer Nullphase für eine Komponente des Sensorsignals, die einer Grundfrequenz des Sensorsignals entspricht, definiert ist.

57. Digitaler Durchflussmesser nach Anspruch 56, wobei das Steuer- und Messsystem (105) die berechneten Phasenversätze kombiniert, um eine Phasendifferenz zu erzeugen.

58. Digitaler Durchflussmesser nach Anspruch 2, wobei das Steuer- und Messsystem (105) den Messwert der Eigenschaft erzeugt durch:

Abschätzen einer Frequenz des ersten Sensorsignals;
Abschätzen einer Frequenz des zweiten Sensorsignals, wobei die Frequenz des zweiten Sensorsignals von der Frequenz des ersten Sensorsignals verschieden ist; und
Berechnen einer Phasendifferenz zwischen den Sensorsignalen unter Verwendung der abgeschätzten Frequenzen.

59. Digitaler Durchflussmesser nach Anspruch 1, wobei der Sensor (120, 48) einen Geschwindigkeitssensor aufweist und das Steuer- und Messsystem (105):

eine Frequenz, eine Amplitude und eine Phase des Sensorsignals abschätzt; und
die abgeschätzte Frequenz, Amplitude und Phase korrigiert, um Leistungsdifferenzen zwischen einem Geschwindigkeitssensor und einem Absolutpositionssensor zu berücksichtigen.

60. Digitaler Durchflussmesser nach Anspruch 1, wobei das Steuer- und Messsystem (105):

einen ersten Parameter des Sensorsignals abschätzt;

eine Änderungsrate eines zweiten Parameters bestimmt; und
den abgeschätzten ersten Parameter auf der Basis der bestimmten Änderungsrate korrigiert.

61. Digitaler Durchflussmesser nach Anspruch 60, wobei der erste Parameter eine Frequenz des Sensorsignals ist.

62. Digitaler Durchflussmesser nach Anspruch 61, wobei der zweite Parameter eine Schwingungsfrequenz der Rohrleitung (120) ist.

63. Digitaler Durchflussmesser nach Anspruch 61, wobei der zweite Parameter eine Schwingungsamplitude der Rohrleitung (120) ist.

64. Digitaler Durchflussmesser nach Anspruch 60, wobei der erste Parameter eine Amplitude des Sensorsignals ist.

65. Digitaler Durchflussmesser nach Anspruch 63, wobei der zweite Parameter eine Schwingungsfrequenz der Rohrleitung (120) ist.

66. Digitaler Durchflussmesser nach Anspruch 64, wobei der zweite Parameter eine Schwingungsamplitude der Rohrleitung (120) ist.

67. Digitaler Durchflussmesser nach Anspruch 60, wobei der erste Parameter eine Phase des Sensorsignals ist.

68. Digitaler Durchflussmesser nach Anspruch 67, wobei der zweite Parameter eine Schwingungsfrequenz der Rohrleitung (120) ist.

69. Digitaler Durchflussmesser nach Anspruch 67, wobei der zweite Parameter eine Schwingungsamplitude der Rohrleitung (120) ist.

70. Digitaler Durchflussmesser nach Anspruch 2, wobei das Steuer- und Messsystem (105):

einen ersten Parameter des ersten Sensorsignals abschätzt;
eine Änderungsrate eines zweiten Parameters des ersten Sensorsignals bestimmt;
den abgeschätzten ersten Parameter des ersten Sensorsignals auf der Basis der bestimmten Änderungsrate des zweiten Parameters des ersten Sensorsignals korrigiert;
einen ersten Parameter des zweiten Sensorsignals abschätzt;
eine Änderungsrate eines zweiten Parameters des zweiten Sensorsignals bestimmt; und
den abgeschätzten ersten Parameter des zweiten Sensorsignals auf der Basis der bestimmten Änderungsrate des zweiten Parameters des zweiten Sensorsignals korrigiert;
wobei das Steuer- und Messsystem das Abschätzen, Bestimmen und Korrigieren für jedes Sensorsignal unabhängig vom Abschätzen, Bestimmen und Korrigieren für das andere Sensorsignal durchführt.

71. Digitaler Durchflussmesser nach Anspruch 70, wobei der erste Parameter eine Frequenz des Sensorsignals ist.

72. Digitaler Durchflussmesser nach Anspruch 71, wobei der zweite Parameter eine Schwingungsfrequenz der Rohrleitung (120) ist.

73. Digitaler Durchflussmesser nach Anspruch 71, wobei der zweite Parameter eine Schwingungsamplitude der Rohrleitung (120) ist.

74. Digitaler Durchflussmesser nach Anspruch 70, wobei der erste Parameter eine Amplitude des Sensorsignals ist.

75. Digitaler Durchflussmesser nach Anspruch 73, wobei der zweite Parameter eine Schwingungsfrequenz der Rohrleitung (120) ist.

76. Digitaler Durchflussmesser nach Anspruch 74, wobei der zweite Parameter eine Schwingungsamplitude der Rohrleitung (120) ist.

77. Digitaler Durchflussmesser nach Anspruch 70, wobei der erste Parameter eine Phase des Sensorsignals ist.

**78.** Digitaler Durchflussmesser nach Anspruch 77, wobei der zweite Parameter eine Schwingungsfrequenz der Rohrleitung (120) ist.

**79.** Digitaler Durchflussmesser nach Anspruch 77, wobei der zweite Parameter eine Schwingungsamplitude der Rohrleitung (120) ist.

**80.** Digitaler Durchflussmesser nach Anspruch 1, wobei der digitale Durchflussmesser ein Massendurchflussmesser ist und die Eigenschaft von Material, das durch die Rohrleitung strömt, eine Massendurchflussrate ist.

**81.** Digitaler Durchflussmesser nach Anspruch 80, wobei das Steuer- und Messsystem (105) Belüftungseffekte in der Rohrleitung berücksichtigt durch:

Bestimmen einer anfänglichen Massendurchflussrate,
Bestimmen einer scheinbaren Dichte des Materials, das durch die Rohrleitung (120) strömt,
Vergleichen der scheinbaren Dichte mit einer bekannten Dichte des Materials, um eine Dichtedifferenz zu bestimmen, und
Einstellen der anfänglichen Massendurchflussrate auf der Basis der Dichtedifferenz, um eine eingestellte Massendurchflussrate zu erzeugen.

**82.** Digitaler Durchflussmesser nach Anspruch 81, wobei das Steuer- und Messsystem (105) Belüftungseffekte in der Rohrleitung durch Einstellen der eingestellten Massendurchflussrate berücksichtigt, um Dämpfungseffekte zu berücksichtigen.

**83.** Digitaler Durchflussmesser nach Anspruch 81, der des Weiteren einen zweiten Sensor (120) aufweist, der mit der Rohrleitung (120) verbunden ist und betreibbar ist, um die Bewegung der Rohrleitung zu erfassen, wobei das Steuer- und Messsystem (105) mit dem zweiten Sensor verbunden ist, um:

ein zweites Sensorsignal vom zweiten Sensor zu empfangen, und
Belüftungseffekte in der Rohrleitung durch Einstellen der eingestellten Massendurchflussrate auf der Basis von Differenzen zwischen Amplituden des ersten und des zweiten Sensorsignals zu berücksichtigen.

**84.** Digitaler Durchflussmesser nach Anspruch 1, wobei der digitale Durchflussmesser einen Dichtemesser aufweist und die Eigenschaft des Materials, das durch die Rohrleitung (120) strömt, eine Dichte des Materials ist.

**85.** Digitaler Durchflussmesser nach Anspruch 1, wobei das Sensorsignal ein analoges Signal ist und das Steuer- und Messsystem (105) einen Analog-Digital-Umsetzer aufweist, um das analoge Signal in ein digitales Signal umzusetzen.

**86.** Digitaler Durchflussmesser nach Anspruch 1, wobei die schwingungsfähige Rohrleitung (120) zwei planare Schleifen (18, 20) aufweist.

**87.** Digitaler Durchflussmesser nach Anspruch 86, wobei der Sensor (120, 48, 48a) und der Treiber zwischen die Schleifen (18, 20) geschaltet sind.

**88.** Digitaler Durchflussmesser nach Anspruch 87, der des Weiteren einen zweiten Sensor (120, 48b) und einen zweiten Treiber aufweist, wobei der erste Treiber (115, 46a) und Sensor (120, 48a) zwischen ein erstes Ende der Schleifen geschaltet sind und der zweite Treiber (115, 46b) und Sensor (120, 48b) zwischen ein zweites Ende der Schleifen geschaltet sind, wobei das zweite Ende entgegengesetzt zum ersten Ende angeordnet ist.

**89.** Digitaler Durchflussmesser nach Anspruch 1, der des Weiteren eine Leistungsschaltung (4610) aufweist, um Leistung auf nur einem einzigen Paar von Drähten (4605) zu empfangen, wobei die Leistungsschaltung Leistung zum Steuer- und Messsystem (4615) und zum Treiber (4620) liefert, wobei das Steuer- und Messsystem betreibbar ist, um den Messwert der Eigenschaft des durch die Rohrleitung strömenden Materials auf dem einzigen Paar von Drähten zu übertragen.

**90.** Digitaler Durchflussmesser nach Anspruch 89, wobei die Leistungsschaltung (4610) eine Schaltung (4630) mit konstantem Ausgang, die Leistung zum Steuer- und Messsystem (4615) liefert, und einen Antriebskondensator (4635), der mit überschüssiger Leistung von den zwei Drähten (4605) aufgeladen wird, aufweist.

**91.** Digitaler Durchflussmesser nach Anspruch 90, wobei das Steuer- und Messsystem (4615) betreibbar ist, um den Antriebskondensator (4635) zu entladen, um den Treiber (4620) zu speisen.

**92.** Digitaler Durchflussmesser nach Anspruch 91, wobei das Steuer- und Messsystem (4615) einen Ladungspegel des Antriebskondensators (4635) überwacht und den Antriebskondensator entlädt, nachdem ein Ladungspegel des Kondensators einen Schwellenpegel erreicht.

**93.** Digitaler Durchflussmesser nach Anspruch 92, wobei das Steuer- und Messsystem (4615) den Antriebskondensator (4635) periodisch entlädt.

**94.** Digitaler Durchflussmesser nach Anspruch 89, wobei das Steuer- und Messsystem (4615) bidirektionale Kommunikationen auf dem Paar von Drähten (4605) durchführt.

**95.** Digitaler Durchflussmesser nach Anspruch 1, wobei das Sensorsignal ein periodisches Signal ist und das Steuer- und Messsystem (105):

einen ersten Datensatz für eine Periode des periodischen Signals sammelt;
den ersten Datensatz verarbeitet, um das Antriebssignal und den Messwert zu erzeugen; und
einen zweiten Datensatz für eine anschließende Periode des Sensorsignals gleichzeitig mit der Verarbeitung des ersten Datensatzes sammelt.

**96.** Digitaler Durchflussmesser nach Anspruch 95, wobei die Periode, die dem ersten Datensatz entspricht, die Periode, die dem zweiten Datensatz entspricht, überlappt.

**97.** Digitaler Durchflussmesser nach Anspruch 1, wobei das Steuer- und Messsystem (105):

das Antriebssignal steuert, um eine Amplitude des Sensorsignals auf einem festen Sollwert zu halten;
den festen Sollwert verringert, wenn das Antriebssignal einen ersten Schwellepegel überschreitet; und
den festen Sollwert erhöht, wenn das Antriebssignal geringer ist als ein zweiter Schwellenpegel und der feste Sollwert geringer ist als ein maximaler zugelassener Wert für den Sollwert.

**98.** Digitaler Durchflussmesser nach Anspruch 97, wobei der erste Schwellenpegel 95 % oder weniger von einem maximalen zugelassenen Antriebssignal ist.

**99.** Digitaler Durchflussmesser nach Anspruch 1, wobei das Steuer- und Messsystem (105) eine Unsicherheitsanalyse an dem Messwert durchführt.

**100.** Digitaler Durchflussmesser nach Anspruch 99, der des Weiteren eine Verbindung mit einem Steuersystem aufweist, wobei das Steuer- und Messsystem (105) den Messwert und die Ergebnisse der Unsicherheitsanalyse zum Steuersystem überträgt.

**101.** Digitaler Durchflussmesser nach Anspruch 1, wobei das Steuer- und Messsystem (105) betreibbar ist, um:

Daten, die einem aktuellen Zyklus des Sensorsignals entsprechen, zu sammeln,
die Daten für den aktuellen Zyklus zu verarbeiten, um das Antriebssignal und den Messwert einer Eigenschaft von Material, das durch die Rohrleitung strömt, zu erzeugen,
das Antriebssignal zum Treiber (115, 46, 46a) zu liefern, und
Daten, die einem nachfolgenden Zyklus des Sensorsignals entsprechen, gleichzeitig mit der Verarbeitung der Daten für den aktuellen Zyklus zu sammeln.

**102.** Verfahren zum Erzeugen eines Messwerts einer Eigenschaft von Material, das durch eine Rohrleitung (120) strömt, wobei das Verfahren umfasst:

Erfassen einer Bewegung der Rohrleitung unter Verwendung eines Sensors (120, 48, 48a);
Erzeugen eines Messwerts einer Eigenschaft eines Materials, das durch die Rohrleitung strömt, auf der Basis der erfassten Bewegung;
Verwenden einer Digitalsignalverarbeitung, um ein Antriebssignal für einen Treiber (115, 46, 46a) zu erzeugen, um in der Rohrleitung auf der Basis der erfassten Bewegung der Rohrleitung eine Bewegung zu erzeugen bzw.

verleihen;
Einstellen einer Phase des Antriebssignals, um eine Zeitverzögerung zu kompensieren, die mit dem Sensor und mit Komponenten, die zwischen den Sensor und den Treiber geschaltet sind, assoziiert ist; und
Verleihen einer Bewegung an die Rohrleitung unter Verwendung des Antriebssignals.

103. Verfahren nach Anspruch 102, wobei:

das Erfassen der Bewegung der Rohrleitung (120) das Erfassen der Bewegung an zwei Stellen umfasst,
der Messwert auf der Basis der Bewegung an den zwei Stellen erzeugt wird, und
das Antriebssignal auf der Basis der an den zwei Stellen erfassten Bewegung erzeugt wird.

104. Verfahren nach Anspruch 103, das des Weiteren die Verwendung einer Digitalsignalverarbeitung umfasst, um ein zweites Antriebssignal zu erzeugen, um in der Rohrleitung (120) auf der Basis der erfassten Bewegung der Rohrleitung eine Bewegung zu verleihen, wobei das Verleihen der Bewegung an die Rohrleitung die Verwendung eines ersten Antriebssignals, um an einer ersten Stelle eine Bewegung zu verleihen, und die Verwendung des zweiten Antriebssignals, um an einer zweiten Stelle eine Bewegung zu verleihen, umfasst.

## Revendications

1. Débitmètre numérique (100) comprenant :

un conduit vibratile (120) ;
un dispositif de commande (115, 46, 46a) relié au conduit et utilisable pour transmettre un mouvement au conduit ;
un capteur (120, 48, 48a) relié au conduit et utilisable pour capter le mouvement du conduit ; et
un système de commande et de mesure (105) relié entre le dispositif de commande et le capteur, le système de contrôle et de mesure est utilisable pour:

recevoir (605) un signal de capteur provenant du capteur,
générer (630) un signal de commande basé sur le signal du capteur,
fournir le signal de commande au dispositif de commande, et générer (635) une mesure d'une propriété de la matière s'écoulant à travers le conduit en se basant sur le signal provenant du capteur ;
**caractérisé en ce que** le système de contrôle et de mesure génère le signal de commande à l'aide d'un traitement de signal numérique, et
dans lequel le système de contrôle et de mesure utilise un traitement numérique pour ajuster une phase du signal de commande pour compenser un retard associé au capteur et aux composants reliés entre le capteur et le dispositif de commande.

2. Débitmètre numérique selon la revendication 1, comprenant en outre un second capteur (120, 48b) relié au conduit (120) et utilisable pour capter le mouvement du conduit, le système de commande et de mesure (105) étant relié au second capteur pour :

recevoir (605) un second signal de capteur provenant du second capteur,
générer (630) le signal de commande basé sur le premier et le second signaux de capteur à l'aide d'un traitement de signal numérique, et
générer (635) la mesure de la propriété de la matière s'écoulant à travers le conduit sur la base du premier et du second signaux de capteur.

3. Débitmètre numérique selon la revendication 2, comprenant en outre un second dispositif de commande (115), dans lequel le système de commande et de mesure (105) génère différents signaux de commande pour les deux dispositifs de commande.

4. Débitmètre numérique selon la revendication 3, dans lequel le système de commande et de mesure (105) génère des signaux de commande ayant différentes fréquences.

5. Débitmètre numérique selon la revendication 4, dans lequel le système de commande et de mesure (105) génère des signaux de commande ayant différentes amplitudes.

**6.** Débitmètre numérique selon la revendication 1, comprenant en outre un circuit pour mesurer le courant délivré au dispositif de commande (115).

**7.** Débitmètre numérique selon la revendication 6, dans lequel le circuit comprend une résistance (520) montée en série avec le dispositif de commande (115) et un convertisseur analogique-numérique (530) monté en parallèle avec la résistance pour mesurer une tension à travers la résistance, pour convertir la tension mesurée en une valeur numérique, et pour délivrer la valeur numérique au système de commande et de mesure (105).

**8.** Débitmètre numérique selon la revendication 1, comprenant en outre un premier capteur de pression (540) relié pour mesurer une première pression à une entrée (545) du conduit (120) et un second capteur de pression (540) relié pour mesurer une seconde pression à une sortie (550) du conduit.

**9.** Débitmètre numérique selon la revendication 8, comprenant en outre des convertisseurs analogique-numérique reliés pour convertir des signaux produits par le premier capteur de pression (540) et le second capteur de pression (540) en valeurs numériques et pour délivrer les valeurs numériques au système de commande et de mesure (105).

**10.** Débitmètre numérique selon la revendication 8, comprenant en outre un premier capteur de température (125, 535) relié pour mesurer une première température à une entrée (545) du conduit (120) et un second capteur de température (125, 535) relié pour mesurer une seconde température à une sortie (550) du conduit.

**11.** Débitmètre numérique selon la revendication 2, dans lequel le système de commande et de mesure (105) génère la mesure de la propriété en :

estimant une fréquence du premier signal de capteur ;
calculant la différence de phase à l'aide du premier signal de capteur ; et
générant la mesure à l'aide de la différence de phase calculée.

**12.** Débitmètre numérique selon la revendication 11, dans lequel le système de commande et de mesure (105) compense les différences d'amplitude des signaux de capteur en ajustant l'amplitude d'un des signaux de capteur.

**13.** Débitmètre numérique selon la revendication 12, dans lequel le système de commande et de mesure (105) compense les différences d'amplitude des signaux de capteur en multipliant l'amplitude d'un des signaux de capteur par un rapport de l'amplitude de l'autre signal de capteur sur l'amplitude dudit signal de capteur.

**14.** Débitmètre numérique selon la revendication 1, dans lequel le signal de capteur est généralement périodique et le système de commande et de mesure (105) traite le signal de capteur par séries, où chaque série comprend des données pour un cycle complet du signal de capteur périodique.

**15.** Débitmètre numérique selon la revendication 14, dans lequel les séries consécutives comprennent des données pour les cycles avec recouvrement du signal de capteur périodique.

**16.** Débitmètre numérique selon la revendication 14, dans lequel le système de commande et de mesure (105) estime un point de fin d'un cycle à l'aide d'une fréquence d'un cycle précédent.

**17.** Débitmètre numérique selon la revendication 14, dans lequel le système de commande et de mesure (105) analyse des données pour un cycle afin de déterminer si le cycle mérite un traitement supplémentaire.

**18.** Débitmètre numérique selon la revendication 17, dans lequel le système de commande et de mesure (105) détermine qu'un cycle ne mérite pas un traitement supplémentaire lorsque des données pour le cycle ne se conforment pas au comportement escompté des données, où le comportement escompté est basé sur un ou plusieurs paramètres d'un cycle précédent.

**19.** Débitmètre numérique selon la revendication 18, dans lequel le système de commande et de mesure (105) détermine qu'un cycle ne mérite pas un traitement supplémentaire lorsqu'une fréquence pour le cycle diffère d'une fréquence pour le cycle précédent d'une quantité supérieure à un certain seuil.

**20.** Débitmètre numérique selon la revendication 19, dans lequel le système de commande et de mesure (105) détermine si la fréquence pour le cycle diffère de la fréquence pour le cycle précédent en comparant des valeurs à certains points du cycle à des valeurs qui pourraient se produire si la fréquence pour le cycle était égale à la fréquence pour le cycle précédent.

21. Débitmètre numérique selon la revendication 1, dans lequel le système de commande et de mesure (105) détermine une fréquence du signal de capteur en détectant des passages à zéro du signal de capteur et en comptant les échantillons entre les passages à zéro.

22. Débitmètre numérique selon la revendication 1, dans lequel le système de commande et de mesure (105) détermine une fréquence du signal de capteur à l'aide d'une technique de lissage de courbe itérative.

23. Débitmètre numérique selon la revendication 1, dans lequel le système de commande et de mesure (105) détermine une amplitude du signal de capteur à l'aide d'une analyse de Fourier et utilise l'amplitude déterminée lors de la génération du signal de commande.

24. Débitmètre numérique selon la revendication 11, dans lequel le système de commande et de mesure (105) détermine un décalage de phase pour chaque signal de capteur et détermine le déphasage en comparant les décalages de phase.

25. Débitmètre numérique selon la revendication 11, dans lequel le système de commande et de mesure (105) détermine le déphasage à l'aide d'une analyse de Fourier.

26. Débitmètre numérique selon la revendication 11, dans lequel le système de commande et de mesure (105) détermine une fréquence, une amplitude et un décalage de phase pour chaque signal de capteur, et met à l'échelle les décalages de phase relativement à une moyenne des fréquences des signaux de capteur.

27. Débitmètre numérique selon la revendication 11, dans lequel le système de commande et de mesure (105) calcule le déphasage à l'aide de plusieurs approches et sélectionne un résultat d'une des approches comme étant le déphasage calculé.

28. Débitmètre numérique selon la revendication 2, dans lequel le système de commande et de mesure (105) combine les signaux de capteur pour produire un signal combiné et pour générer le signal de commande en se basant sur le signal combiné.

29. Débitmètre numérique selon la revendication 28, dans lequel le système de commande et de mesure (105) génère le signal de commande en appliquant un gain au signal combiné.

30. Débitmètre numérique selon la revendication 29, dans lequel le système de commande et de mesure (105) génère le signal de commande en appliquant un gain important au signal combiné pour initier le mouvement du conduit (120) et en générant un signal périodique ayant une phase et une fréquence basées sur une phase et une fréquence d'un signal de capteur comme signal de commande après que le mouvement a été initié.

31. Débitmètre numérique selon la revendication 28, dans lequel le système de commande et de mesure (105) combine les signaux de capteur en sommant les signaux de capteur.

32. Débitmètre numérique selon la revendication 31, dans lequel le système de commande et de mesure (105) modifie une amplitude d'un des signaux de capteur à l'aide d'un rapport d'une amplitude de l'autre signal de capteur sur l'amplitude dudit signal de capteur avant de sommer les signaux de capteur.

33. Débitmètre numérique selon la revendication 1, dans lequel le système de commande et de mesure (105) initie le mouvement du conduit (120) en utilisant un premier mode de génération de signal pour générer le signal de commande et soutient le mouvement du conduit à l'aide d'un second mode de génération de signal pour générer le signal de commande.

34. Débitmètre numérique selon la revendication 33, dans lequel le premier mode de génération de signal comprend la synthèse d'un signal périodique ayant une propriété souhaitée et le second mode de génération de signal comprend l'utilisation d'une boucle d'asservissement incluant le signal de capteur.

35. Débitmètre numérique selon la revendication 34, dans lequel la propriété souhaitée comprend une fréquence initiale souhaitée de vibration du conduit.

36. Débitmètre numérique selon la revendication 33, dans lequel le premier mode de génération de signal comprend d'utiliser une boucle d'asservissement incluant le signal de capteur et le second mode de génération de signal comprend la synthèse d'un signal périodique ayant une propriété souhaitée.

37. Débitmètre numérique selon la revendication 36, dans lequel la propriété souhaitée comprend une fréquence et une phase correspondant à une fréquence et à une phase du signal de capteur.

38. Débitmètre numérique selon la revendication 1, dans lequel le système de commande et de mesure (105) génère un signal de commande périodique adaptable.

39. Débitmètre numérique selon la revendication 38, comprenant en outre des sources de courant continu positif et négatif reliées entre le système de commande et de mesure (105) et le dispositif de commande (115), dans lequel le système de commande et de mesure génère le signal de commande en activant et en coupant les sources de courant à des intervalles ayant une phase et une fréquence basées sur le signal de capteur.

40. Débitmètre numérique selon la revendication 38, dans lequel le système de commande et de mesure (105) génère le signal de commande en synthétisant une onde sinusoïdale ayant une propriété correspondant à une propriété du signal de capteur.

41. Débitmètre numérique selon la revendication 40, dans lequel le système de commande et de mesure (105) génère le signal de commande en synthétisant une onde sinusoïdale ayant une phase et une fréquence correspondant à une phase et une fréquence du signal de capteur.

42. Débitmètre numérique selon la revendication 1, dans lequel le système de commande et de mesure (105) génère numériquement un gain à utiliser pour générer le signal de commande sur la base d'une ou plusieurs propriétés du signal de capteur.

43. Débitmètre numérique selon la revendication 42, dans lequel le système de commande et de mesure (105) génère numériquement le gain sur la base de l'amplitude du signal de capteur.

44. Débitmètre numérique selon la revendication 42, dans lequel le système de commande et de mesure (105) implémente numériquement un algorithme de commande PI pour réguler l'amplitude de l'oscillation du conduit.

45. Débitmètre numérique selon la revendication 1, dans lequel le dispositif de commande (115) est utilisable pour communiquer un mouvement d'oscillation au conduit (120).

46. Débitmètre numérique selon la revendication 45, dans lequel le système de commande et de mesure (105) génère numériquement le signal de commande sur la base du signal de capteur de manière à maintenir une amplitude d'oscillation du conduit à une valeur contrôlée par l'utilisateur.

47. Débitmètre numérique selon la revendication 46, dans lequel le système de commande et de mesure (105) génère un signal de commande négatif qui entraîne que le dispositif de commande (115) résiste au mouvement du conduit lorsque l'amplitude d'oscillation dépasse la valeur contrôlée par l'utilisateur et un signal de commande positif qui entraîne que le dispositif de commande communique un mouvement au conduit lorsque l'amplitude d'oscillation est inférieure à la valeur contrôlée par l'utilisateur.

48. Débitmètre numérique selon la revendication 1, dans lequel le système de commande et de mesure (105) comprend un contrôleur pour générer un signal de gain sur la base du signal de capteur et un convertisseur analogique-numérique multiplicateur relié au contrôleur pour recevoir le signal de gain et pour générer le signal de commande sur la base du signal de gain.

49. Débitmètre numérique selon la revendication 1, comprenant en outre un second capteur (120, 48b) relié au conduit (120) et utilisable pour capter le mouvement du conduit, dans lequel le système de commande et de mesure (105) comprend :

un contrôleur (505) pour générer la mesure,

un premier convertisseur analogique-numérique (530) relié entre le premier capteur (120, 48a) et le contrôleur pour délivrer un premier signal de capteur au contrôleur, et

un second convertisseur analogique-numérique (530) relié entre le second capteur et le contrôleur pour délivrer un second signal de capteur numérique au contrôleur.

**50.** Débitmètre numérique selon la revendication 49, dans lequel le contrôleur (505) combine les signaux de capteur numérique pour produire un signal combiné et générer un signal de gain sur la base du premier et du second signaux de capteur numériques, et le système de commande et de mesure comprend en outre un convertisseur analogique-numérique multiplicateur relié pour recevoir le signal combiné et le signal de gain provenant du contrôleur pour générer le signal de commande sous la forme d'un produit du signal combiné et du signal de gain.

**51.** Débitmètre numérique selon la revendication 1, dans lequel le système de commande et de mesure (105) applique sélectivement un gain négatif au signal de capteur pour réduire le mouvement du conduit.

**52.** Débitmètre numérique selon la revendication 1, dans lequel le système de commande et de mesure (105) compense le décalage de l'origine dans le signal de capteur.

**53.** Débitmètre numérique selon la revendication 52, dans lequel

le décalage de l'origine comprend une composante attribuable à une variation du gain et une composante attribuable à la non linéarité du gain, et

le système de commande et de mesure (105) compense de manière séparée les deux composantes.

**54.** Débitmètre numérique selon la revendication 52, dans lequel le système de commande et de mesure (105) compense le décalage de l'origine en générant un ou plusieurs facteurs de correction et en modifiant le signal de capteur à l'aide des facteurs de correction.

**55.** Débitmètre numérique selon la revendication 2, dans lequel le système de commande et de mesure (105) :

calcule un décalage de phase pour le premier signal de capteur ; et

calcule un décalage de phase pour le second signal de capteur.

**56.** Débitmètre numérique selon la revendication 55, dans lequel un décalage de phase est défini comme une différence entre un point de passage à zéro d'un signal de capteur et un point de phase nulle pour une composante du signal de capteur correspondant à une fréquence fondamentale du signal de capteur.

**57.** Débitmètre numérique selon la revendication 56, dans lequel le système de commande et de mesure (105) combine les décalages de phase calculés pour produire un déphasage.

**58.** Débitmètre numérique selon la revendication 2, dans lequel le système de commande et de mesure (105) génère la mesure de la propriété en :

estimant une fréquence du premier signal de capteur ;

estimant une fréquence du second signal de capteur, la fréquence du second signal de capteur étant différente de la fréquence du premier signal de capteur ; et

calculant un déphasage entre les signaux de capteur à l'aide des fréquences estimées.

**59.** Débitmètre numérique selon la revendication 1, dans lequel le capteur (120, 48) comprend un capteur de vitesse et le système de commande et de mesure (105) :

estime une fréquence, une amplitude et une phase du signal de capteur ; et

corrige la fréquence, l'amplitude et la phase estimées afin de prendre en compte les différences de performances entre un capteur de vitesse et un capteur de position absolue.

**60.** Débitmètre numérique selon la revendication 1, dans lequel le système de commande et de mesure (105) :

estime un premier paramètre du signal de capteur ;

détermine une vitesse de changement d'un second paramètre ; et

corrige le premier paramètre estimé sur la base de la vitesse de changement déterminée.

**61.** Débitmètre numérique selon la revendication 60, dans lequel le premier paramètre comprend une fréquence du signal de capteur.

**62.** Débitmètre numérique selon la revendication 61, dans lequel le second paramètre comprend une fréquence d'oscillation du conduit (120).

**63.** Débitmètre numérique selon la revendication 61, dans lequel le second paramètre comprend une amplitude d'oscillation du conduit (120).

**64.** Débitmètre numérique selon la revendication 60, dans lequel le premier paramètre comprend une amplitude du signal de capteur.

**65.** Débitmètre numérique selon la revendication 63, dans lequel le second paramètre comprend une fréquence d'oscillation du conduit (120).

**66.** Débitmètre numérique selon la revendication 64, dans lequel le second paramètre comprend une amplitude d'oscillation du conduit (120).

**67.** Débitmètre numérique selon la revendication 60, dans lequel le premier paramètre comprend une phase du signal de capteur.

**68.** Débitmètre numérique selon la revendication 67, dans lequel le second paramètre comprend une fréquence d'oscillation du conduit (120).

**69.** Débitmètre numérique selon la revendication 67, dans lequel le second paramètre comprend une amplitude d'oscillation du conduit (120).

**70.** Débitmètre numérique selon la revendication 2, dans lequel le système de commande et de mesure (105) :

estime un premier paramètre du premier signal de capteur ;
détermine une vitesse de changement d'un second paramètre du premier signal de capteur ;
corrige le premier paramètre estimé du premier signal de capteur sur la base de la vitesse de changement déterminée du second paramètre du premier signal de capteur ;
estime un premier paramètre du second signal de capteur ;
détermine une vitesse de changement d'un second paramètre du second signal de capteur ; et
corrige le premier paramètre estimé du second signal de capteur sur la base de la vitesse de changement déterminée du second paramètre du second signal de capteur ;
dans lequel le système de commande et de mesure procède à une estimation, une détermination et une correction pour chaque signal de capteur indépendamment de l'estimation, de la détermination et de la correction de l'autre signal de capteur.

**71.** Débitmètre numérique selon la revendication 70, dans lequel le premier paramètre comprend une fréquence du signal de capteur.

**72.** Débitmètre numérique selon la revendication 71, dans lequel le second paramètre comprend une fréquence d'oscillation du conduit (120).

**73.** Débitmètre numérique selon la revendication 71, dans lequel le second paramètre comprend une amplitude d'oscillation du conduit (120).

**74.** Débitmètre numérique selon la revendication 70, dans lequel le premier paramètre comprend une amplitude du signal de capteur.

**75.** Débitmètre numérique selon la revendication 73, dans lequel le second paramètre comprend une fréquence d'oscillation du conduit (120).

**76.** Débitmètre numérique selon la revendication 74, dans lequel le second paramètre comprend une amplitude d'oscillation du conduit (120).

**77.** Débitmètre numérique selon la revendication 70, dans lequel le premier paramètre comprend une phase du signal de capteur.

**78.** Débitmètre numérique selon la revendication 77, dans lequel le second paramètre comprend une fréquence d'oscillation du conduit (120).

**79.** Débitmètre numérique selon la revendication 77, dans lequel le second paramètre comprend une amplitude d'oscillation du conduit (120).

**80.** Débitmètre numérique selon la revendication 1, dans lequel le débitmètre numérique comprend un débitmètre massique et la propriété de la matière s'écoulant à travers le conduit comprend un débit massique.

**81.** Débitmètre numérique selon la revendication 80, dans lequel le système de commande et de mesure (105) prend en compte les effets de l'aération dans le conduit en :

déterminant un débit massique initial,
déterminant une densité apparente de la matière s'écoulant à travers le conduit (120),
comparant la densité apparente à une densité connue de la matière afin de déterminer une différence de densité, et
ajustant le débit massique initial sur la base de la différence de densité afin de produire un débit massique ajusté.

**82.** Débitmètre numérique selon la revendication 81, dans lequel le système de commande et de mesure (105) prend en compte les effets de l'aération dans le conduit en ajustant le débit massique ajusté afin de prendre en compte des effets de l'amortissement.

**83.** Débitmètre numérique selon la revendication 81, comprenant en outre un second capteur (120) relié au conduit (120) et utilisable pour capter le mouvement du conduit, dans lequel le système de commande et de mesure (105) est relié au second capteur pour :

recevoir un second signal de capteur du second capteur, et
tenir compte des effets de l'aération dans le conduit en ajustant le débit massique ajusté sur la base des différences entre les amplitudes du premier et du second signaux de capteur.

**84.** Débitmètre numérique selon la revendication 1, dans lequel le débitmètre numérique comprend un densitomètre et la propriété de la matière s'écoulant à travers le conduit (120) comprend une densité de la matière.

**85.** Débitmètre numérique selon la revendication 1, dans lequel le signal de capteur comprend un signal analogique et le système de commande et de mesure (105) comprend un convertisseur analogique-numérique pour convertir le signal analogique en un signal numérique.

**86.** Débitmètre numérique selon la revendication 1, dans lequel le conduit vibratile (120) comprend deux boucles planes (18, 20).

**87.** Débitmètre numérique selon la revendication 86, dans lequel le capteur (120, 48, 48a) et le dispositif de commande sont reliés entre les boucles (18, 20).

**88.** Débitmètre numérique selon la revendication 87, comprenant en outre un second capteur (120, 48b) et un second dispositif de commande, dans lequel le premier dispositif de commande (115, 46a) et le premier capteur (120, 48a) sont reliés entre une première extrémité des boucles, et le second dispositif de commande (115, 46b) et le second capteur (120, 48b) sont reliés entre une seconde extrémité des boucles, la seconde extrémité étant située à l'opposé de la première extrémité.

**89.** Débitmètre numérique selon la revendication 1, comprenant en outre un circuit de puissance (4610) pour recevoir de la puissance sur uniquement une seule paire de conducteurs (4605), le circuit de puissance délivrant de la puissance au système de commande et de mesure (4615) et au dispositif de commande (4620), dans lequel le système de commande et de mesure est utilisable pour transmettre la mesure de la propriété de la matière s'écoulant à travers le conduit sur l'unique paire de conducteurs.

**90.** Débitmètre numérique selon la revendication 89, dans lequel le circuit de puissance (4610) comprend un circuit de sortie constante (4630) qui délivre de la puissance au système de commande et de mesure (4615) et au condensateur d'attaque (4635) qui est chargé par la puissance en excès provenant des deux conducteurs (4605).

**91.** Débitmètre numérique selon la revendication 90, dans lequel le système de commande et de mesure (4615) est utilisable pour décharger le condensateur d'attaque (4635) pour alimenter le dispositif de commande (4620).

**92.** Débitmètre numérique selon la revendication 91, dans lequel le système de commande et de mesure (4615) surveille un niveau de charge du condensateur d'attaque (4635) et décharge le condensateur d'attaque après que le niveau de charge du condensateur a atteint un niveau seuil.

**93.** Débitmètre numérique selon la revendication 92, dans lequel le système de commande et de mesure (4615) décharge le condensateur d'attaque (4635) de manière périodique.

**94.** Débitmètre numérique selon la revendication 89, dans lequel le système de commande et de mesure (4615) procède à des communications bidirectionnelles sur la paire de conducteurs (4605).

**95.** Débitmètre numérique selon la revendication 1, dans lequel le signal de capteur comprend un signal périodique et dans lequel le système de commande et de mesure (105) :

collecte un premier jeu de données sur une période du signal périodique ;
traite le premier jeu de données pour générer le signal de commande et la mesure ; et
collecte un second jeu de données sur une période suivante du signal de capteur simultanément au traitement du premier jeu de données.

**96.** Débitmètre numérique selon la revendication 95, dans lequel la période correspondant au premier jeu de données chevauche la période correspondant au second jeu de données.

**97.** Débitmètre numérique selon la revendication 1, dans lequel le système de commande et de mesure (105) :

contrôle le signal de commande pour maintenir une amplitude du signal de capteur à une valeur de consigne fixée ;
réduit la valeur de consigne fixée lorsque le signal de commande dépasse un premier niveau seuil ; et
augmente la valeur de consigne fixée lorsque le signal de commande est inférieur à un second niveau seuil et lorsque la valeur de consigne fixée est inférieure à une valeur autorisée maximale pour la valeur de consigne.

**98.** Débitmètre numérique selon la revendication 97, dans lequel le premier niveau seuil correspond à 95 %, ou moins, d'un signal de commande autorisé maximum.

**99.** Débitmètre numérique selon la revendication 1, dans lequel le système de commande et de mesure (105) procède à une analyse d'incertitude sur la mesure.

**100.** Débitmètre numérique selon la revendication 99, comprenant en outre un raccordement à un système de commande, dans lequel le système de commande et de mesure (105) transmet la mesure et les résultats de l'analyse d'incertitude au système de commande.

**101.** Débitmètre numérique selon la revendication 1, dans lequel le système de commande et de mesure (105) est utilisable pour :

collecter des données correspondant à un cycle courant du signal de capteur,
traiter les données du cycle courant afin de générer le signal de commande et là mesure d'une propriété de la matière s'écoulant à travers le conduit,
délivrer le signal de commande au dispositif de commande (115, 46, 46a), et
collecter des données correspondant à un cycle suivant du signal de capteur, simultanément au traitement des données correspondant au cycle courant.

**102.** Procédé pour générer une mesure de propriété de la matière s'écoulant à travers un conduit (120), le procédé comprenant les étapes consistant à :

capter un mouvement du conduit à l'aide d'un capteur (120, 48, 48a) ;

générer une mesure d'une propriété d'une matière s'écoulant à travers le conduit sur la base du mouvement capté ;

utiliser un traitement de signal numérique pour générer un signal de commande pour un dispositif de commande (115, 46, 46a) afin de communiquer un mouvement au conduit sur la base du mouvement capté du conduit ;

ajuster une phase du signal de commande pour compenser un retard associé au capteur et aux composants reliés entre le capteur et le dispositif de commande ; et

communiquer un mouvement au conduit à l'aide du signal de commande.

103. Procédé selon la revendication 102, dans lequel :

capter le mouvement du conduit (120) comprend de capter le mouvement à deux emplacements,

la mesure est générée sur la base du mouvement aux deux emplacements, et

le signal de commande est généré sur la base du mouvement capté aux deux emplacements.

104. Procédé selon la revendication 103, comprenant en outre l'utilisation d'un traitement de signal numérique pour générer un second signal de commande pour communiquer un mouvement dans le conduit (120) sur la base du mouvement capté du conduit, où la communication du mouvement au conduit comprend l'utilisation du premier signal de commande pour communiquer un mouvement à un premier emplacement et d'utiliser le second signal de commande pour communiquer un mouvement à un second emplacement.

Massflow
Measurement                    100

                               105

Digital
Controller

                    125

Temp.
Sensor

Driver      - - -    Flow Tube    - - -    Sensor

   115              120                    110

# FIG. 1

FIG.2A

EP 1 484 585 B1

FIG. 2B

EP 1 484 585 B1

CORIOLIS MODE

FLOW

DEFLECTION

A — B

C — D

P

FIG. 3A

DRIVE MODE

56

P

56

P

A C B D

FIG. 3B

COMMON MODE

A — B

C — D

P

P

FIG. 3C

FIG. 4

FIG. 5

FIG. 6

FIG. 7A

FIG. 7B

FIG.8A

FIG.8B

905 — Initialize Variables

910 — Estimate end_point

915 — Determine # of Points for Curve Fitting

900

920 — iteration_count = 0

925 — iteration_count = iteration_count + 1

930 — Select step length

935 — ep_int = int end_point + 0.5)

940 — Fill z Array

945 — Smooth z[k-1], z[k], z[k+1]

965 — end_point = x*

950 — Fit Quadratic

955 — Calculate z* & x*

970 — iteration_count < 3    Y

960 — k-1 < x* < k+1    Y    N

FIG.9    N

975 — Calculate Frequency

1000

1005 — Find $f_1$, $f_2$, $m$, & $m2$ for $d_1$, $d_2$

1010 — Determine $f_{2m1}$, $f_{1m2}$

1015 — Determine Start and End of $d_{1m2}$, $d_{2m1}$

1020 — Determine Phase, Amplitude for $d_1$ and $d_{2m1}$, and Phase Difference

1025 — Repeat for $d_2$, $d_{1m2}$

1030 — Generate Averages of Amplitude & Phase Differences

# FIG.10

STARTUP FOR 2" WET EMPTY FLOWTUBE WITHOUT SQUARE WAVE KICK-START

FIG. 11A

DRIVE SIGNAL 1

TIME(S)

FIG. 11B

DRIVE SIGNAL 2

TIME(S)

FIG. 11C

SENSOR VOLTAGE 1 (V)

TIME(S)

FIG. 11D

SENSOR VOLTAGE 2 (V)

TIME(S)

EP 1 484 585 B1

STARTUP FOR 2" WET EMPTY FLOWTUBE WITH SQUARE WAVE KICK-START

FIG. 12A

DRIVE SIGNAL 1

FIG. 12B

DRIVE SIGNAL 2

FIG. 12C

SENSOR VOLTAGE 1 (V)

FIG. 12D

SENSOR VOLTAGE 2 (V)

EP 1 484 585 B1

STARTUP FOR 1" EMPTY FLOWTUBE WITH SQUARE WAVE-KICK START

FIG. 13A

FIG. 13B

FIG. 13C

FIG. 13D

EP 1 484 585 B1

1405 → Estimate Nominal
Operating Frequency

1400

1410 → Synthesize
Nominal Signals

1415 → Multiply by Original
Sensor Signals

1420 → Eliminate
High f Components

1425 → Combine Signals
to Produce u[k]

1430 → Calculate Frequency
Deviation

1435 → Add to
Nominal Frequency

1440 → Determine
Amplitude

FIG.14

1445 → Determine
Phase Difference

1505

→ Mass Flow
Measurement

1500

Digital Controller

gain

gain

1520

D/A

1510

A/D    A/D

1520

D/A        Multiplying
D/A

Multiplying
D/A

1520    1515

48        46

Conduit

1525

48        46

FIG. 15A

1505

$a_0$

$a(t)$

1550

1560

amp        summer        P/I Control
Block

1555

$K_0(t)$

Sensor
Signals

FIG. 15B

EP 1 484 585 B1

```
                          ┌──────────────┐
                          │   Receive    │
                          │ Sensor Data  │ ⟍ 1605
                          └──────────────┘
   1610                           │                          ⟍ 1600
     ↓            1615            │                      ↙
  ┌──────┴──────────────────────┴──────────────────────┴── 1620
  ↓                              ↓                         ↓
```

1625

┌──────────────────────┐     ┌──────────────────────┐     ┌──────────────────────┐
│ Generate Amplitude,  │     │ Generate Drive Signal │     │ Determine Amplitude   │ 1640
│ Frequency and Phase  │     │   as Difference       │     │        a(t)           │
└──────────────────────┘     └──────────────────────┘     └──────────────────────┘
            │                          │  1635                      │
            ↓                          │                            ↓
1630                                   │                  ┌──────────────────────┐ 1645
┌──────────────────────┐              │                  │   $e(t) = a(t) - a_0$  │
│   Calculate Mass     │              │                  └──────────────────────┘
│     Flow rate        │              │                            │
└──────────────────────┘              │                            ↓
                                       │                  ┌──────────────────────┐ 1650
                                       │                  │    PI Calculation    │
                                       │                  │       of Gain        │
                                       │                  └──────────────────────┘
                                       │                            │
1655                                   ↓                            ↓
                            ┌──────────────────────┐
                            │ Multiply Drive Signal │
                            │       by Gain         │
                            └──────────────────────┘

FIG.16

FIG.17

FIG.18

FIG. 19A

FIG. 19B

FIG. 19C

FIG. 19D

FIG. 20B

mean = -0.0109679, std = 0.00150263

Phase based on -ve zero crossings

FIG. 20A

mean = 0.00627865, std = 0.00144671

Phase based on +ve zero crossings

FIG. 20C

mean = -0.00234461, std = 0.00875262

Phase based on interleaved cycles

Phase zero drift without offset and gain correction

FIG. 21A

FIG. 21B

Every Cycle: Calculate $I_{1PS}$, $I_{1NS}$, $I_{1PC}$, $I_{1NC}$, $I_{2PS}$, $I_{2NS}$, $sum_{1S}$, $Ratio_{1S}$, $sum_{1C}$, $sum_{2S}$ — 2205

$\swarrow$ 2200

Every 10,000 Cycles: Check Slope of $A_1$ — 2210

**FIG. 22**

Constant $A_1$? — 2215

Y

N

Generate Average Values — 2220

2225 — Estimate Zero Offset & Gain Mismatch

2230 — Calculate k, amp_factor

2235 — Estimate Amplitudes

2240 — Improve Estimate

2245 — Adjust Raw Data

FIG. 23A

FIG. 23B

FIG. 23C

FIG. 24A

FIG. 24B

FIG.25

2605

Produce Frequency
Estimate

2600

2610

Estimate Amplitude
& Phase

2615

Calculate Phase
Difference

2620

Determine Amplitude
Rate of Change

2625

Correct
Frequency

2630

Compensate
Phase

FIG. 26

u:2.85751e-01 s:2.39168c-02

SV1 AMPLITUDE (V)

TIME(S)

FIG. 27A

u:8.14105e+01 s:5.73609e-02

SV1 FREQUENCY (Hz)

TIME(S)

FIG. 27B

EP 1 484 585 B1

u:3.08123e-13 s:5.73600e-02

FIG. 28A

u:1.57354e-04 s:5.61601e-02

FIG. 28B

SV1 RAW
FREQUENCY
(Hz)

FIG. 29A

TIME(S)

u:8.14103e+01 s:1.29455e-02

FREQUENCY
CORRECTED
FOR AMP. VAR.
(Hz)

TIME(S)

FIG. 29B

EP 1 484 585 B1

u:8.14105e+01 s:5.70865e-02

AVERAGE RAW FREQUENCY (Hz)

81.6

81.5

81.4

81.3

10    20    30    40    50    60

TIME(S)

FIG. 30A

u:8.14103e+01 s:1.10440e-02

AV. FREQUENCY CORRECTED FOR AMP. VAR. (Hz)

81.44
81.43
81.42
81.41
81.4
81.39
81.38
81.37

10    20    30    40    50    60

TIME(S)

FIG. 30B

u:8.53993E+01 s:2.57161e-02

AVERAGE RAW
FREQUENCY (Hz)

TIME(S)

FIG. 31A

u:8.53993e+01 s:6.41500e-03

AV. FREQUENCY
FOR AMP. VAR.
(Hz)

TIME(S)

FIG. 31B

EP 1 484 585 B1

u:8.19240e+01 s:4.00537e-02

RAW AVERAGE
FREQUENCY (Hz)

TIME(S)

FIG. 32A

u:8.19230e+01 s:2.69478e-02

CORRECTED
FREQUENCY
(Hz)

TIME(S)

FIG. 32B

u:9.52729e-04 s:7.18147e-03

SV1 RAW
PHASE (DEGREES)

FIG. 33A

TIME(S)

x10-3                    u:1.23765e-06 s:2.85542e-03

CORRECTION
FOR AMP. VAR.
(DEGREES)

FIG. 33B

TIME(S)

u:9.51491e-04 s:4.41863e-03

CORRECTED
PHASE (DEGREES)

FIG. 33C

TIME(S)

u:4.36399e-01 s:2.04405e-01

RAW PHASE
DIFFERENCE
(DEGREES)

FIG. 34A

TIME(S)

u:4.36354e-01 s:1.61762e-01

PHASE DIFF.
CORRECTED FOR
AMP. VAR.
(DEGREES)

FIG. 34B

TIME(S)

u:-2.18046e-18 s:4.41863e-03

FIG. 35A

u:1.39746e-06 s:1.13445e-02

FIG. 35B

u:9.50094e-04 s:7.31942e-03

FIG. 35C

EP 1 484 585 B1

u:4.32002e-01 s:2.22420e-02

FIG. 35D

u:4.31999e-01 s:2.40919e-03

FIG. 35E

EP 1 484 585 B1

No flow, tubes full, no pump noise

FIG. 36A

| | Raw SD | Ratio |
|---|---|---|
| Fourier | : 4.843e-03 | 11.748 |
| Time-based | : 2.800e-03 | 6.792 |
| Corr. Fourier | : 4.122e-04 | 1.000 |

EP 1 484 585 B1

No flow, tubes full, pumps on

|            | Raw SD      | Ratio  |
|------------|-------------|--------|
| Fourier    | : 1.677e-02 | 14.520 |
| Time-based | : 9.853e-03 | 8.529  |
| Corr. Fourier | : 1.155e-03 | 1.000 |

FIG. 36B

EP 1 484 585 B1

Empty, wet tubes

FIG. 36C

EP 1 484 585 B1

FIG. 36D

High flow rate

FIG. 36E

High flow, amplitude of oscillation 0.03V

|  | Raw SD | Ratio |
|---|---|---|
| Fourier | : 7.348e-01 | 13.005 |
| Time-based | : 3.935e-01 | 6.965 |
| Corr. Fourier | : 5.650e-02 | 1.000 |

FIG. 36F

EP 1 484 585 B1

FIG. 36G

FIG. 36H

FIG. 36I

FIG. 36J

FIG. 36K

High flow – empty transition

FIG. 36L

| | Raw SD | Ratio |
|---|---|---|
| Fourier | : 5.841e-01 | 1.053 |
| Time-based | : 5.655e-01 | 1.020 |
| Corr. Fourier | : 5.546e-01 | 1.000 |

EP 1 484 585 B1

FIG. 37A

FIG. 37B

FIG. 37C

FIG. 37D

FIG. 37E

mean = 81.9542, std = 0.0173229

FIG. 38A

Mean value = 0.00142862, std = 0.00522801

FIG. 38B

Mean value = 0.00304097, std = 0.341224

FIG. 38C

Mean value = 0.00123626, std = 0.0117307

FIG. 38D

Mean value = 0.0169594, std = 0.0234245

FIG. 38E

Mean value = 0.144992, std = 0.00420759

FIG. 38F

Mean value = 0.663722, std = 0.00926315

FIG. 38G

Mean value = 2.89224, std = 0.123418

FIG. 38H

mean = 81.9535, std = 0.00533983

FIG. 39A

Mean value = 0.00142935, std = 0.000659252

FIG. 39B

Mean value = 0.0040215, std = 0.0109707

FIG. 39C

Mean value = 0.00113804, std = 0.000601559

FIG. 39D

Mean value = 0.0167976, std = 0.00363328

FIG. 39E

Mean value = 0.144992, std = 0.00108624

FIG. 39F

Mean value = 0.663739, std = 0.00182757

FIG. 39G

Mean value = 2.89254, std = 0.00922299

FIG. 39H

Raw Phase error

Δ = 3.0 kg/s
☆ = 3.5 kg/s
◇ = 3.8 kg/s
⬡ = 4.0 kg/s

+ = 1.9 kg/s
◇ = 2.0 kg/s
△ = 2.1 kg/s
▽ = 2.5 kg/s

× = 1.5 kg/s
∗ = 1.6 kg/s
□ = 1.7 kg/s
○ = 1.8 kg/s

At high flows, max. density drop
is set by available air pressure
(5 bar), NOT by flowtube stall.

Stall point of Foxboro's
analogue transmitter

Drop in apparent Density (%)

Phase error (degrees)

FIG. 40A

128

Percentage mass flow error

FIG. 40B

EP 1 484 585 B1

Residual phase error after correction for bubble effect

FIG. 40C

Residual pecentage mass flow error after correction for bubble effect

FIG. 40D

EP 1 484 585 B1

Correction for Damping = K * damping$^2$ * true phase / freq$^2$

FIG. 40E

EP 1 484 585 B1

FIG. 40F

Correction for Sensor Balance

FIG. 40G

EP 1 484 585 B1

FIG. 40H

FIG.41

FIG. 42

Set point change in response to increased damping

FIG. 43A

FIG. 43B

FIG. 43C

FIG. 44

EP 1 484 585 B1

FIG. 45

FIG. 46

**REFERENCES CITED IN THE DESCRIPTION**

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- US 4934196 A

- US 5570300 A

**Non-patent literature cited in the description**

- **Press et al.** Numerical Recipes in C,. Cambridge University Press, 1995, 650-655
- **Denys et al.** Measurement of Voltage Phase for the French Future Defence Plan Against Losses of Synchronism. *IEEE Transactions on Power Delivery,* 1992, vol. 7 (1), 62-69

- **Begovic et al.** Frequency Tracking in Power Networks in the Presence of Harmonics. *IEEE Transactions on Power Delivery,* 1993, vol. 8 (2), 480-486
- **S.J. Kline ; F.A. McClintock.** Describing Uncertainties in Single Sample Experiments. *Mech. Eng.,* 1953, vol. 75, 3-8